(19) Europäisches Patentamt
European Patent Office
Office européen des brevets

(11) **EP 2 903 281 A1**

(12) **EUROPEAN PATENT APPLICATION**
published in accordance with Art. 153(4) EPC

(43) Date of publication:
**05.08.2015 Bulletin 2015/32**

(21) Application number: **13841238.2**

(22) Date of filing: **20.09.2013**

(51) Int Cl.:
**H04N 19/50** (2014.01)

(86) International application number:
**PCT/JP2013/075445**

(87) International publication number:
**WO 2014/050732 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 JP 2012216648**

(71) Applicant: **Sony Corporation**
**Tokyo 108-0075 (JP)**

(72) Inventor: **SATO Kazushi**
**Tokyo 108-0075 (JP)**

(74) Representative: **Horner, David Richard**
**D Young & Co LLP**
**120 Holborn**
**London EC1N 2DY (GB)**

(54) **ENCODING DEVICE, ENCODING METHOD, DECODING DEVICE, AND DECODING METHOD**

(57) The present technique relates to a coding apparatus, a coding method, a decoding apparatus, and a decoding method in which information to control filter processing of an image including a hierarchical structure can be shared.

An enhancement coding unit performs adaptive offset filter processing with respect to a decoded image in an enhancement layer based on control information which is information to control the adaptive offset filter processing and which is used in coding of a base image. The enhancement coding unit codes an enhancement image and generates coded data by using, as a reference image, the decoded image in the enhancement layer on which image the adaptive offset filter processing is performed. A transmission unit transmits the coded data. The present technique can be applied, for example, to a coding apparatus.

FIG. 7

**Description**

TECHNICAL FIELD

The present technique relates to a coding apparatus, a coding method, a decoding apparatus, and a decoding method. Specifically, the present technique relates to a coding apparatus, a coding method, a decoding apparatus, and a decoding method in which information to control filter processing of an image including a hierarchical structure can be shared.

BACKGROUND ART

Recently, an apparatus compliant with a system such as moving picture experts group phase (MPEG) is becoming widely used both in distribution of information from a broadcasting station or the like and reception of information in a standard home. The apparatus treats image information as digital and performs compression by orthogonal transform, such as discrete cosine transform, and motion compensation by using unique redundancy of the image information in order to transmit and accumulate information efficiently.

Specifically, an MPEG2 (ISO/IEC 13818-2) system is defined as a general image-coding system and is a standard which covers both of an interlace-scanned image and a progressive-scanned image and also covers a standard resolution image and a high definition image. Currently, the MPEG2 system is widely used in various applications both for a professional and a consumer. By using the MPEG2 system, for example, when a code quantity (bit rate) of four to eight Mbps is assigned with respect to an interlace-scanned image of a standard resolution having $720 \times 480$ pixels or when a code quantity (bit rate) of 18 to 22 MBps is assigned with respect to an interlace-scanned image of high resolution having $1920 \times 1088$ pixels, a high compression ratio and high image quality can be realized.

An obj ect of the MPEG2 has been mainly high image quality coding which conforms with broadcasting but has not corresponded to a coding system with a code quantity (bit rate) smaller than that of MPEG1, that is, with a higher compression ratio. By the spread of a mobile terminal, it is considered that a need for such a coding system is increased in the future. Accordingly, standardization of an MPEG4 coding system has been performed. With respect to the image coding system of the MPEG4, a standard is approved to be an international standard as ISO/IEC 14496-2 in December, 1998.

In addition, recently, standardization of a standard called H.26L (ITU-T Q6/16 VCEG) is in progress originally for image coding for a video conference. It has been known that higher coding efficiency can be realized in the H.26L although a great amount of operation is required in coding and decoding compared to a conventional coding system such as the MPEG2 or the MPEG4.

Also, currently, as a part of action for the MPEG4, standardization to introduce a function not supported by the H.26L with the H.26L as a base and to realize higher coding efficiency has been performed as joint model of enhanced-compression video coding. The standardization has become an international standard called H.264 and MPEG-4 Part 10 (advanced video coding (AVC)) in March, 2003.

Moreover, as an extension, standardization of fidelity range extension (FRExt) including a coding tool necessary for institutional use such as RGB, YUV422, or YUV444, and $8 \times 8$ DCT and a quantization matrix which are prescribed in the MPEG-2 is completed in February, 2005. Accordingly, an AVC system has become a coding system capable of finely expressing a film noise included in a movie and has come to be used in various applications such as a Blu-ray (registered trademark) Disc (BD).

However, lately, a need for higher compression coding such as a need for compression of an image having around $4000 \times 2000$ pixels which are four times of pixels of a high-vision image or a need for distribution of a high-vision image in an environment having limited transmission capacity such as in the Internet has been increased. Thus, consideration to improve coding efficiency is continuously performed in a video coding expert group (VCEG) under the umbrella of ITU-T.

Also, currently, in order to further improve coding efficiency from that of the AVC, standardization of a coding system called high efficiency video coding (HEVC) is in progress by a Joint Collaboration Team-Video Coding (JCTVC) which is a joint standardization group of the ITU-T and ISO/IEC. As a draft, Non-Patent Document 1 has been published as of August, 2012.

Incidentally, an image coding system such as the MPEG-2 or AVC includes a scalability function to hierarchize and code an image. According to the scalability function, it is possible to transmit coded data corresponding to processing capacity of a decoding side without performing transcoding processing.

More specifically, it is possible to transmit only a coded stream of an image in a base layer, which is a hierarchy to be a base, to a terminal having low processing capacity such as a mobile phone. On the other hand, it is possible to transmit a coded stream of an image in the base layer and that of an image in an enhancement layer, which is a hierarchy other than the base layer, to a terminal having high processing capacity such as a television receiver or a personal computer.

A scalability function is also included in an HEVC system. As described in Non-Patent Document 1, in the HEVC system, a video parameter set (VPS) including a parameter related to a scalability function is prescribed in addition to a sequence parameter set (SPS) and a picture parameter set (PPS).

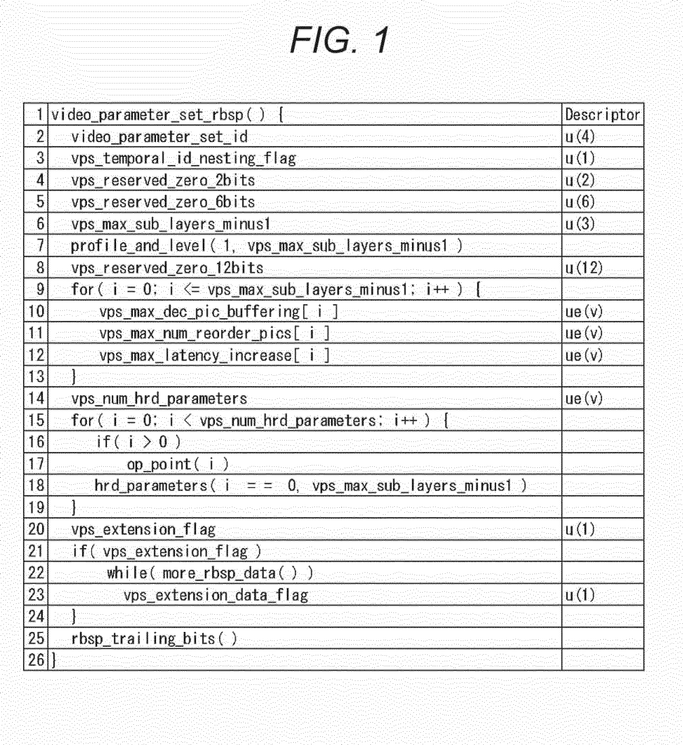

Fig. 1 is a view illustrating an example of syntax of VPS in HEVC version 1.

In the HEVC version 1, only a scalability function to hierarchize and to code an image in a frame rate (hereinafter, referred to as temporal scalability) is included. Thus, as illustrated in Fig. 1, only a parameter related to the temporal scalability is defined in the VPS.

Note that in HEVC version 2, standardization for correspondence with a scalability function other than the temporal scalability is to be performed.

On the other hand, in the HEVC system, filter processing such as adaptive offset filter (sample adaptive offset (SAO) ) processing to mainly eliminate ringing is performed with respect to a decoded image during coding. As a kind of the adaptive offset filter processing, there are two kinds of band offset processing and six kinds of edge offset processing. Also, it is possible not to perform the adaptive offset processing.

The band offset processing is processing to divide a luminance pixel value into a plurality of bands and to perform adaptive offset filter processing by using an offset corresponding to each band. The edge offset processing is processing to perform adaptive offset filter processing by using an offset corresponding to a relationship between a pixel value of a pixel to be processed and a pixel value of a pixel in a neighborhood of the pixel. By the processing, it is possible to correct a mosquito noise.

It has been proposed to divide a decoded image into a quad-tree in the adaptive offset filter processing and to set a kind and an offset of adaptive offset filter processing with respect to each divided region (see, for example, Non-Patent Document 2).

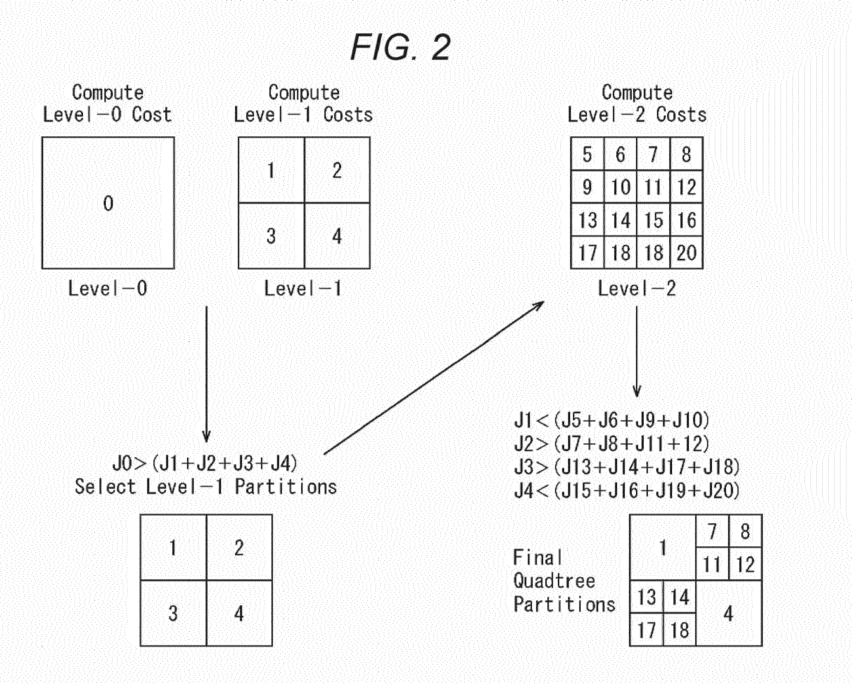

Fig. 2 is a view illustrating an example of a quad-tree.

In the example in Fig. 2, the number of hierarchies of the quad-tree is three. As illustrated in Fig. 2, a decoded image is divided by four as a hierarchy becomes lower by one. That is, the decoded image is kept as it is in the highest hierarchy, is divided by four in a hierarchy which is the second from the top, and is divided by 16 in the lowest hierarchy.

In the coding, first, with respect to each of the highest hierarchy and the hierarchy which is the second from the top, adaptive offset filter processing of a kind to be a candidate, in which processing an offset of each divided region is used, is performed and a cost function is calculated. Then, the cost function of the highest hierarchy and the cost function of the hierarchy which is the second from the top are compared with respect to the divided region in the highest hierarchy and a hierarchy with a smaller cost function is selected.

Note that the adaptive offset filter processing of a kind to be candidate is all kinds of adaptive offset filter processing and processing not to perform the adaptive offset filter processing.

Here, as illustrated in Fig. 2, when the hierarchy which is the second from the top is selected, the adaptive offset filter processing of a kind to be a candidate in which processing an offset of each divided region is used is performed and a cost function is calculated with respect to the lowest hierarchy. Then, the cost function of the lowest hierarchy and the cost function of the hierarchy which is the second from the top are compared with respect to each divided region in the hierarchy which is the second from the top and a hierarchy with a smaller cost function is selected with respect to each region.

As a result, in the example in Fig. 2, in an upper left region and lower right region in the hierarchy which is the second from the top, the hierarchy which is the second from the top is selected and in an upper right region and lower left region, the lowest hierarchy is selected.

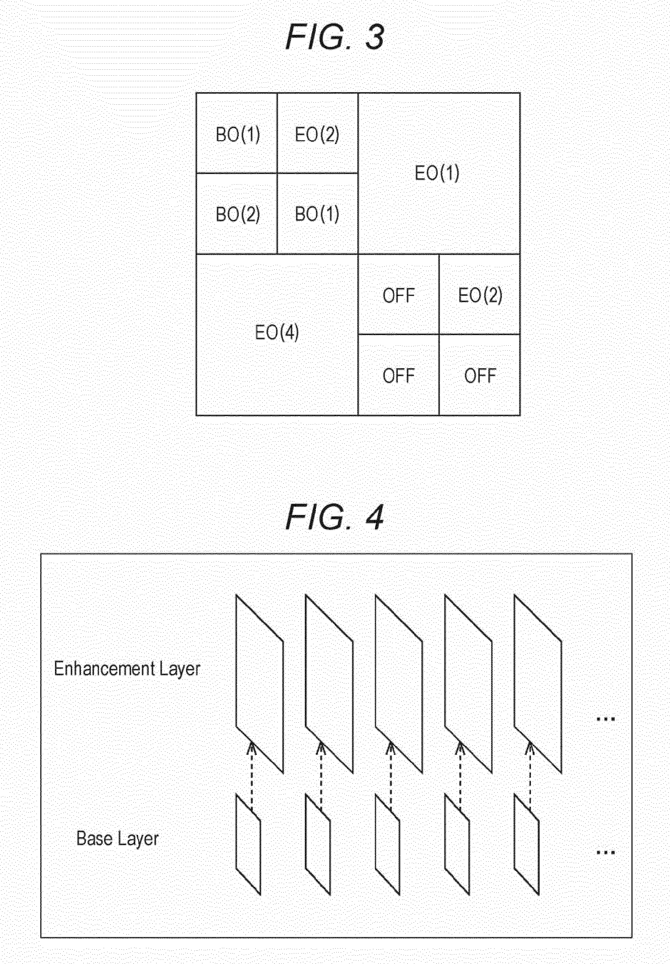

Fig. 3 is a view illustrating an example of a kind and an offset of adaptive offset filter processing which are set with respect to each region divided into the quad-tree illustrated in Fig. 2.

In the example in Fig. 3, in an upper left region and lower right region in the hierarchy which is the second from the top, the lowest hierarchy is selected and in an upper right region and a lower left region, the hierarchy which is the second from the top is selected.

With respect to each divided region in a selected hierarchy, a kind and an offset of adaptive offset filter processing with the smallest cost function, which processing is in the adaptive offset filter processing of a kind to be a candidate, are set. Note that in Fig. 3, BO indicates band offset processing, EO indicates edge offset processing, and OFF indicates that adaptive offset filter processing is not performed.

CITATION LIST

NON-PATENT DOCUMENT

Non-Patent Document 1: Benjamin Bross, Woo-Jin Han, Jens-Rainer Ohm, Gary J. Sullivan, Thomas Wiegand, "High efficiency video coding (HEVC) text specification draft 8", JCTVC-I1003_d7, 2012.7.11-7.20

Non-Patent Document 2: CHIH-Ming Fu, Ching-Yeh Chen, Yu-Wen Huang, Shawmin Lei, "CE8 Subtest 3: Picture Quality Adaptive Offset", JCTVC-D122, 2011.1.20-1.28

## SUMMARY OF THE INVENTION

## PROBLEMS TO BE SOLVED BY THE INVENTION

When coding is performed by using a scalability function, in a case where an image in a base layer and an image in an enhancement layer correspond to each other, it is considered that pieces of information to control filter processing of both images correlate highly with each other.

However, in a conventional HEVC system, information to control filter processing is set for each hierarchy, and thus, coding efficiency is not good.

The present technique has been provided in view of the forgoing and is to make it possible to share information to control filter processing of an image including a hierarchical structure.

## SOLUTIONS TO PROBLEMS

A coding apparatus of a first aspect of the present technique is a coding apparatus including: a filter processing unit configured to perform filter processing with respect to a decoded image in a second hierarchy based on control information which is information to control the filter processing and which is used in coding of an image in a first hierarchy of an image including a hierarchical structure; a coding unit configured to code an image in the second hierarchy and to generate coded data by using, as a reference image, the decoded image in the second hierarchy on which image the filter processing is performed by the filter processing unit; and a transmission unit configured to transmit the coded data generated by the coding unit.

A coding method of the first aspect of the present technique corresponds to the coding apparatus of the first aspect of the present technique.

In the first aspect of the present technique, filter processing is performed with respect to a decoded image in a second hierarchy based on control information which is information to control the filter processing and which is used in coding of an image in a first hierarchy of an image including a hierarchical structure and an image in the second hierarchy is coded by using, as a reference image, the decoded image in the second hierarchy on which image the filter processing is performed, whereby, coded data is generated and the coded data is transmitted.

A decoding apparatus of a second aspect of the present technique is a decoding apparatus including: a reception unit configured to receive coded data of a coded image in a second hierarchy by using, as a reference image, a decoded image in the second hierarchy on which image filter processing is performed based on control information which is information to control the filter processing and which is used in coding of an image in a first hierarchy of an image including a hierarchical structure; a decoding unit configured to decode the coded data received by the reception unit and to generate the decoded image in the second hierarchy; and a filter processing unit configured to perform filter processing with respect to the decoded image in the second hierarchy, which image is generated by the decoding unit, based on the control information, wherein the decoding unit is configured to decode the coded data in the second hierarchy by using, as a reference image, the decoded image in the second hierarchy on which image the filter processing is performed by the filter processing unit.

A decoding method of the second aspect of the present technique corresponds to the decoding apparatus of the second aspect of the present technique.

In the second aspect of the present technique, by using, as a reference image, a decoded image in a second hierarchy on which image filter processing is performed based on control information which is information to control the filter processing and which is used in coding of an image in a first hierarchy of an image including a hierarchical structure, coded data of a coded image in the second hierarchy is received. Then, the coded data is decoded and the decoded image in the second hierarchy is generated. Based on the control information, the filter processing is performed with respect to the decoded image in the second hierarchy. The decoded image in the second hierarchy on which the filter processing is performed is used as a reference image in decoding of the coded data in the second hierarchy.

Note that the coding apparatus of the first aspect and the decoding apparatus of the second aspect can be realized by execution of a program performed by a computer.

Also, a program to be executed by a computer to realize the coding apparatus of the first aspect and the decoding apparatus of the second aspect can be provided by being transmitted through a transmission medium or by being recorded in a recording medium.

The coding apparatus of the first aspect and the decoding apparatus of the second aspect may be independent apparatuses or may be internal blocks included in one apparatus.

EFFECTS OF THE INVENTION

According to the present technique, information to control filter processing of an image including a hierarchical structure can be shared.

BRIEF DESCRIPTION OF DRAWINGS

Fig. 1 is a view illustrating an example of syntax of VPS in HEVC version 1.
Fig. 2 is a view illustrating an example of a quad-tree.
Fig. 3 is a view illustrating an example of a kind of adaptive offset filter processing and a set value of an offset.
Fig. 4 is a view for describing spatial scalability.
Fig. 5 is a view for describing temporal scalability.
Fig. 6 is a view for describing SNR scalability.
Fig. 7 is a block diagram illustrating a configuration example of a first embodiment of a coding apparatus to which the present technique is applied.
Fig. 8 is a view illustrating an example of syntax of an SPS of a base stream.
Fig. 9 is a view illustrating an example of syntax of the SPS in the base stream.
Fig. 10 is a view illustrating an example of syntax of a slice header in the base stream.
Fig. 11 is a view illustrating an example of syntax of the slice header in the base stream.
Fig. 12 is a view illustrating an example of syntax of the slice header in the base stream.
Fig. 13 is a view illustrating an example of syntax of coding_tree_unit in the base stream.
Fig. 14 is a view illustrating an example of syntax of information (sao) in the base stream.
Fig. 15 is a block diagram illustrating a configuration example of an enhancement coding unit in Fig. 7.
Fig. 16 is a block diagram illustrating a configuration example of a coding unit in Fig. 15.
Fig. 17 is a view for describing a CU.
Fig. 18 is a block diagram illustrating a configuration example of an adaptive offset filter and an offset buffer in Fig. 16.
Fig. 19 is a view for describing band offset processing.
Fig. 20 is a view for describing edge offset processing.
Fig. 21 is a view for describing the edge offset processing.
Fig. 22 is a view illustrating an example of syntax of an SPS of an enhancement stream.
Fig. 23 is a view illustrating an example of syntax of the SPS in the enhancement stream.
Fig. 24 is a view illustrating a configuration example of syntax of a slice header in the enhancement stream.
Fig. 25 is a view illustrating a configuration example of syntax of the slice header in the enhancement stream.
Fig. 26 is a view illustrating a configuration example of syntax of the slice header in the enhancement stream.
Fig. 27 is a view illustrating an example of syntax of information (sao) in the enhancement stream.
Fig. 28 is a view illustrating an example of syntax of the information (sao) in the enhancement stream.
Fig. 29 is a view illustrating an example of syntax of a VPS.
Fig. 30 is a view illustrating an example of a shared relationship between a base image and an enhancement image.
Fig. 31 is a flowchart for describing hierarchical coding processing in the coding apparatus in Fig. 7.
Fig. 32 is a flowchart for describing a detail of enhancement stream generation processing in Fig. 31.
Fig. 33 is a flowchart for describing a detail of coding processing in Fig. 32.
Fig. 34 is a flowchart for describing a detail of the coding processing in Fig. 32.
Fig. 35 is a flowchart for describing a detail of shared adaptive offset filter processing in Fig. 34.
Fig. 36 is a block diagram illustrating a configuration example of a first embodiment of a decoding apparatus to which the present technique is applied.
Fig. 37 is a block diagram illustrating a configuration example of an enhancement decoding unit in Fig. 36.
Fig. 38 is a block diagram illustrating a configuration example of a decoding unit in Fig. 37.
Fig. 39 is a block diagram illustrating a configuration example of an adaptive offset filter and an offset buffer in Fig. 38.
Fig. 40 is a flowchart for describing hierarchical decoding processing in the decoding apparatus in Fig. 36.
Fig. 41 is a flowchart for describing enhancement image generation processing in Fig. 37.
Fig. 42 is a flowchart for describing a detail of decoding processing in Fig. 41.
Fig. 43 is a flowchart for describing a detail of shared adaptive offset filter processing in Fig. 42.
Fig. 44 is a view illustrating an example of a multi-viewpoint image coding system.
Fig. 45 is a view illustrating an example of a hierarchical image coding system.
Fig. 46 is a block diagram illustrating a configuration example of hardware of a computer.
Fig. 47 is a view illustrating a schematic configuration example of a television apparatus to which the present technique is applied.

Fig. 48 is a view illustrating a schematic configuration example of a mobile phone to which the present technique is applied.

Fig. 49 is a view illustrating a schematic configuration example of a recording/reproducing apparatus to which the present technique is applied.

Fig. 50 is a view illustrating a schematic configuration example of an imaging apparatus to which the present technique is applied.

Fig. 51 is a block diagram illustrating an example of usage of scalable coding

Fig. 52 is a block diagram illustrating a different example of the usage of the scalable coding.

Fig. 53 is a block diagram illustrating a different example of the usage of the scalable coding.

MODE FOR CARRYING OUT THE INVENTION

<Description of scalability function>

[Description of spatial scalability]

Fig. 4 is a view for describing the spatial scalability.

As illustrated in Fig. 4, the spatial scalability is a scalability function to hierarchize and code an image with spatial resolution. More specifically, in the spatial scalability, an image with low resolution is coded as an image in a base layer and an image of a difference between an image with high resolution and the image with low resolution is coded as an image in an enhancement layer.

Thus, since the coding apparatus only transmits coded data of an image in a base layer to a decoding apparatus with low processing capacity, the decoding apparatus can generate an image with low resolution. Also, since the coding apparatus transmits coded data of images in a base layer and an enhancement layer to a decoding apparatus with high processing capacity, the decoding apparatus can decode and synthesize the images in the base layer and the enhancement layer and can generate an image with high resolution.

[Description of temporal scalability]

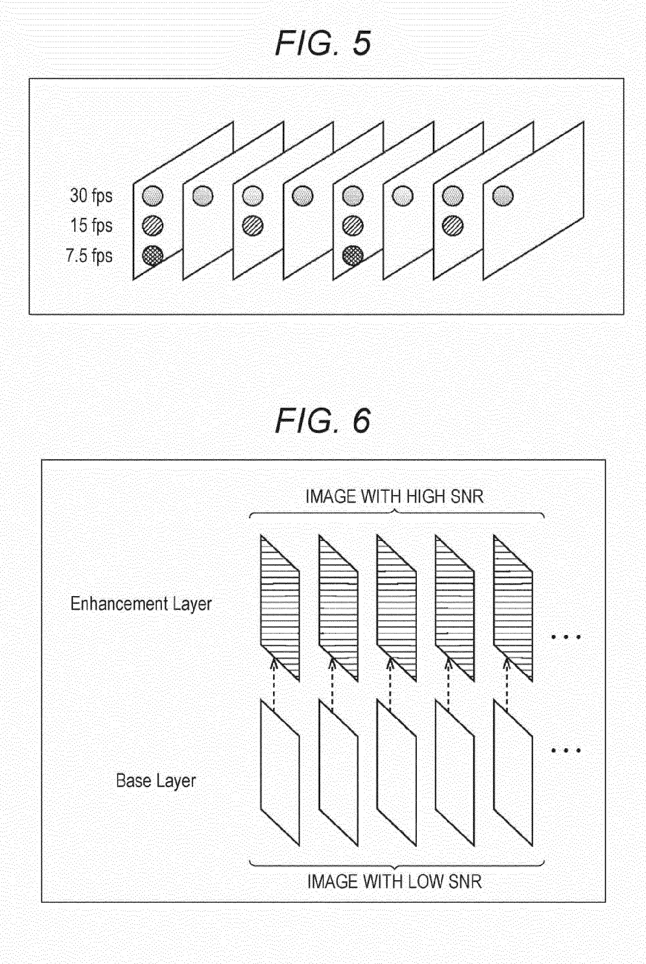

Fig. 5 is a view for describing the temporal scalability.

As described, the temporal scalability is a scalability function to hierarchize and code an image in a frame rate. More specifically, as illustrated in Fig. 5, in the temporal scalability, for example, an image at a low frame rate (7.5 fps in example in Fig. 5) is coded as an image in a base layer. Also, an image of a difference between an image at a middle frame rate (15 fps in example in Fig. 5) and the image at the low frame rate is coded as an image in an enhancement layer. Moreover, an image of a difference between an image at a high frame rate (30 fps in example in Fig. 5) and the image at the middle frame rate is coded as an image in the enhancement layer.

Thus, since the coding apparatus only transmits coded data of an image in the base layer to a decoding apparatus with low processing capacity, the decoding apparatus can generate an image at a low frame rate. Also, since the coding apparatus transmits coded data of images in the base layer and the enhancement layer to a decoding apparatus with high processing capacity, the decoding apparatus can decode and synthesize the images in the base layer and the enhancement layer and can generate an image at a high frame rate or a middle frame rate.

[Description of SNR scalability]

Fig. 6 is a view for describing the SNR scalability.

As illustrated in Fig. 6, the SNR scalability is a scalability function to hierarchize and code an image in a signal-noise ratio (SNR). More specifically, in the SNR scalability, an image in a low SNR is coded as an image in a base layer and an image of a difference between an image in a high SNR and the image in the low SNR is coded as an image in an enhancement layer.

Thus, since the coding apparatus only transmits coded data of an image in the base layer to a decoding apparatus with low processing capacity, the decoding apparatus can generate an image in the low SNR, that is, an image with low image quality. Also, since the coding apparatus transmits coded data of images in the base layer and the enhancement layer to a decoding apparatus with high processing capacity, the decoding apparatus can decode and synthesize the images in the base layer and the enhancement layer and can generate an image in the high SNR, that is, an image with high image quality.

Note that although not illustrated, there is a scalability function other than the spatial scalability, the temporal scalability, and the SNR scalability.

For example, as a scalability function, there is bit-depth scalability to hierarchize and code an image in the number of bits. In this case, for example, coding is performed with an image of eight-bit video as an image in a base layer and an image of a difference between an image of 10-bit video and the image of eight-bit video as an image in an enhancement layer.

Also, as a scalability function, there is chroma scalability to hierarchize and code an image in a format of a color-difference signal. In this case, for example, coding is performed with an image of YUV420 as an image in a base layer and an image of a difference between an image of YUV422 and the image of the YUV420 as an image in an enhancement layer.

Note that in the following, a case where there is one enhancement layer will be described for convenience of description.

<First embodiment>

[Configuration example of first embodiment of coding apparatus]

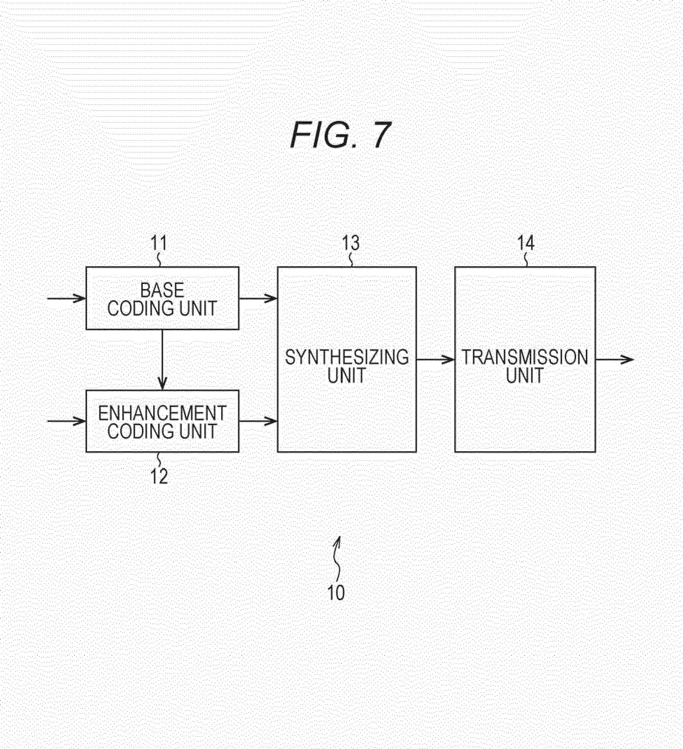

Fig. 7 is a block diagram illustrating a configuration example of the first embodiment of the coding apparatus to which the present technique is applied.

A coding apparatus 10 in Fig. 7 includes a base coding unit 11, an enhancement coding unit 12, a synthesizing unit 13, and a transmission unit 14 and codes an image by a system compliant with an HEVC system by using a scalability function.

Into the base coding unit 11 of the coding apparatus 10, an image in a base layer (hereinafter, referred to as base image) is input from the outside. The base coding unit 11 is configured in a manner similar to a coding apparatus in a conventional HEVC system and codes a base image by the HEVC system. However, the base coding unit 11 supplies, to the enhancement coding unit 12, control information, which is information to control adaptive offset filter processing and which is used in coding of a base image, and an offset in the adaptive offset filter processing. The base coding unit 11 supplies, as a base stream, a coded stream including coded data, an SPS, a PPS, or the like acquired as a result of the coding to the synthesizing unit 13.

Into the enhancement coding unit 12, an image in an enhancement layer (hereinafter, referred to as enhancement image) is input from the outside. The enhancement coding unit 12 codes an enhancement image by a system compliant with the HEVC system. Here, the enhancement coding unit 12 performs adaptive offset processing based on the control information from the base coding unit 11.

When necessary, by using the offset from the base coding unit 11, the enhancement coding unit 12 adds, for example, information related to an offset in the adaptive offset processing to coded data of an enhancement image and generates a coded stream. The enhancement coding unit 12 supplies the generated coded stream to the synthesizing unit 13 as an enhancement stream.

The synthesizing unit 13 synthesizes the base stream supplied by the base coding unit 11 and the enhancement stream supplied by the enhancement coding unit 12, adds a VPS or the like, and generates a coded stream of a whole hierarchy. The synthesizing unit 13 supplies the coded stream of the whole hierarchy to the transmission unit 14.

The transmission unit 14 transmits the coded stream of the whole hierarchy, which stream is supplied by the synthesizing unit 13, to a decoding apparatus described later.

Note that here, it is assumed that the coding apparatus 10 transmits the coded stream of the whole hierarchy. However, when necessary, the coding apparatus 10 can transmit only a base stream.

[Example of syntax of SPS in base stream]

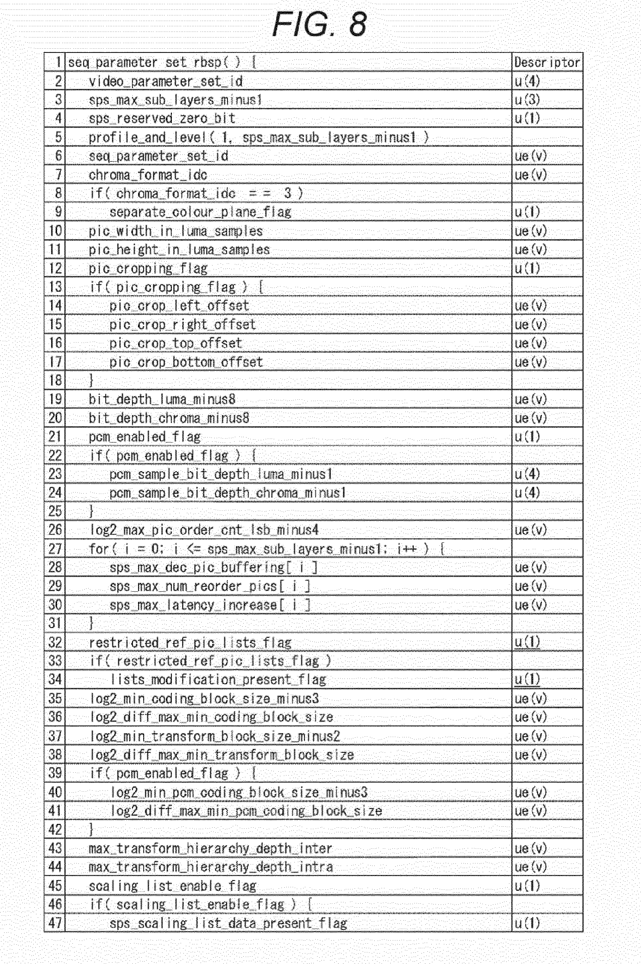

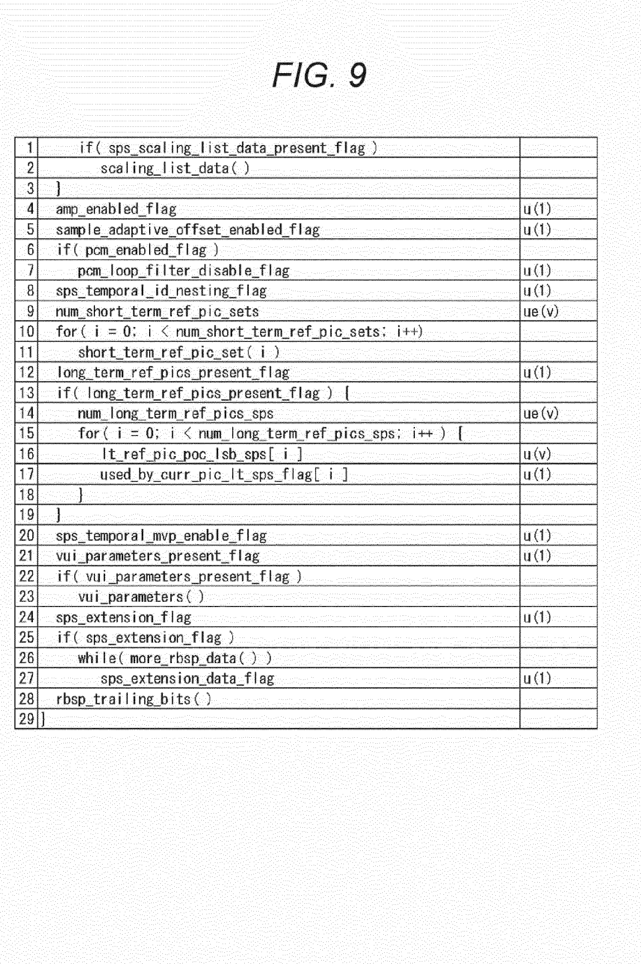

Fig. 8 and Fig. 9 are views illustrating examples of the syntax of the SPS included in the base stream.

As illustrated in the fifth row in Fig. 9, in the SPS in the base stream, a sequence flag (sample_adaptive_offset_enabled_flag) in a unit of a group of picture (GOP) which flag indicates whether to perform adaptive offset processing with respect to a decoded image in a GOP corresponding to the SPS is included.

[Example of syntax of slice header in base stream]

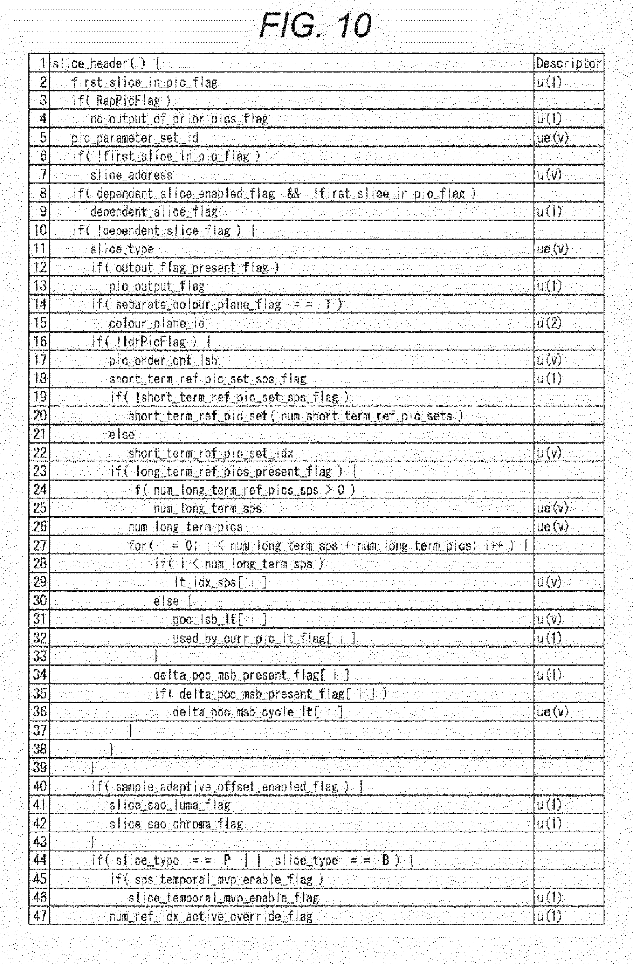

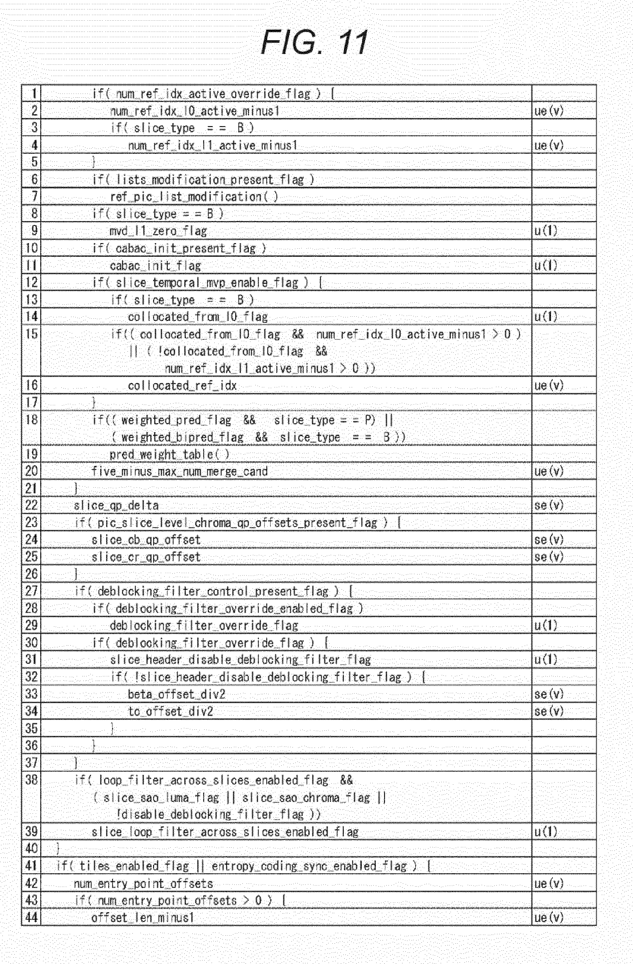

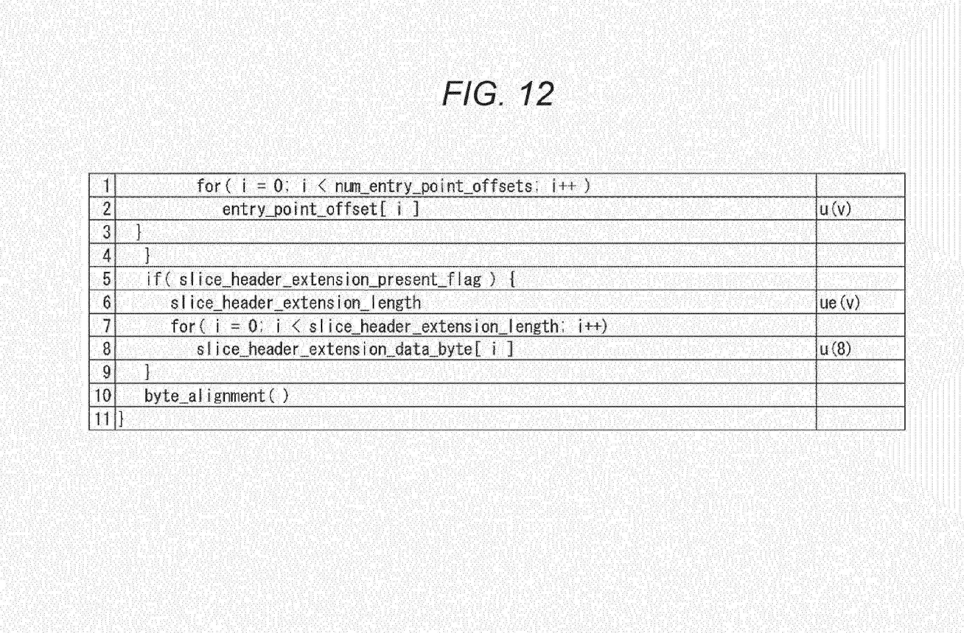

Figs. 10 to 12 are views illustrating examples of syntax of a slice header which is a header added in a unit of a slice to coded data included in a base stream.

As illustrated in the 40th row to the 42nd row in Fig. 10, when a sequence flag included in an SPS is 1 indicating that adaptive offset processing is to be performed with respect to a decoded image in a GOP corresponding to the SPS, a luminance slice flag (slice_sao_luma_flag) in a unit of a slice which flag indicates whether to perform the adaptive offset processing with respect to a luminance signal of a decoded image of a corresponding slice is included in a slice header in the base stream.

Also, a color-difference slice flag (slice_sao_chroma_flag) in a unit of a slice which flag indicates whether to perform the adaptive offset processing with respect to a color-difference signal of the decoded image of the corresponding slice is included. Note that in the following, when it is not particularly necessary to distinguish the luminance slice flag and the color-difference slice flag from each other, these are collectively referred to as a slice flag.

[Example of syntax of coding_tree_unit of coded data in base stream]

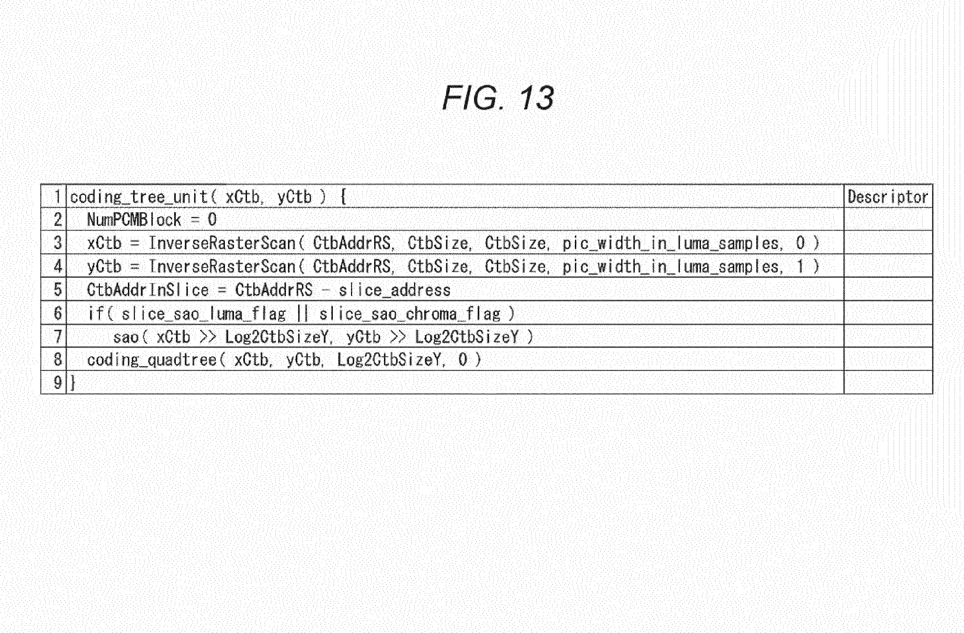

Fig. 13 is a view illustrating an example of the syntax of coding_tree_unit included, in the coded data in the base stream, in the largest coding unit (LCU) which is the largest unit of coding.

As illustrated in the sixth row and the seventh row in Fig. 13, when a slice flag included in a slice header in the base stream is 1 indicating that the adaptive offset processing is to be performed, information (sao) of a kind and an offset of an adaptive offset filter is included in coding_tree_unit in the base stream.

[Example of syntax of information (sao) in base stream]

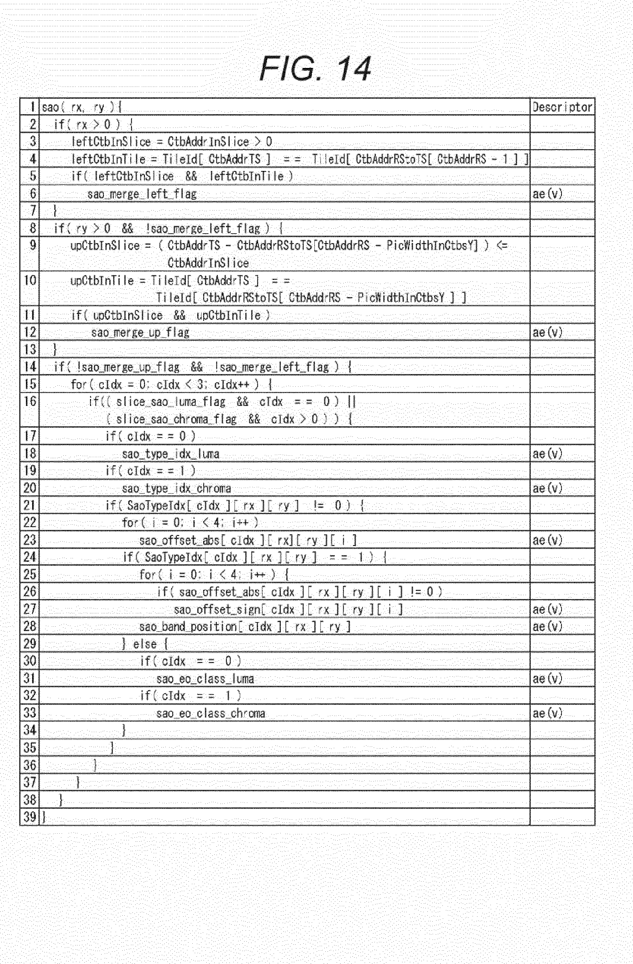

Fig. 14 is a view illustrating an example of the syntax of the information (sao) in the base stream.

As illustrated in the sixth row in Fig. 14, in the sao in the base stream, a left merge flag (sao_merge_left_flag) indicating whether a kind and an offset of an adaptive offset filter in a corresponding LCU are identical with a kind and an offset of an adaptive offset filter in an LCU neighboring on a left side of the LCU is included.

Also, when the left merge flag is 0 indicating non-identicalness, as illustrated in the twelfth row, in the sao in the base stream, an up merge flag (sao_merge_up_flag) indicating whether a kind and an offset of an adaptive offset filter of a corresponding LCU are identical with a kind and an offset of an adaptive offset filter of a LCU neighboring on an upper side of the LCU.

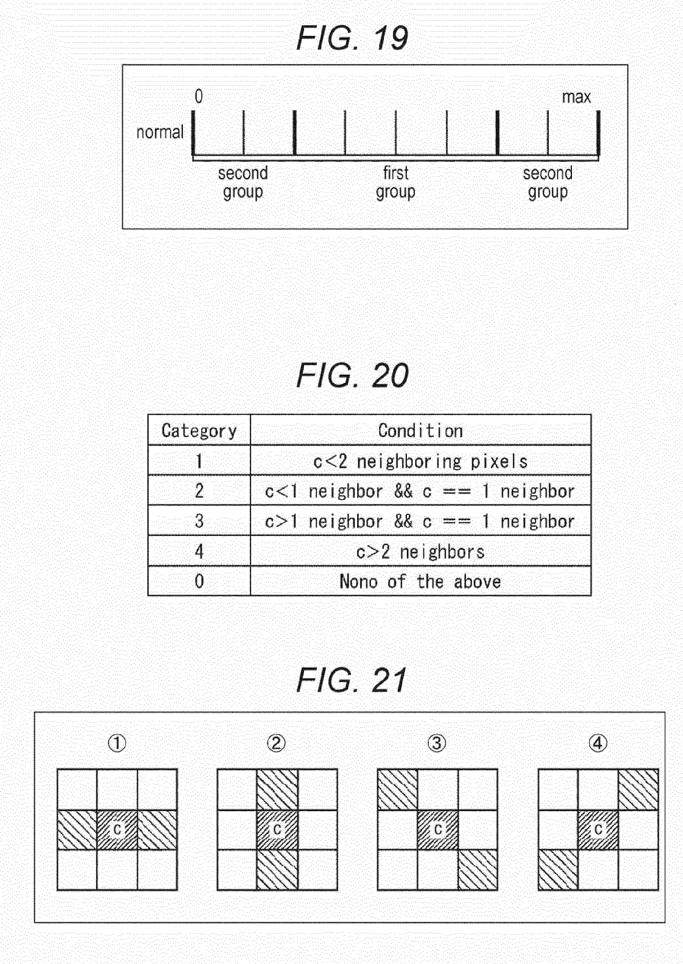

Moreover, when each of the left merge flag and the up merge flag is 0 indicating non-identicalness, as illustrated in the eighteenth row, in the sao in the base stream, luminance type information (sao_type_idx_luma) indicating a kind of an adaptive offset filter of a luminance signal in the corresponding LCU is included. Also, as illustrated in Fig. 20, color-difference type information (sao_type_idx_chroma) indicating a kind of an adaptive offset filter of a color-difference signal in the corresponding LCU is included.

Also, as illustrated in the 23rd row, an absolute value (sao_offset_abs) of an offset of the luminance signal or the color-difference signal in the corresponding LCU is included. Moreover, as illustrated in the 26th row to the 28th row, when the luminance type information or the color-difference type information is 1 indicating band offset processing, a sign (sao_offset_sign) of an offset of a luminance signal or color-difference signal in a case where the absolute value (sao_offset_abs) is a value other than 0, and information (sao_band_position) indicating a group corresponding to the offset are included.

Here, the band offset processing is processing to divide a luminance pixel value into a plurality of bands and to perform the adaptive offset filter processing by using an offset corresponding to each band. The bands are classified into a first group and a second group. Then, an absolute value and a sign of an offset of either of the first group and the second group are included in the sao in the base stream. Thus, as a group corresponding to the offset included in the sao in the base stream, information indicating the first or second group is included in the sao in the base stream.

Note that in the following, when it is not particularly necessary to distinguish the luminance type information and the color-difference type information from each other, these are collectively referred to as type information.

Also, as illustrated in the 29th row to the 33rd row, when the type information is not 1 indicating the band offset processing, that is, when the type information is 0 indicating edge offset processing, a kind (sao_eo_class_luma, sao_eo_class_chroma) (Fig. 21 described later) of a neighboring pixel in the edge offset processing of the luminance signal and the color-difference signal is included.

[Configuration example of enhancement coding unit]

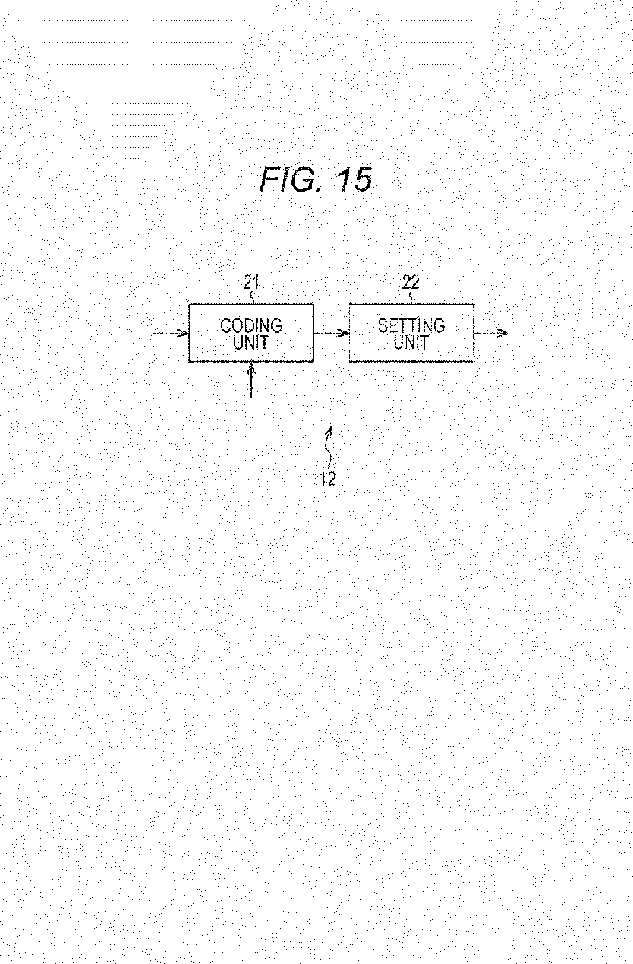

Fig. 15 is a block diagram illustrating a configuration example of the enhancement coding unit 12 in Fig. 7.

The enhancement coding unit 12 in Fig. 15 includes a coding unit 21 and a setting unit 22.

The coding unit 21 of the enhancement coding unit 12 sets, as an input signal, an enhancement image in a unit of a frame which image is input from the outside. With reference to a sequence flag, a slice flag, a left merge flag, an up merge flag, and type information, which are the control information from the base coding unit 11, and an offset and the like, the coding unit 21 codes an input signal by a system compliant with the HEVC system. The coding unit 21 supplies coded data acquired as a result of the coding to the setting unit 22.

The setting unit 22 sets an SPS, a PPS, and the like. The setting unit 22 generates a coded stream from the set SPS and PPS and the coded data supplied by the coding unit 21 and supplies the generated coded stream to the synthesizing unit 13 as an enhancement stream.

[Configuration example of coding unit]

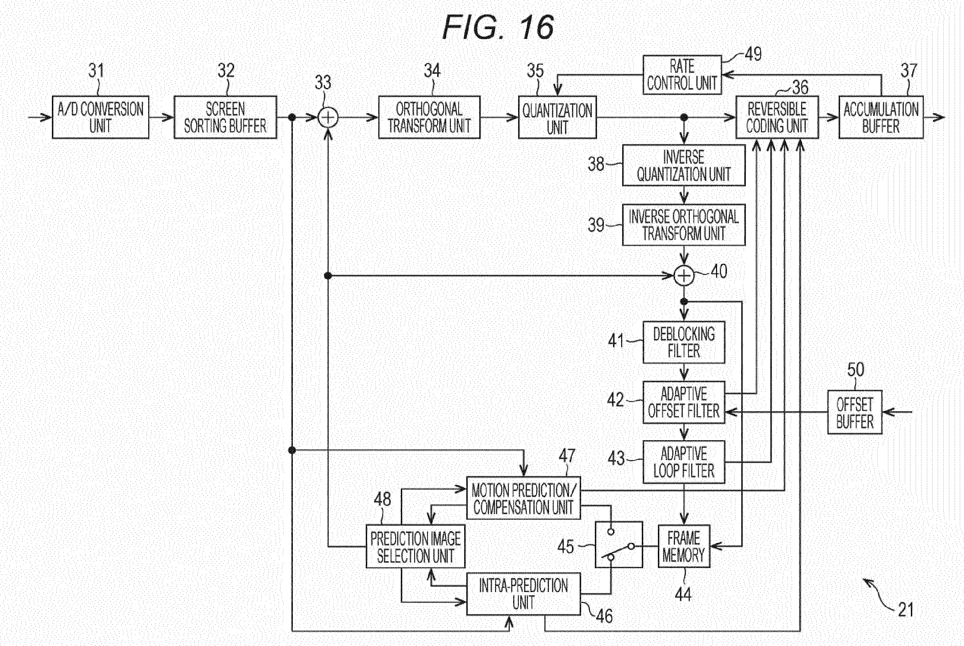

Fig. 16 is a block diagram illustrating a configuration example of the coding unit 21 in Fig. 15.

The coding unit 21 in Fig. 16 includes an A/D conversion unit 31, a screen sorting buffer 32, an operation unit 33, an orthogonal transform unit 34, a quantization unit 35, a reversible coding unit 36, an accumulation buffer 37, an inverse quantization unit 38, an inverse orthogonal transform unit 39, an adding unit 40, a deblocking filter 41, an adaptive offset filter 42, an adaptive loop filter 43, a frame memory 44, a switch 45, an intra-prediction unit 46, a motion prediction/compensation unit 47, a prediction image selection unit 48, a rate control unit 49, and an offset buffer 50.

More specifically, the A/D conversion unit 31 of the coding unit 21 performs A/D conversion of an image in a unit of a frame, which image is input as an input signal, and outputs and stores the image into the screen sorting buffer 32. According to a GOP structure, the screen sorting buffer 32 sorts the stored image in a unit of a frame and in an order of display into an order of coding and outputs the image to the operation unit 33, the intra-prediction unit 46, and the motion prediction/compensation unit 47.

The operation unit 33 functions as a coding unit and performs coding by calculating a difference between a prediction image supplied by the prediction image selection unit 48 and an image to be coded which image is output from the screen sorting buffer 32. More specifically, the operation unit 33 performs coding by subtracting the prediction image supplied by the prediction image selection unit 48 from the image to be coded which image is output from the screen sorting buffer 32. The operation unit 33 outputs an image acquired as a result of the coding to the orthogonal transform unit 34 as residual information. Note that when no prediction image is supplied by the prediction image selection unit 48, the operation unit 33 outputs, to the orthogonal transform unit 34, the image read from the screen sorting buffer 32 as the residual information.

The orthogonal transform unit 34 orthogonally transforms the residual information from the operation unit 33 and supplies a generated orthogonal transform coefficient to the quantization unit 35.

The quantization unit 35 quantizes the orthogonal transform coefficient supplied by the orthogonal transform unit 34 and supplies a coefficient acquired as a result of the quantization to the reversible coding unit 36.

The reversible coding unit 36 acquires information indicating an optimal intra-prediction mode (hereinafter, referred to as intra-prediction mode information) from the intra-prediction unit 46. Also, the reversible coding unit 36 acquires, from the motion prediction/compensation unit 47, information indicating an optimal inter-prediction mode (hereinafter, referred to as inter-prediction mode information), a motion vector, information to specify a reference image (hereinafter, referred to as reference image specification information), and the like which are supplied by the information motion prediction/compensation unit 47.

Moreover, the reversible coding unit 36 acquires generation information, which is used in generation of an offset of an enhancement image from an offset of a base image, an offset, type information, or the like from the adaptive offset filter 42 and acquires a filter coefficient from the adaptive loop filter 43.

The reversible coding unit 36 performs reversible coding such as variable length coding (such as context-adaptive variable length coding (CAVLC)) or arithmetic coding (such as context-adaptive binary arithmetic coding (CABAC)) with respect to the quantized coefficient supplied by the quantization unit 35.

Also, the reversible coding unit 36 performs reversible coding with intra-prediction mode information or inter-prediction mode information, a motion vector and reference image specification information, generation information or an offset and type information, and a filter coefficient as coded information related to coding. With the coded information, on which the reversible coding is performed, as a slice header and the coefficient, on which the reversible coding is performed, as coded data, the reversible coding unit 36 adds the slice header to the coded data. The reversible coding unit 36 supplies and accumulates the coded data, to which the slice header is added, into the accumulation buffer 37.

The accumulation buffer 37 temporarily stores the coded data supplied by the reversible coding unit 36. Also, the accumulation buffer 37 supplies the stored coded data to the setting unit 22 in Fig. 15.

Also, the quantized coefficient output from the quantization unit 35 is also input into the inverse quantization unit 38. The inverse quantization unit 38 inversely quantizes the coefficient quantized by the quantization unit 35 and supplies an orthogonal transform coefficient acquired as a result of the inverse quantization to the inverse orthogonal transform unit 39.

The inverse orthogonal transform unit 39 performs inverse orthogonal transform in a fourth order with respect to the orthogonal transform coefficient supplied by the inverse quantization unit 38 and supplies residual information as a result of the inverse orthogonal transformation to the adding unit 40.

The adding unit 40 adds the residual information supplied by the inverse orthogonal transform unit 39 and the prediction image supplied by the prediction image selection unit 48 and acquires a partially-decoded image. Note that in a case where no prediction image is supplied by the prediction image selection unit 48, the adding unit 40 sets the residual information supplied by the inverse orthogonal transform unit 39 as a partially-decoded image. While supplying the partially-decoded image to the deblocking filter 41, the adding unit 40 supplies and accumulates the partially-decoded image into the frame memory 44.

With respect to the partially-decoded image supplied by the adding unit 40, the deblocking filter 41 performs adaptive deblocking filter processing to eliminate block distortion and supplies an image acquired as a result of the processing to the adaptive offset filter 42.

Based on a sequence flag and a slice flag in the control information of the base image recorded in the offset buffer 50, the adaptive offset filter 42 determines whether to perform adaptive offset filter processing. In a case of performing the adaptive offset filter processing, the adaptive offset filter 42 generates, based on a kind of a scalability function, a correspondence flag indicating whether there is a correspondence, in an LCU, between the base image and the enhancement image.

More specifically, for example, in a case where a size of an LCU of the base image and that of the enhancement image are the same in the SNR scalability, the bit depth scalability, or the chroma format scalability, or in a case where a ratio of resolution and a ratio of the size of the LCU of the base image and those of the enhancement image are identical to each other in the spatial scalability, the adaptive offset filter 42 generates a correspondence flag (sao_lcu_aligned_flag) indicating that there is a correspondence, in an LCU, between the base image and the enhancement image.

Note that since a kind of the adaptive offset processing is set in the LCU, in order to make a kind of adaptive offset processing of the base image and that of the enhancement image shared, it is necessary that the LCU of the base image and the LCU of the enhancement image correspond to each other. Thus, a correspondence flag (sao_lcu_aligned_flag) indicating whether there is a correspondence, in the LCU, between the base image and the enhancement image is a correspondence flag indicating whether a kind of adaptive offset processing of the base image and that of the enhancement image can be shared.

In a case where the correspondence flag is 1 indicating that there is a correspondence, in the LCU, between the base image and the enhancement image, the adaptive offset filter 42 extracts type information, an offset, a left merge flag, an up merge flag, and the like from the control information.

When the type information is extracted from the control information, the adaptive offset filter 42 calculates an offset used in adaptive offset filter processing of a kind indicated by the type information. More specifically, for example, by using an offset to be a candidate, the adaptive offset filter 42 performs adaptive offset filter processing of a kind indicated by the type information and selects an offset with the smallest cost function which offset is acquired as a result of the processing. The adaptive offset filter 42 calculates a difference between the selected offset and the offset extracted from the control information and supplies the difference to the reversible coding unit 36 as the generation information.

On the other hand, when no type information is extracted from the control information, the adaptive offset filter 42 sets type information and an offset of an LCU neighboring on a left side or an upper side of a LCU to be processed as type information and an offset of the LCU to be processed based on a left merge flag and an up merge flag.

Also, when the correspondence flag is 0 indicating that there is not a correspondence, in the LCU, between the base image and the enhancement image, the adaptive offset filter 42 performs adaptive offset filter processing of all kinds and offsets to be candidates. Then, the adaptive offset filter 42 determines a kind and an offset with the smallest cost function, which are acquired as a result of the processing, as a kind and an offset of an LCU to be processed. Then, the adaptive offset filter 42 supplies the type information, which indicates the determined kind of the LCU to be processed, and the determined offset thereof to the reversible coding unit 36.

Also, the adaptive offset filter 42 stores the type information and the offset of the LCU to be processed into a built-in memory. By using the offset of the LCU to be processed, the adaptive offset filter 42 performs adaptive offset filter processing of a kind of the LCU to be processed with respect to an image after the adaptive deblocking filter processing by the deblocking filter 41. Then, the adaptive offset filter 42 supplies the image after the adaptive offset filter processing to the adaptive loop filter 43. Also, the adaptive offset filter 42 supplies the correspondence flag to the reversible coding unit 36.

Note that in a high efficiency coding condition, an offset is set with accuracy higher only for one bit compared to a low delay coding condition.

The adaptive loop filter 43 includes, for example, a two-dimensional wiener filter. The adaptive loop filter 43 performs, for example, adaptive loop filter (ALF) processing in each LCU with respect to the image after the adaptive offset filter processing which image is supplied by the adaptive offset filter 42.

More specifically, the adaptive loop filter 43 calculates, in each LCU, a filter coefficient used in the adaptive loop filter processing in such a manner that a residual between an original image, which is an image output from the screen sorting buffer 32, and the image after the adaptive loop filter processing becomes the smallest. Then, with respect to the image after the adaptive offset filter processing, the adaptive loop filter 43 performs the adaptive loop filter processing in each LCU by using the calculated filter coefficient.

The adaptive loop filter 43 supplies the image after the adaptive loop filter processing to the frame memory 44. Also, the adaptive loop filter 43 supplies the filter coefficient to the reversible coding unit 36.

Note that here, it is assumed that the adaptive loop filter processing is performed in each LCU but a unit of the adaptive loop filter processing is not limited to the LCU. However, by making a unit of processing in the adaptive offset filter 42 and that in the adaptive loop filter 43 identical to each other, processing can be performed efficiently.

The frame memory 44 accumulates an image supplied by the adaptive loop filter 43 and an image supplied by the adding unit 40. The image accumulated in the frame memory 44 is output as a reference image to the intra-prediction unit 46 or the motion prediction/compensation unit 47 through the switch 45.

By using the reference image read from the frame memory 44 through the switch 45, the intra-prediction unit 46 performs intra-prediction processing of all intra-prediction modes to be candidates.

Also, based on the image read from the screen sorting buffer 32 and the prediction image generated as a result of the intra-prediction processing, the intra-prediction unit 46 calculates a cost function value (detail thereof will be described later) with respect to all of the intra-prediction modes. Then, the intra-prediction unit 46 determines an intra-prediction mode with the smallest cost function value as an optimal intra-prediction mode.

The intra-prediction unit 46 supplies a prediction image generated in the optimal intra-prediction mode and a corresponding cost function value to the prediction image selection unit 48. When selection of the prediction image generated in the optimal intra-prediction mode is notified by the prediction image selection unit 48, the intra-prediction unit 46 supplies intra-prediction mode information to the reversible coding unit 36.

Note that the cost function value is also referred to as a rate distortion (RD) cost and is calculated, for example, based on a method in either of a high complexity mode and a low complexity mode which are determined in a joint model (JM) which is reference software in a H.264/AVC system. Note that the reference software in the H.264/AVC system is disclosed in http://iphome.hhi.de/suehring/tml/index.htm.

More specifically, in a case where the high complexity mode is employed as a method of calculating a cost function value, processing up to decoding is temporarily performed with respect to all prediction modes to be candidates and a cost function value expressed by the following equation (1) is calculated with respect to each prediction mode.

$$\text{Cost(Mode)} = D + \lambda \cdot R \qquad \cdots (1)$$

Here, D is a difference (distortion) between the original image and the decoded image, R is a generated code quantity including a coefficient of orthogonal transforming, and $\lambda$ is a Lagrange multiplier method given as a function of a quantization parameter QP.

On the other hand, when the low complexity mode is employed as a method of calculating a cost function value, with respect to all prediction modes to be candidates, generation of a prediction image and calculation of a code quantity of coded information are performed and a cost function expressed by the following equation (2) is calculated for each prediction mode.

$$\text{Cost(Mode)} = D + \text{QPtoQuant(QP)} \cdot \text{Header\_Bit} \qquad \cdots (2)$$

Here, D is a difference (distortion) between the original image and the prediction image, Header_Bit is a code quantity of the coded information, QPtoQuant is a function given as a function of a quantization parameter QP.

In the low complexity mode, it is only necessary to generate a prediction image for each prediction mode and it is not necessary to generate a decoded image. Thus, only a small operation amount is necessary.

The motion prediction/compensation unit 47 performs prediction/compensation processing of all inter-prediction modes to be candidates. More specifically, based on the image supplied by the screen sorting buffer 32 and the reference image read from the frame memory 44 through the switch 45, the motion prediction/compensation unit 47 detects motion vectors of all inter-prediction modes to be candidates. Note that the reference image is set, for example, by a user. The motion prediction/compensation unit 47 performs compensation processing with respect to the reference image based on the detected motion vectors and generates a prediction image.

Here, based on the image supplied by the screen sorting buffer 32 and the prediction image, the motion prediction/compensation unit 47 calculates cost function values for all inter-prediction modes to be candidates and determines an inter-prediction mode with the smallest cost function value as an optimal inter-prediction mode. Then, the motion prediction/compensation unit 47 supplies the cost function value of the optimal inter-prediction mode and a corresponding prediction image to the prediction image selection unit 48. Also, when selection of the prediction image generated in the optimal inter-prediction mode is notified by the prediction image selection unit 48, the motion prediction/compensation unit 47 outputs inter-prediction mode information, a corresponding motion vector, and the like to the reversible coding unit 36 and outputs reference image specification information to a reference image setting unit 50.

Based on the cost function values supplied by the intra-prediction unit 46 and the motion prediction/compensation unit 47, the prediction image selection unit 48 determines one, which includes smaller corresponding cost function value, of the optimal intra-prediction mode and the optimal inter-prediction mode as an optimal prediction mode. Then, the prediction image selection unit 48 supplies a prediction image in the optimal prediction mode to the operation unit 33 and the adding unit 40. Also, the prediction image selection unit 48 notifies selection of the prediction image in the optimal prediction mode to the intra-prediction unit 46 or the motion prediction/compensation unit 47.

Based on the coded data accumulated in the accumulation buffer 37, the rate control unit 49 controls a rate of a quantization operation performed by the quantization unit 35 in such a manner that overflow or underflow is not generated.

An offset buffer 50 stores control information and an offset supplied by the base coding unit 11 in Fig. 7.

[Description of unit of coding processing]

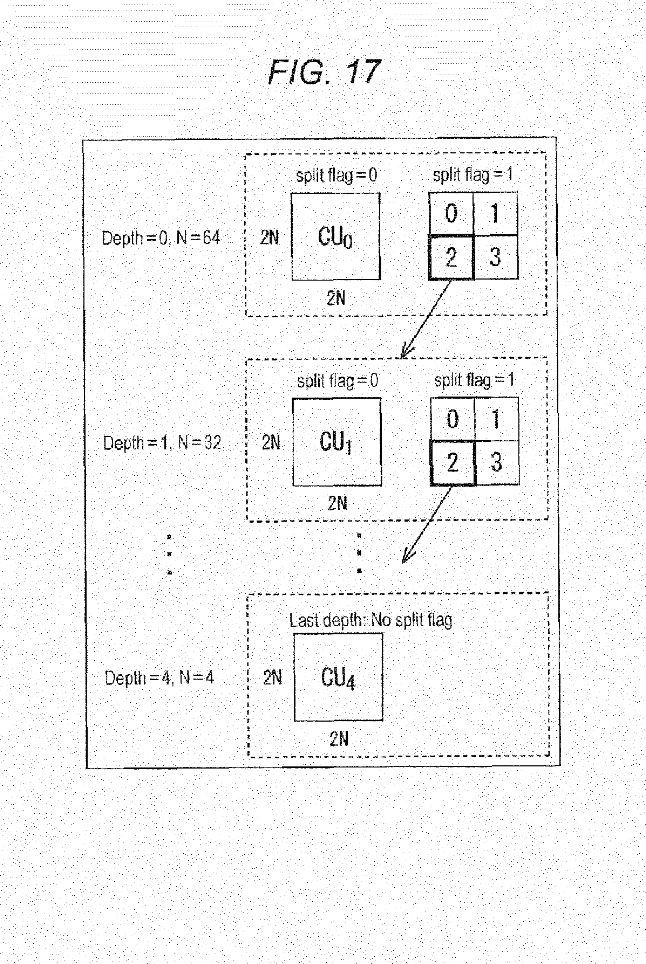

Fig. 17 is a view for describing a Coding UNIT (CU) which is a unit of coding in the HEVC system.

In the HEVC system, an image with a large picture frame such as an ultra high definition (UHD) of 4000 pixels × 2000 pixels is also an object. Thus, it is not the best to fix a size of the unit of coding as 16 pixels × 16 pixels. Thus, in the HEVC system, the CU is defined as the unit of coding.

The CU is also referred to as a coding tree block (CTB) and serves a function similar to that of a macro block in the AVC system. More specifically, the CU is divided into a prediction unit (PU) which is a unit of intra-prediction or inter-prediction or is divided into a transform unit (TU) which is a unit of orthogonal transform. However, a size of the CU is a square which can be varied for each sequence and which is expressed by power of two. Also, currently, in the HEVC system, as a size of the TU, 16 × 16 pixels and 32 × 32 pixels can be used in addition to 4 × 4 pixels and 8 × 8 pixels.

In the example in Fig. 17, a size of an LCU which is the largest CU is 128 and a size of a smallest coding unit (SCU) which is the smallest CU is 8. Thus, a hierarchical depth of a CU having the size of 2N × 2N which CU is hierarchized by each N becomes 0 to 4 and a hierarchical depth number becomes 5. Also, when a value of split_flag is 1, the CU having the size of 2N × 2N is divided into a CU having the size of N × N which CU is in a hierarchy lower by one level.

Information to specify sizes of the LCU and the SCU is included in the SPS. Note that a detail of the CU is described in Non-Patent Document 1.

[Configuration example of adaptive offset filter and offset buffer]

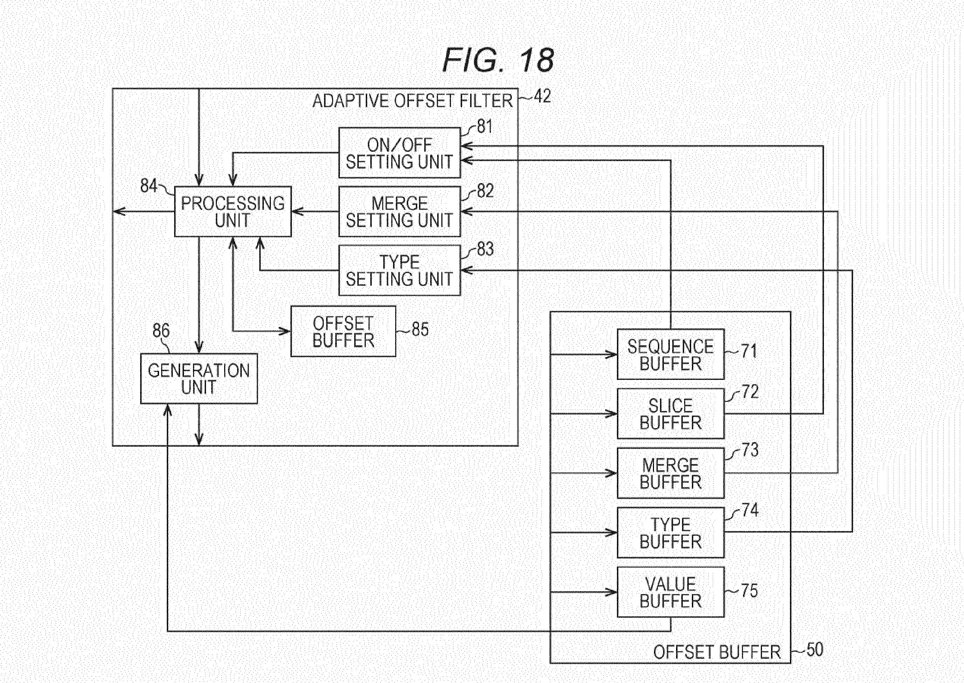

Fig. 18 is a block diagram illustrating configuration examples of the adaptive offset filter 42 and the offset buffer 50 in Fig. 16.

The offset buffer 50 in Fig. 18 includes a sequence buffer 71, a slice buffer 72, a merge buffer 73, a type buffer 74, and a value buffer 75.

The sequence buffer 71 of the offset buffer 50 stores a sequence flag included in the control information supplied by the base coding unit 11 in Fig. 7. The slice buffer 72 stores a slice flag included in the control information.

The merge buffer 73 supplies a left merge flag and an up merge flag to the merge buffer 73. Also, the type buffer 74 stores type information included in the control information. The value buffer 75 stores an offset of a base image supplied by the base coding unit 11.

The adaptive offset filter 42 includes an on/off setting unit 81, a merge setting unit 82, a type setting unit 83, a processing unit 84, an offset buffer 85, and a generation unit 86.

The on/off setting unit 81 of the adaptive offset filter 42 reads a sequence flag from the sequence buffer 71 and reads a slice flag from the slice buffer 73. Based on the sequence flag and the slice flag, the on/off setting unit 81 determines whether to perform the adaptive offset processing with respect to an image after deblocking filter processing of a slice of a current image to be coded. When determining to perform the adaptive offset processing, the on/off setting unit 81 instructs the processing unit 84 to perform the adaptive offset processing.

The merge setting unit 82 reads a left merge flag and an up merge flag from the merge buffer 73 and supplies the read flags to the processing unit 84. The type setting unit 83 reads type information from the type buffer 74 and supplies the type information to the processing unit 84.

Based on an instruction to perform the adaptive offset processing, which instruction is given by the on/off setting unit 81, and a kind of a scalability function, the processing unit 84 generates a correspondence flag. When the generated correspondence flag is 1 and the left merge flag or the up merge flag supplied by the merge setting unit 82 is 1, the processing unit 84 reads type information and an offset of an LCU neighboring on a left side or an upper side of the LCU to be processed from the offset buffer 85 and determines the read type information and offset as type information and an offset of the LCU to be processed.

On the other hand, when the correspondence flag is 1 and the left merge flag and the up merge flag are 0, the processing unit 84 calculates an offset of an LCU to be processed in adaptive offset processing of a kind indicated by the type information supplied by the type setting unit 83 and supplies the offset to the generation unit 86. Then, the processing unit 84 determines the type information supplied by the type setting unit 83 as type information of the LCU to be processed.

Also, when the correspondence flag is 0, the processing unit 84 performs adaptive offset filter processing of all kinds and offsets to be candidates. Then, the processing unit 84 determines a kind and an offset with the smallest cost function, which are acquired as a result of the processing, as a kind and an offset of the LCU to be processed. Then, the processing unit 84 supplies type information, which indicates the determined kind, and the determined offset to the generation unit 86.

Then, the processing unit 84 supplies and stores the type information and the offset of the LCU to be processed into the offset buffer 85. By using the offset of the LCU to be processed, the processing unit 84 performs adaptive offset filter processing of a kind indicated by the type information of the LCU to be processed with respect to the image after the adaptive deblocking filter processing by the deblocking filter 41 in Fig. 16. Then, the processing unit 84 supplies the image after the adaptive offset filter processing to the adaptive loop filter 43 in Fig. 16. The processing unit 84 supplies a correspondence flag to the generation unit 86.

When the correspondence flag is 1, the generation unit 86 reads an offset of a base image from the value buffer 75. The generation unit 86 calculates a difference between the read offset of the base image and an offset of an enhancement image supplied by the processing unit 84 and supplies the difference to the reversible coding unit 36 in Fig. 16 as generation information.

On the other hand, when the correspondence flag is 0, the generation unit 86 supplies the offset and the type information to the reversible coding unit 36. Also, the generation unit 86 supplies a correspondence flag to the reversible coding unit 36.

[Description of band offset processing]

Fig. 19 is a view for describing the band offset processing.

As illustrated in Fig. 19, in the band offset processing, a possible range of a luminance pixel value is divided, for example, into eight bands and an offset is set for each band. The band is classified into a first group including middle four bands and a second group including two bands at both ends.

Then, in the information (SAO), only an offset of one, which includes a luminance pixel value of a corresponding LCU, of the first group and the second group and the information (SAO) is transmitted to a side of decoding. Accordingly, it is possible to prevent an increase of a code quantity due to transmission of an offset of a group not including a luminance pixel value of the LCU.

Note that here, it is assumed that an image to be coded is not an image for broadcasting and that the possible range of a luminance pixel value is 0 to 255. In a case where an image to be coded is an image for broadcasting, the possible range of a luminance pixel value is 16 to 235. Also, a possible range of a color-difference pixel value is 16 to 240.

[Description of edge offset processing]

Fig. 20 and Fig. 21 are views for describing edge offset processing.

In the edge offset processing, as illustrated in Fig. 20, based on a relationship between a pixel value of a pixel to be processed and pixel values of two pixels (hereinafter, referred to as neighboring pixel) neighboring the pixel, the pixel to be processed is classified into five categories.

As illustrated in Fig. 20, classification into the first category among the five categories is performed when a pixel value of the pixel to be processed is smaller than pixel values of both of the two neighboring pixels. Classification into the second category is performed when a pixel value of the pixel to be processed is smaller than a pixel value of one of the two neighboring pixels and is identical to a pixel value of the other neighboring pixel.

Classification into the third category is performed when a pixel value of the pixel to be processed is larger than a pixel value of one of the two neighboring pixels and is identical to a pixel value of the other neighboring pixel. Classification into the fourth category is performed when a pixel value of the pixel to be processed is larger than pixel values of both of the two neighboring pixels. Classification into the zero category is performed when classification into any of the first to the fourth categories is not performed.

Note that as illustrated in Fig. 21, there are four kinds in the two neighboring pixels. Neighboring pixels of a first kind are two pixels neighboring on both sides in a horizontal direction of the pixel to be processed. Neighboring pixels of a second kind are two pixels neighboring on both sides in a vertical direction of the pixel to be processed. Neighboring pixels of a third kind are a pixel on an upper left side of the pixel to be processed and a pixel on a lower right side thereof. Neighboring pixels of a fourth kind are a pixel on an upper right side of the pixel to be processed and a pixel on a lower left side thereof.

In the edge offset processing, an offset is set for each kind and category of neighboring pixels.

[Example of syntax of SPS in enhancement stream]

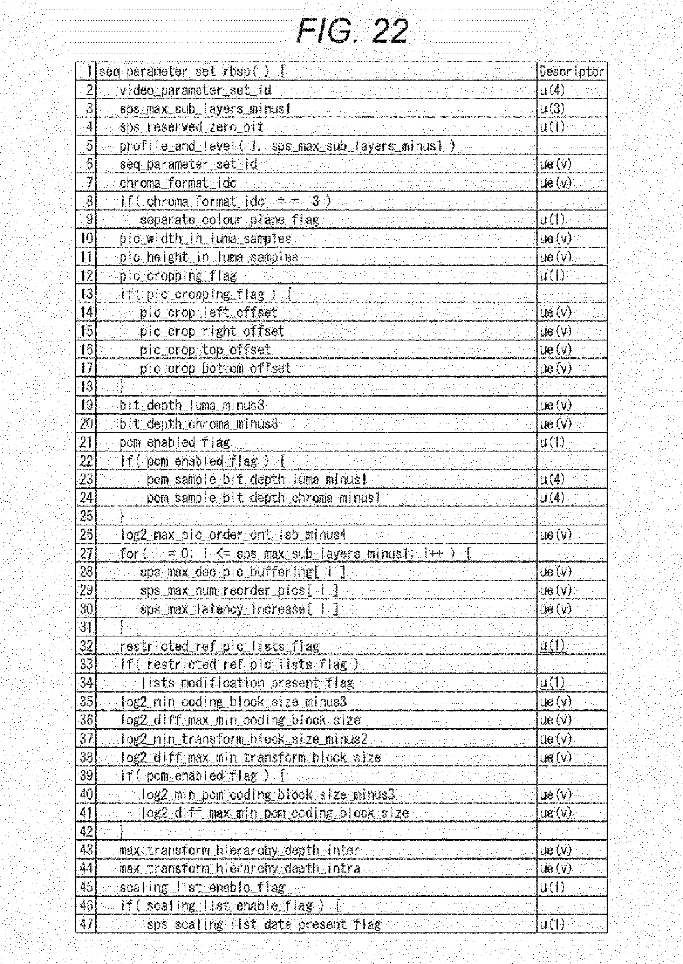

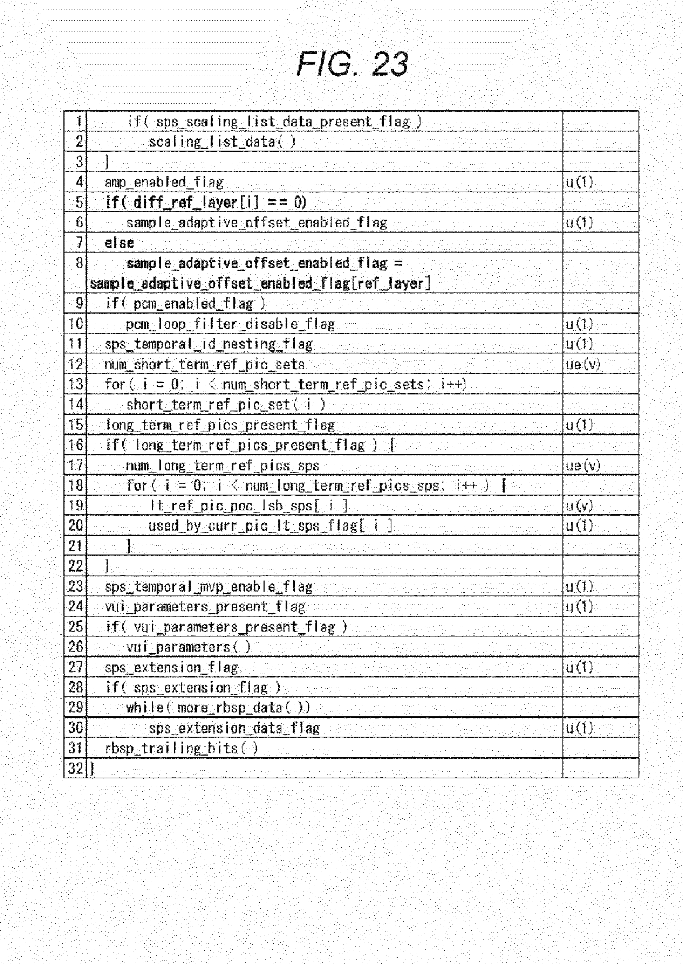

Fig. 22 and Fig. 23 are views illustrating examples of syntax of an SPS set by the setting unit 22 in Fig. 15.

As illustrated in the fifth row and the sixth row in Fig. 23, when a difference (diff_ref_layer), which is included in a VPS described later, between a base layer and a reference layer is 0, that is, when there is no reference layer, a sequence flag is included in the SPS. On the other hand, as illustrated in the seventh row and the eighth row, when the difference (diff_ref_layer) is a value other than 0, that is, when there is a reference layer, a sequence flag included in an SPS in a base stream of the reference layer is set as a sequence flag of an enhancement image.

[Example of syntax of slice header in enhancement stream]

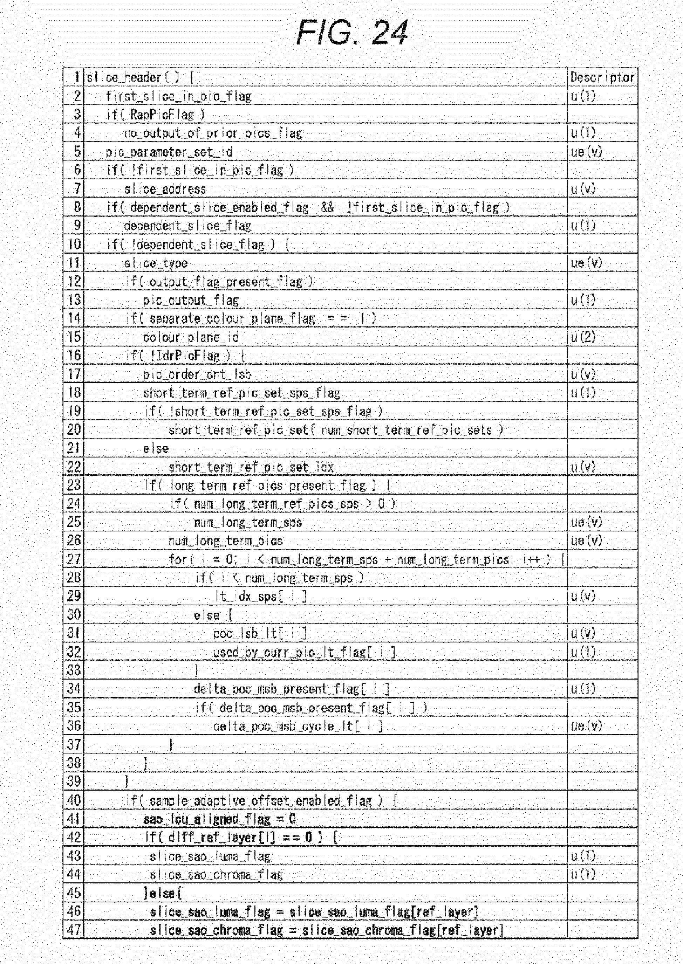

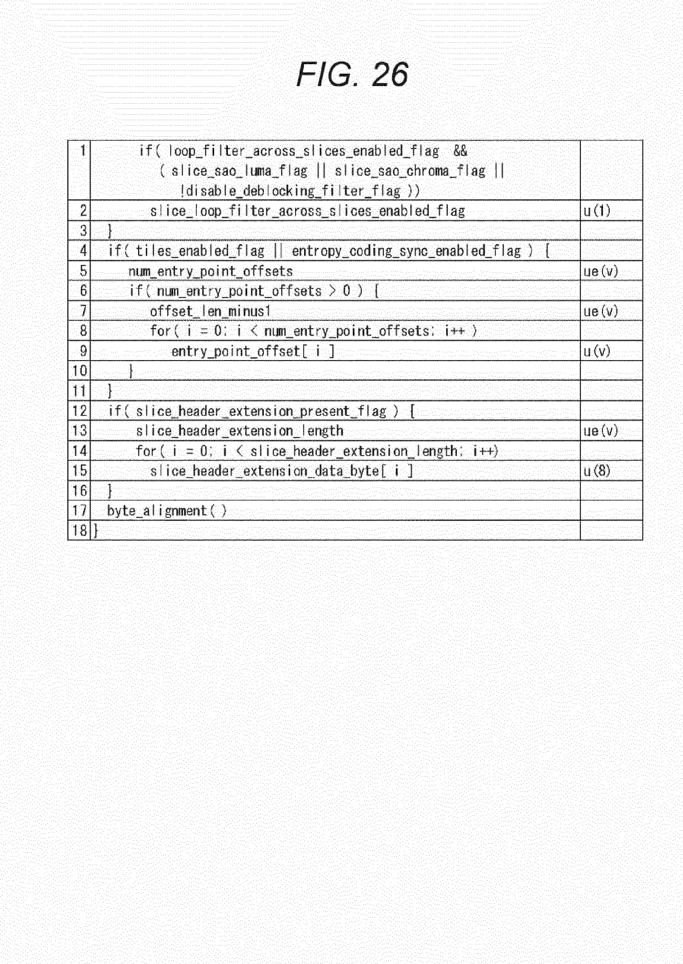

Figs. 24 to 26 are views illustrating configuration examples of syntax of a slice header in an enhancement stream.

As illustrated in the 40th row and the 41st row in Fig. 24, when a sequence flag is 1, 0 indicating that there is not a correspondence, in an LCU, between a base image and an enhancement image is included as a correspondence flag (sao_lcu_aligned_flag) in the slice header in the enhancement stream.

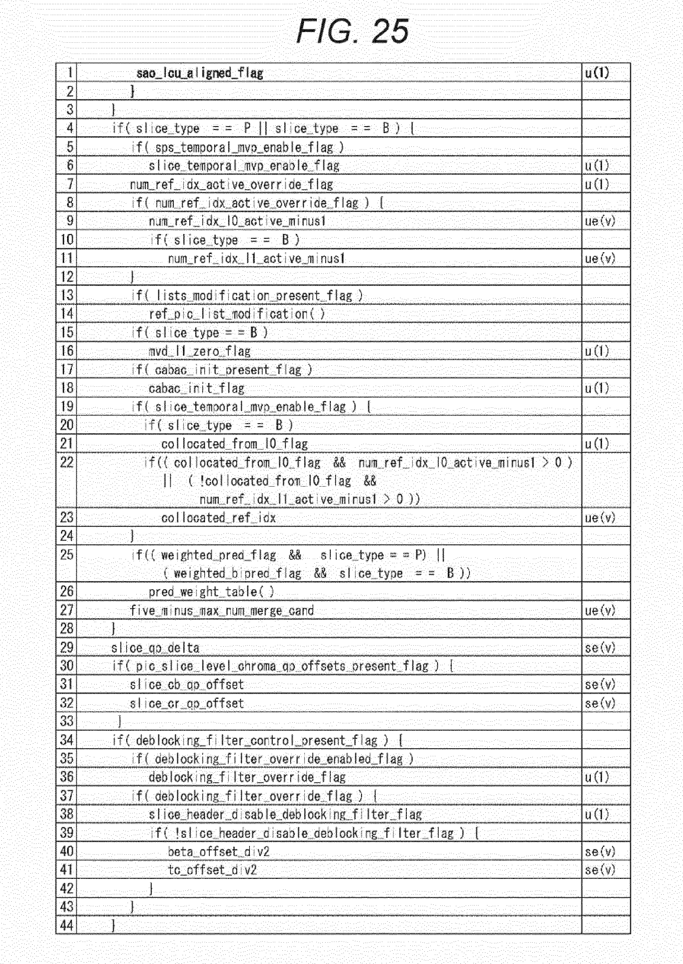

Also, as illustrated in the 42nd row to the 44th row, when a difference (diff_ref_layer) is 0, that is, when there is no reference layer, a luminance slice flag and a color-difference slice flag are included similarly to the slice header in the base stream. On the other hand, as illustrated in the 45th to the 47th row, when the difference (diff_ref_layer) is a value other than 0, that is, when there is a reference layer, a luminance slice flag and a color-difference slice flag included in a slice header in a base stream of the reference layer are set as a luminance slice flag and a color-difference slice flag of the enhancement image. Also, as illustrated in the first row in Fig. 25, a correspondence flag (sao_lcu_aligned_flag) is updated.

[Example of syntax of coding_tree_unit of coded data in enhancement stream]

Syntax of coding_tree_unit of coded data in an enhancement stream is similar to the syntax in Fig. 13 other than information (sao). Thus, only the information (sao) will be described.

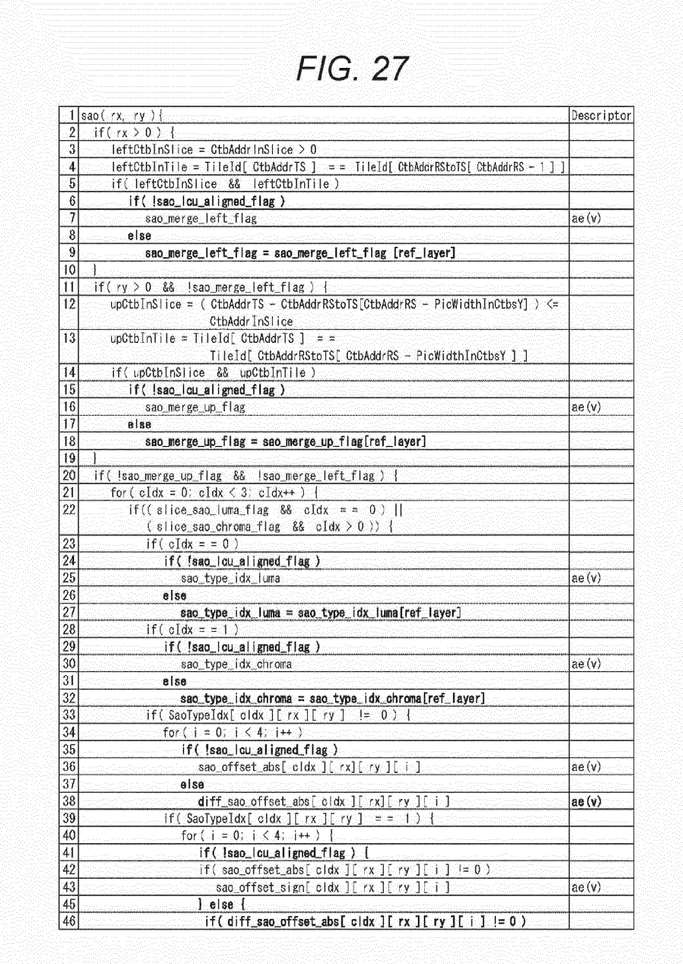

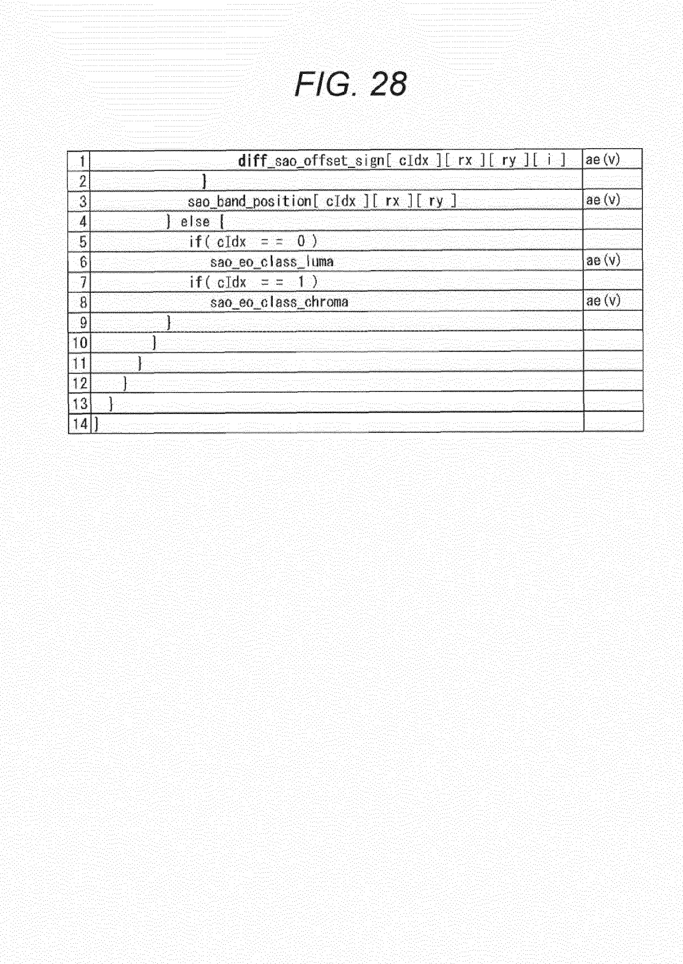

Fig. 27 and Fig. 28 are views illustrating examples of syntax of information (sao) of an enhancement stream.

As illustrated in the sixth row and the seventh row in Fig. 27, when a correspondence flag (sao_lcu_aligned_flag) included in a slice header in an enhancement stream is 0, left merge information is included in the information (sao) in the enhancement stream similarly to the information (sao) in the base stream. On the other hand, as illustrated in the eighth row and the ninth row, when the correspondence flag (sao_lcu_aligned_flag) is 1 indicating that there is a correspondence, in an LCU, between the base image and the enhancement image, left merge information included in the information (sao) in the base stream of the reference layer is set as left merge information of the enhancement image.

Also, as illustrated in the 15th row and the 16th row, when the correspondence flag (sao_lcu_aligned_flag) is 0, in the information (sao) in the enhancement stream, up merge information is included similarly to the information (sao) in the base stream. On the other hand, as illustrated in the 17th row and the 18th row, when the correspondence flag (sao_lcu_aligned_flag) is 1, up merge information included in the information (sao) in the base stream of the reference layer is set as up merge information of the enhancement image.

Moreover, as illustrated in the 24th row and the 25th row, when the correspondence flag (sao_lcu_aligned_flag) is 0, in the information (sao) in the enhancement stream, luminance type information is included similarly to the information (sao) in the base stream. On the other hand, as illustrated in the 26th row and the 27th row, when the correspondence flag (sao_lcu_aligned_flag) is 1, luminance type information included in the information (sao) in the base stream of the reference layer is set as luminance type information of the enhancement image.

Also, as illustrated in the 29th row and the 30th row, when the correspondence flag (sao_lcu_aligned_flag) is 0, in the information (sao) in the enhancement stream, color-difference type information is included similarly to the information (sao) in the base stream. On the other hand, as illustrated in the 31st row and 32nd row, when the correspondence flag (sao_lcu_aligned_flag) is 1, color-difference type information included in the information (sao) in the base stream of the reference layer is set as color-difference type information of the enhancement image.

Moreover, as illustrated in the 35th row and the 36th row, when the correspondence flag (sao_lcu_aligned_flag) is 0, in the information (sao) in the enhancement stream, an absolute value (sao_offset_abs) is included similarly to the information (sao) in the base stream. On the other hand, as illustrated in the 37th row and 38th row, when the correspondence flag (sao_lcu_aligned_flag) is 1, in the information (sao) in the enhancement stream, an absolute value (diff_sao_offset_abs) of a difference between an offset of a luminance signal or a color-difference signal of a reference layer and that of the enhancement image in a corresponding LCU is included as generation information.

Also, as illustrated in the 41st row to the 43rd row, when the correspondence flag (sao_lcu_aligned_flag) is 0, in the information (sao) in the enhancement stream, a sign (sao_offset_sign) of when the absolute value (sao_offset_abs) is a value other than 0 is included similarly to the information (sao) in the base stream.

On the other hand, as illustrated in the 45th row and the 46th row in Fig. 27 and in the first row in Fig. 28, when the correspondence flag (sao_lcu_aligned_flag) is 1, in the information (sao) in the enhancement stream, a sign (diff_sao_offset_sign) of a difference between an offset of a luminance signal or a color-difference signal of a reference layer and that of an enhancement image in a corresponding LCU of when the absolute value (diff_sao_offset_abs) is a value other than 0 is included as generation information.

[Example of syntax of VPS]

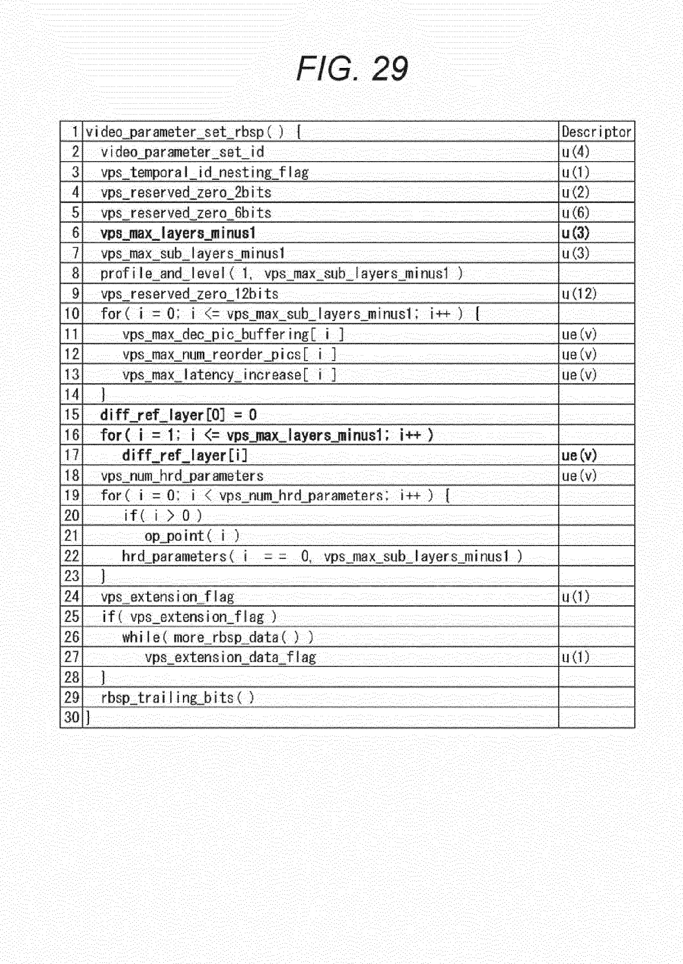

Fig. 29 is a view illustrating an example of syntax of a VPS.
As illustrated in the sixth row in Fig. 29, in the VPS, information (vps_max_layer_minus1) indicating the number of layers of scalability is included. As illustrated in the seventh row, in the VPS, similarly to what is in the related art, information (vps_max_sub_layer_minus1) indicating the number of layers of temporal scalability is included.
Also, as illustrated in the 15th row, in the VPS, 0 is included as a difference (diff_ref_layer[0]) between a base layer and a reference layer which difference is information for specification of a base layer including 0 as an index. Moreover, as illustrated in the 16th row and the 17th row, in the VPS, a difference (diff_ref_layer) of each enhancement layer is included.
Here, when it is assumed that a current layer is curr_layer and a reference layer is ref_layer, the reference layer ref_layer is expressed by the following equation (3) by using a difference diff_ref_layer.

$$\text{ref\_layer} = \text{curr\_layer-diff\_ref\_layer} \qquad \cdots (3)$$

Accordingly, when the difference (diff_ref_layer) in an enhancement layer is 0, an enhancement stream is generated without referring to reference image specification information or the like of a different layer, similarly to the base stream.

[Shared relationship between base image and enhancement image]

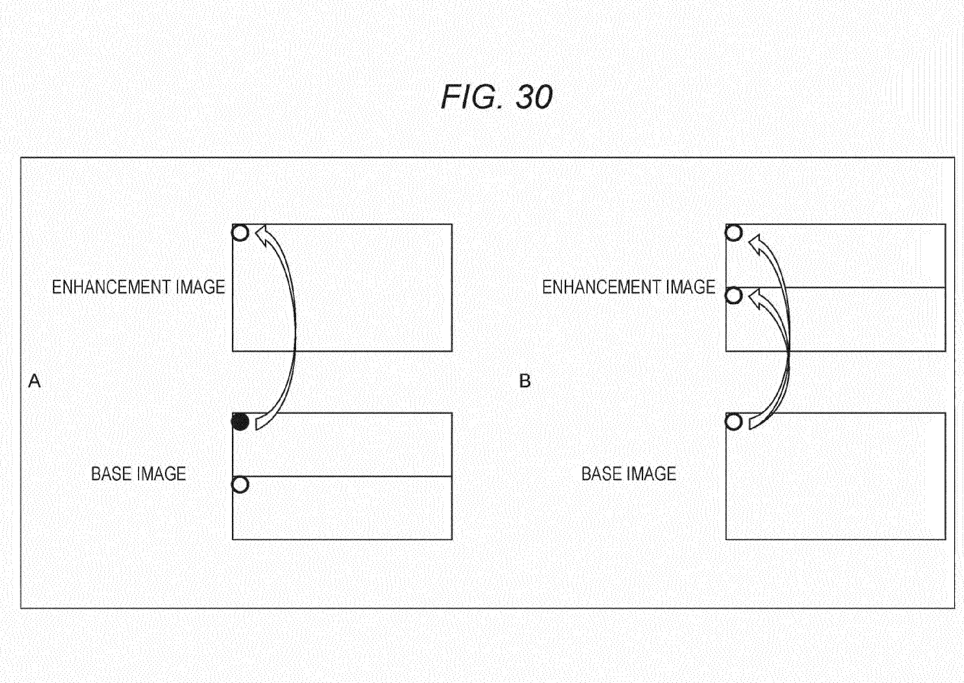

Fig. 30 is a view illustrating a shared relationship between the base image and the enhancement image.
As illustrated in A in Fig. 30, when a slice of the base image and a slice of the enhancement image correspond to each other by a plural number (2 in example in Fig. 30) : 1, for example, control information of the top slice of a plurality of slices in the base image is set as control information of a slice of the enhancement image. Also, an offset of the top slice of the plurality of slices of the base image is used for generation of generation information.
On the other hand, as illustrated in B in Fig. 30, when a slice of the base image and a slice of the enhancement image correspond to each other by 1 : a plural number (2 in example in Fig. 30), control information of the slice of the base image is set as control information of each of the plurality of slices of the enhancement image. Also, an offset of the slice of the base image is used for generation of generation information of each of the plurality of slices of the enhancement image.

[Description of processing in coding apparatus]

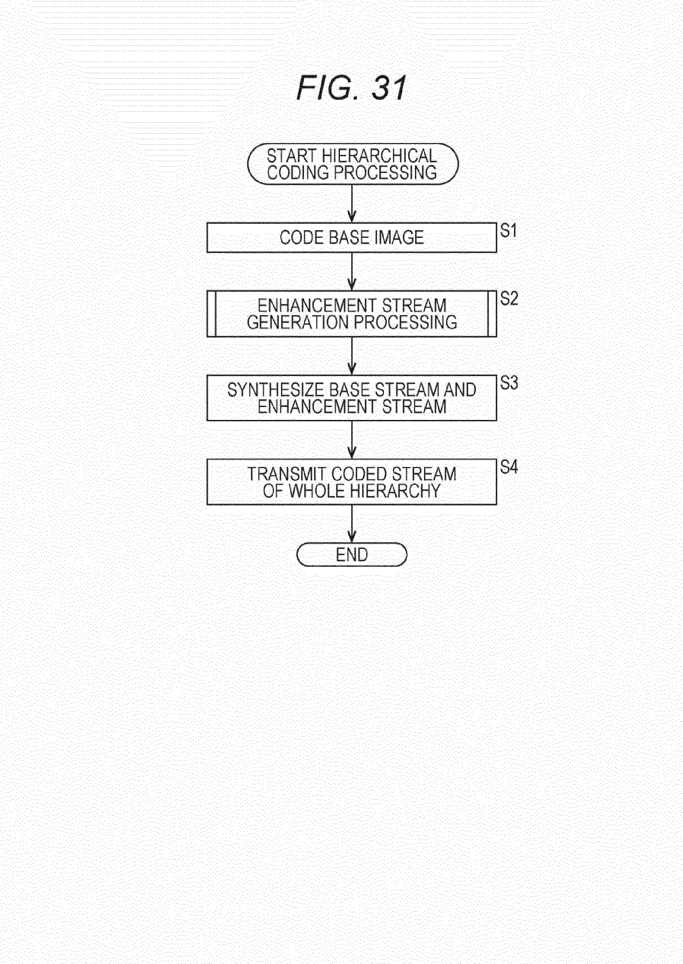

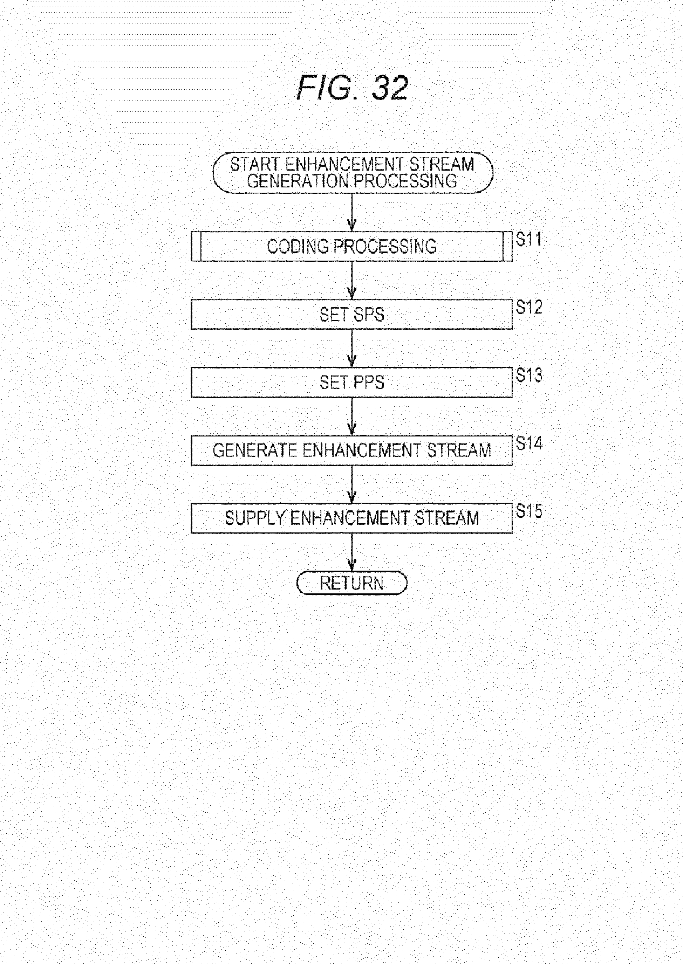

Fig. 31 is a flowchart for describing hierarchical coding processing of the coding apparatus 10 in Fig. 7. The hierarchical coding processing is started when a base image and an enhancement image are input from the outside.
In step S1 in Fig. 31, the base coding unit 11 of the coding apparatus 10 codes a base image, which is input from the outside, by an HEVC system. The base coding unit 11 supplies control information and an offset used in coding of the base image to the enhancement coding unit 12. The base coding unit 11 supplies a base stream including coded data, an SPS, a PPS, or the like acquired as a result of the coding to the synthesizing unit 13 as a base stream.
In step S2, the enhancement coding unit 12 performs enhancement stream generation processing to generate an enhancement stream from an enhancement image input from the outside. A detail of the enhancement stream generation processing will be described with reference to Fig. 32 described later.
In step S3, the synthesizing unit 13 synthesizes a base stream supplied by the base coding unit 11 and an enhancement stream supplied by the enhancement coding unit 12, adds a VPS or the like, and generates a coded stream of a whole hierarchy. The synthesizing unit 13 supplies the coded stream of the whole hierarchy to the transmission unit 14.
In step S4, the transmission unit 14 transmits the coded stream of the whole hierarchy, which stream is supplied by the synthesizing unit 13, to a decoding apparatus described later.
Fig. 32 is a flowchart for describing a detail of the enhancement stream generation processing in step S2 in Fig. 31.

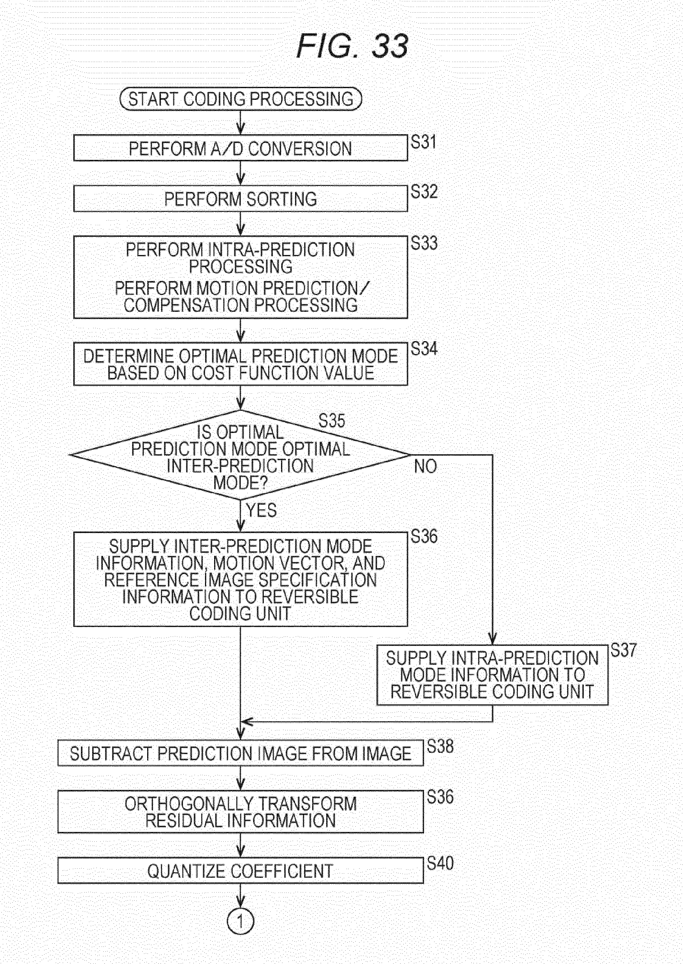

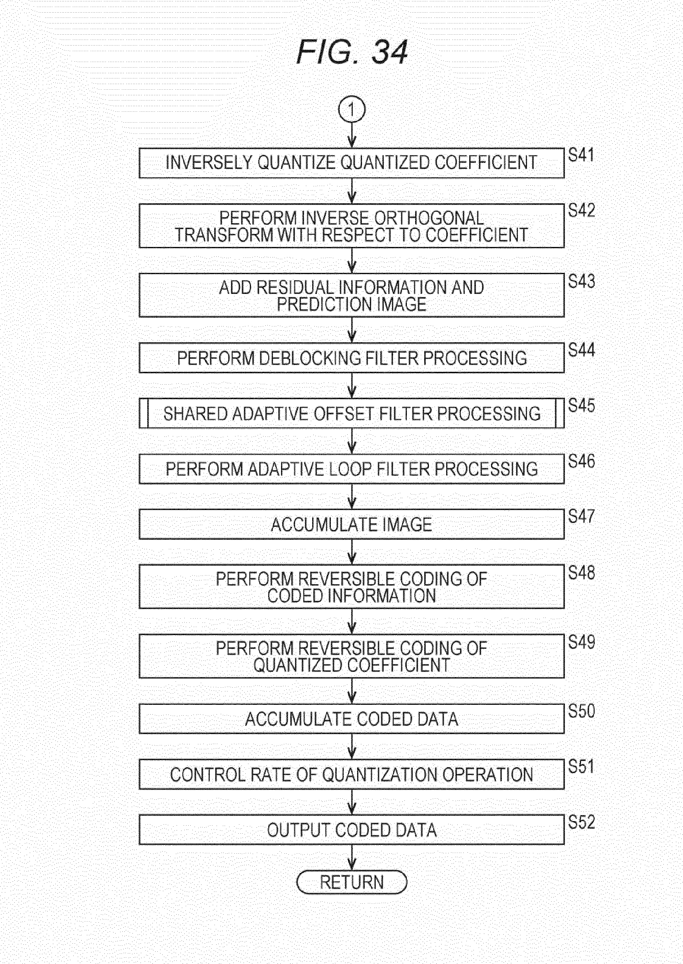

In step S11 in Fig. 32, the coding unit 21 of the enhancement coding unit 12 performs coding processing to code an enhancement image in a unit of a frame, which image is input as an input signal from the outside, by a system compliant with the HEVC system. A detail of the coding processing will be described with reference to Fig. 33 and Fig. 34 described later.

In step S12, the setting unit 22 sets an SPS. In step S13, the setting unit 22 sets a PPS. In step S14, the setting unit 22 generates an enhancement stream from the set SPS and PPS and the coded data supplied by the coding unit 21.

In step S15, the setting unit 22 supplies the enhancement stream to the synthesizing unit 13 and ends the processing.

Fig. 33 and Fig. 34 are flowcharts for describing a detail of the coding processing in step S11 in Fig. 32.

In step S31 in Fig. 33, the A/D conversion unit 31 of the coding unit 21 performs A/D conversion of the image in a unit of a frame, which image is input as an input signal, and outputs and stores the converted image into the screen sorting buffer 32.

In step S32, according to a GOP structure, the screen sorting buffer 32 sorts the stored image in a frame, which image is in an order of display, into an order of coding. The screen sorting buffer 32 supplies the image in a unit of frame which image is after the sorting to the operation unit 33, the intra-prediction unit 46, and the motion prediction/compensation unit 47.

In step S33, the intra-prediction unit 46 performs intra-prediction processing in all intra-prediction modes to be candidates. Also, based on the image read from the screen sorting buffer 32 and the prediction image generated as a result of the intra-prediction processing, the intra-prediction unit 46 calculates a cost function value with respect to all intra-prediction modes to be candidates. Then, the intra-prediction unit 46 determines an intra-prediction mode with the smallest cost function value as an optimal intra-prediction mode. The intra-prediction unit 46 supplies a prediction image generated in the optimal intra-prediction mode and a corresponding cost function value to the prediction image selection unit 48.

Also, the motion prediction/compensation unit 47 performs motion prediction/compensation processing of all inter-prediction modes to be candidates. Also, based on the image supplied by the screen sorting buffer 32 and the prediction image, the motion prediction/compensation unit 47 calculates cost function values for all inter-prediction modes to be candidates and determines an inter-prediction mode with the smallest cost function value as an optimal inter-prediction mode. Then, the motion prediction/compensation unit 47 supplies the cost function value of the optimal inter-prediction mode and a corresponding prediction image to the prediction image selection unit 48.

In step S34, based on the cost function values supplied by the intra-prediction unit 46 and the motion prediction/compensation unit 47 in the processing in step S33, the prediction image selection unit 48 determines one, which includes a smaller cost function value, of the optimal intra-prediction mode and the optimal inter-prediction mode as an optimal prediction mode. Then, the prediction image selection unit 48 supplies a prediction image in the optimal prediction mode to the operation unit 33 and the adding unit 40.

In step S35, the prediction image selection unit 48 determines whether the optimal prediction mode is an optimal inter-prediction mode. When it is determined in step S35 that the optimal prediction mode is the optimal inter-prediction mode, the prediction image selection unit 48 notifies selection of a prediction image generated in the optimal inter-prediction mode to the motion prediction/compensation unit 47.

Then, in step S36, the motion prediction/compensation unit 47 supplies inter-prediction mode information, a motion vector, and reference image specification information to the reversible coding unit 36 and the processing goes to step S38.

On the other hand, when it is determined in step S35 that the optimal prediction mode is not the optimal inter-prediction mode, that is, when the optimal prediction mode is an optimal intra-prediction mode, the prediction image selection unit 48 notifies selection of a prediction image generated in the optimal intra-prediction mode to the intra-prediction unit 46. Then, in step S37, the intra-prediction unit 46 supplies the intra-prediction mode information to the reversible coding unit 36 and the processing goes to step S38.

In step S38, the operation unit 33 performs coding by subtracting the prediction image supplied by the prediction image selection unit 48 from the image supplied by the screen sorting buffer 32. The operation unit 33 outputs an image acquired as a result of the coding to the orthogonal transform unit 34 as residual information.

In step S39, the orthogonal transform unit 34 orthogonally transforms the residual information supplied by the operation unit 33 and supplies an orthogonal transform coefficient acquired as a result of the orthogonal transform to the quantization unit 35.

In step S40, the quantization unit 35 quantizes the coefficient supplied by the orthogonal transform unit 34 and supplies a coefficient acquired as a result of the quantization to the reversible coding unit 36 and the inverse quantization unit 38.

In step S41 in Fig. 34, the inverse quantization unit 38 inversely quantizes the quantized coefficient supplied by the quantization unit 35 and supplies an orthogonal transform coefficient acquired as a result of the inverse-quantization to the inverse orthogonal transform unit 39.

In step S42, the inverse orthogonal transform unit 39 performs inverse orthogonal transform with respect to the orthogonal transform coefficient supplied by the inverse quantization unit 38 and supplies residual information acquired as a result of the inverse orthogonal transform to the adding unit 40.

In step S43, the adding unit 40 adds the residual information supplied by the inverse orthogonal transform unit 39 and the prediction image supplied by the prediction image selection unit 48 and acquires a partially-decoded image. The adding unit 40 supplies the acquired image to the deblocking filter 41 and to the frame memory 44.

In step S44, the deblocking filter 41 performs deblocking filter processing with respect to the partially-decoded image supplied by the adding unit 40. The deblocking filter 41 supplies an image acquired as a result of the processing to the adaptive offset filter 42.

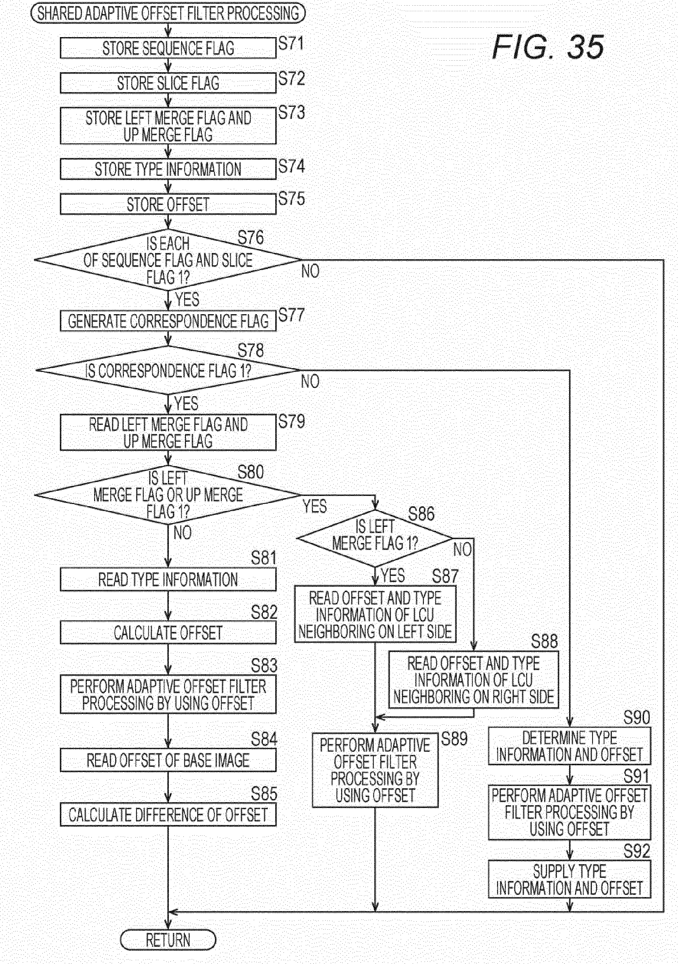

In step S45, with reference to the control information and the offset supplied by the base coding unit 11 in Fig. 7, the adaptive offset filter 42 performs, with respect to the image supplied by the deblocking filter 41, shared adaptive offset filter processing to perform adaptive offset filter processing in each LCU. A detail of the shared adaptive offset filter processing will be described later with reference to Fig. 35.

In step S46, the adaptive loop filter 43 performs the adaptive loop filter processing in each LCU with respect to the image supplied by the adaptive offset filter 42. The adaptive loop filter 43 supplies an image acquired as a result of the processing to the frame memory 44. Also, the adaptive loop filter 43 supplies a filter coefficient used in the adaptive loop filter processing to the reversible coding unit 36.

In step S47, the frame memory 44 accumulates the image supplied by the adaptive loop filter 43 and the image supplied by the adding unit 40. The image accumulated in the frame memory 44 is output as a reference image to the intra-prediction unit 46 or the motion prediction/compensation unit 47 through the switch 45.

In step S48, the reversible coding unit 36 performs reversible coding with the intra-prediction mode information or the inter-prediction mode information, the motion vector and the reference image specification information, the offset and the type information or the generation information, the correspondence flag, and the filter coefficient as coded information.

In step S49, the reversible coding unit 36 performs reversible coding of the quantized coefficient supplied by the quantization unit 35. Then, the reversible coding unit 36 generates coded data from the coded information reversibly coded in the processing in step S48 and the reversely coded coefficient and supplies the generated coded data to the accumulation buffer 37.

In step S50, the accumulation buffer 37 temporarily accumulates the coded data supplied by the reversible coding unit 36.

In step S51, based on the coded data accumulated in the accumulation buffer 37, the rate control unit 49 controls a rate of a quantization operation performed by the quantization unit 35 in such a manner that overflow or underflow is not generated.

In step S52, the accumulation buffer 37 outputs the stored coded data to the setting unit 22 in Fig. 15. Then, processing goes back to step S11 in Fig. 32 and goes to step S12.

Note that in the coding processing in Fig. 33 and Fig. 34, in order to simplify the description, it is assumed that the intra-prediction processing and the motion prediction/compensation processing are constantly performed. However, actually, only one of these kinds of processing may be performed according to a picture type or the like.

Fig. 35 is a flowchart for describing a detail of the shared adaptive offset filter processing in step S45 in Fig. 34.

In step S71 in Fig. 35, the sequence buffer 71 of the offset buffer 50 stores a sequence flag in the control information supplied by the base coding unit 11 in Fig. 7. In step S72, the slice buffer 72 stores a slice flag in the control information. In step S73, the merge buffer 73 stores a left merge flag and an up merge flag.

In step S74, the type buffer 74 stores type information in the control information. In step S75, the value buffer 75 stores an offset of the base image supplied by the base coding unit 11.

In step S76, the on/off setting unit 81 reads a sequence flag from the sequence buffer 71 and reads a slice flag from the slice buffer 72. Then, the on/off setting unit 81 determines whether each of the sequence flag and the slice flag is 1. When it is determined in step S76 that each of the sequence flag and the slice flag is 1, the on/off setting unit 81 determines to perform adaptive offset processing and instructs the processing unit 84 to perform the adaptive offset processing.

Then, in step S77, based on the instruction to perform the adaptive offset processing, which instruction is given by the on/off setting unit 81, and a kind of scalability function, the processing unit 84 generates a correspondence flag. In step S78, the processing unit 84 determines whether the generated correspondence flag is 1. When it is determined that the correspondence flag is 1, the processing goes to step S79.

In step S79, the merge setting unit 82 reads a left merge flag and an up merge flag from the merge buffer 73 and supplies the read flags to the processing unit 84. In step S80, the processing unit 84 determines whether the left merge flag or the up merge flag supplied by the merge setting unit 82 is 1.

When it is determined in step S80 that each of the left merge flag and the up merge flag is not 1, the type setting unit 83 reads type information from the type buffer 74 and supplies the type information to the processing unit 84 in step S81.

In step S82, the processing unit 84 calculates an offset for an LCU to be processed in adaptive offset processing of a kind indicated by the type information supplied by the type setting unit 83 and supplies the offset to the generation unit 86. Then, the processing unit 84 determines the type information supplied by the type setting unit 83 as type information of the LCU to be processed. The processing unit 84 supplies and stores the type information and the offset of the LCU to be processed into the offset buffer 85.

In step S83, by using the offset calculated in step S82, the processing unit 84 performs, with respect to the image after the adaptive deblocking filter processing by the deblocking filter 41, adaptive offset filter processing of a kind indicated by the type information read in step S81. Then, the processing unit 84 supplies the image after the adaptive offset filter processing to the adaptive loop filter 43 in Fig. 16.

In step S84, the generation unit 86 reads an offset of the base image from the value buffer 75. In step S85, the generation unit 86 calculates a difference between the read offset of the base image and an offset of the enhancement image supplied by the processing unit 84 and supplies the difference as generation information to the reversible coding unit 36 in Fig. 16. Then, the processing goes back to step S45 in Fig. 34 and goes to step S46.

On the other hand, when it is determined in step S80 that the left merge flag or the up merge flag is 1, the processing unit 84 determines whether the left merge flag is 1 in the step S86. When it is determined in step S86 that the left merge flag is 1, the processing unit 84 reads, from the offset buffer 85, an offset and type information of an LCU neighboring on a left side of the LCU to be processed and determines the read offset and type information as an offset and type information of the LCU to be processed in step S87. The processing unit 84 supplies and stores the type information and the offset of the LCU to be processed into the offset buffer 85. Then, the processing goes to step S89.

Also, when it is determined in step S86 that the left merge flag is not 1, that is, when the up merge flag is 1, the processing unit 84 reads, from the offset buffer 85, an offset and type information of an LCU neighboring on an upper side of the LCU to be processed and determines the read offset and type information as an offset and type information of the LCU to be processed in step S88. The processing unit 84 supplies and stores the type information and the offset of the LCU to be processed into the offset buffer 85. Then, the processing goes to step S89.

In step S89, by using the offset read in step S87 or S88, the processing unit 84 performs, with respect to the image after the adaptive deblocking filter processing, adaptive offset filter processing of a kind indicated by the type information read in step S87 or S88. Then, the processing unit 84 supplies the image after the adaptive offset filter processing to the adaptive loop filter 43. Then, the processing goes back to step S45 in Fig. 34 and goes to step S46.

When it is determined in step S78 that the correspondence flag is not 1, the processing goes to step S90. In step S90, by performing adaptive offset filter processing of all kinds and offsets to be candidates, the processing unit 84 determines type information, which indicates a kind, and an offset with the smallest cost function as type information and an offset of the LCU to be processed. The processing unit 84 supplies and stores the type information and the offset of the LCU to be processed into the offset buffer 85.

In step S91, by using the offset determined in step S90, the processing unit 84 performs, with respect to the image after the adaptive deblocking filter processing, adaptive offset filter processing of a kind indicated by the type information determined in step S90. Then, the processing unit 84 supplies the image after the adaptive offset filter processing to the adaptive loop filter 43.

In step S92, the processing unit 84 supplies the type information and the offset determined in step S90 to the generation unit 85. Then, the generation unit 85 supplies the type information and the offset to the reversible coding unit 36. Then, the processing goes back to step S45 in Fig. 34 and goes to step S46.

On the other hand, when it is determined in step S76 that the sequence flag or the slice flag is not 1, the adaptive offset filter processing is not performed and the processing unit 84 supplies the image supplied by the deblocking filter 41 to the adaptive loop filter 43. Then, the processing goes back to step S45 in Fig. 34 and goes to step S46.

As described above, based on the control information of the base image, the coding apparatus 10 performs the adaptive offset processing with respect to the enhancement image. Thus, the control information can be shared in the base layer and the enhancement layer. Accordingly, it is not necessary to include control information of the enhancement image in the enhancement stream, and thus, coding efficiency can be improved.

Also, when the correspondence flag is 1 and the left merge flag and the up merge flag are 0, the coding apparatus 10 generates generation information and transmits the generation information instead of the offset of the enhancement image. Thus, coding efficiency can be improved.

[Configuration example of first embodiment of decoding apparatus]

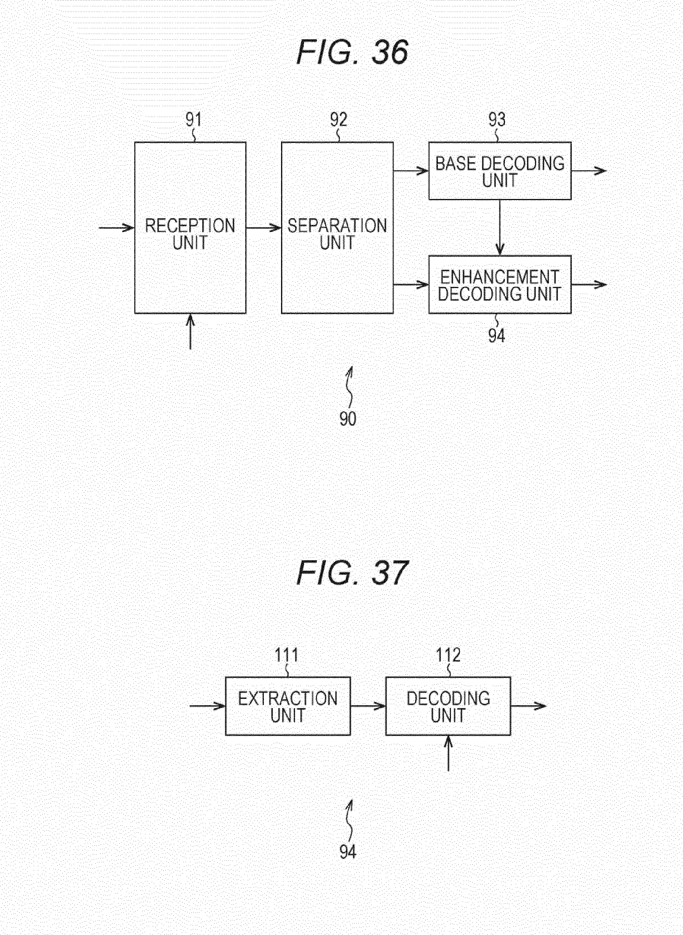

Fig. 36 is a block diagram illustrating a configuration example of the first embodiment of the decoding apparatus to which the present technique is applied. The decoding apparatus decodes a coded stream of a whole hierarchy transmitted from the coding apparatus 10 in Fig. 7.

A decoding apparatus 90 in Fig. 36 includes a reception unit 91, a separation unit 92, a base decoding unit 93, and an enhancement decoding unit 94.

The reception unit 91 receives a coded stream of a whole hierarchy transmitted from the coding apparatus 10 in Fig. 7 and supplies the received coded stream to the separation unit 92.

The separation unit 92 extracts a VPS from the coded stream supplied by the reception unit 91 and recognizes whether there is a reference layer in an enhancement stream based on a difference (diff_ref_layer) included in the VPS. Here, the coding apparatus 10 sets a base layer as a reference layer in the enhancement stream. Thus, the separation unit 92 recognizes that there is a reference layer.

When it is recognized that there is a reference layer, the separation unit 92 instructs the base decoding unit 93, which decodes a coded stream in the reference layer, to supply control information and an offset to the enhancement decoding unit 94 which decodes an enhancement stream.

In addition, the separation unit 92 separates a base stream from the coded stream of the whole hierarchy and supplies the base stream to the base decoding unit 93. Also, the separation unit 92 separates an enhancement stream and supplies the enhancement stream to the enhancement decoding unit 94.

The base decoding unit 93 is configured similarly to a decoding apparatus of a conventional HEVC system. The base decoding unit 93 decodes the base stream, which is supplied by the separation unit 92, by the HEVC system and generates a base image. However, the base decoding unit 93 supplies the control information and the offset used in the decoding of the base image to the enhancement decoding unit 94. The base decoding unit 93 outputs the generated base image.

The enhancement decoding unit 94 decodes the enhancement stream supplied by the separation unit 92 by a system compliant with the HEVC system and generates an enhancement image. Here, the enhancement decoding unit 94 decodes the enhancement stream with reference to the control information and the offset supplied by the base decoding unit 93. The enhancement decoding unit 94 outputs the generated enhancement image.

[Configuration example of enhancement decoding unit]

Fig. 37 is a block diagram illustrating a configuration example of the enhancement decoding unit 94 in Fig. 36.

The enhancement decoding unit 94 in Fig. 37 includes the extraction unit 111 and the decoding unit 112.

The extraction unit 111 of the enhancement decoding unit 94 extracts an SPS, a PPS, coded data, or the like from the enhancement stream supplied by the separation unit 92 in Fig. 36 and supplies the extracted SPS, PPS, coded data, or the like to the decoding unit 112.

With reference to the control information and the offset of the base image supplied by the base decoding unit 93 in Fig. 36, the decoding unit 112 decodes the coded data supplied by the extraction unit 111 by a system compliant with the HEVC system. Here, when necessary, the decoding unit 112 refers to the SPS, the PPS, or the like supplied by the extraction unit 111. The decoding unit 112 outputs an image acquired as a result of the decoding as an enhancement image.

[Configuration example of decoding unit]

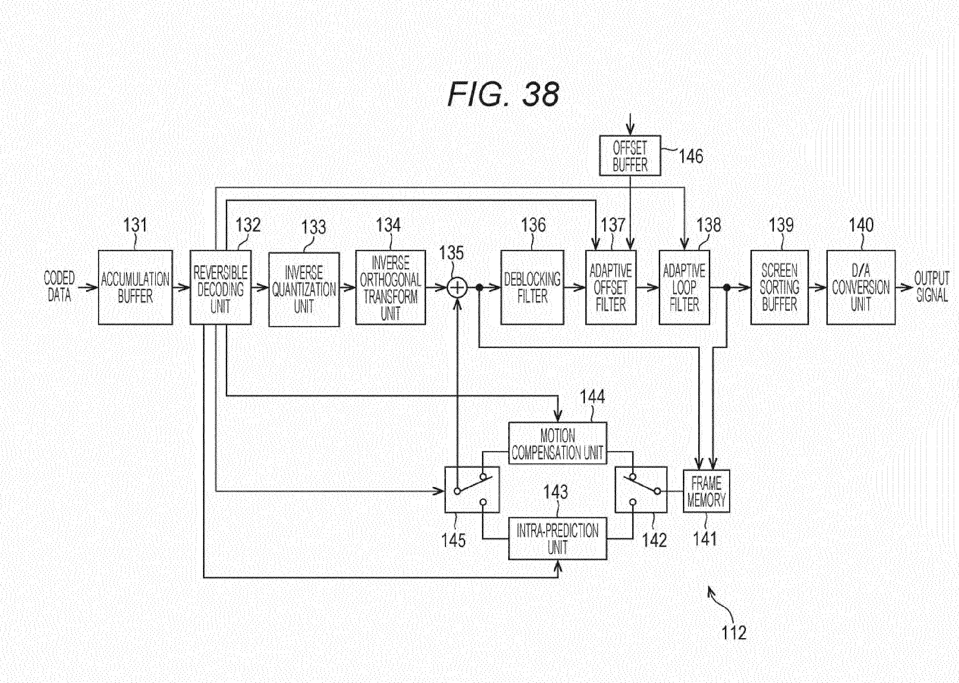

Fig. 38 is a block diagram illustrating a configuration example of the decoding unit 112 in Fig. 37.

The decoding unit 112 in Fig. 38 includes an accumulation buffer 131, a reversible decoding unit 132, an inverse quantization unit 133, an inverse orthogonal transform unit 134, an adding unit 135, a deblocking filter 136, an adaptive offset filter 137, an adaptive loop filter 138, a screen sorting buffer 139, a D/A conversion unit 140, a frame memory 141, a switch 142, an intra-prediction unit 143, a motion compensation unit 144, a switch 145, and an offset buffer 146.

The accumulation buffer 131 of the decoding unit 112 receives coded data from the extraction unit 111 in Fig. 37 and accumulates the coded data. The accumulation buffer 131 supplies the accumulated coded data to the reversible decoding unit 132.

By performing reversible decoding such as variable length decoding or arithmetic decoding with respect to the coded data from the accumulation buffer 131, the reversible decoding unit 132 acquires a quantized coefficient and coded information. The reversible decoding unit 132 supplies the quantized coefficient to the inverse quantization unit 133. Also, the reversible decoding unit 132 supplies intra-prediction mode information as the coded information to the intra-prediction unit 143 and supplies a motion vector, inter-prediction mode information, reference image specification information, or the like to the motion compensation unit 144.

Also, the reversible decoding unit 132 supplies the intra-prediction mode information or the inter-prediction mode information as the coded information to the switch 145. The reversible decoding unit 132 supplies, as the coded information, generation information or an offset and type information, and a correspondence flag to the adaptive offset filter 137 and supplies a filter coefficient to the adaptive loop filter 138.

The inverse quantization unit 133, the inverse orthogonal transform unit 134, the adding unit 135, the deblocking filter 136, the adaptive offset filter 137, the adaptive loop filter 138, the frame memory 141, the switch 142, the intra-prediction unit 143, and the motion compensation unit 144 respectively perform processing similar to that of the inverse quantization unit 38, the inverse orthogonal transform unit 39, the adding unit 40, the deblocking filter 41, the adaptive offset filter 42, the adaptive loop filter 43, the frame memory 44, the switch 45, the intra-prediction unit 46, and the motion prediction/compensation unit 47 in Fig. 16, whereby an image is decoded.

More specifically, the inverse quantization unit 133 inversely quantizes the quantized coefficient from the reversible decoding unit 132 and supplies an orthogonal transform coefficient acquired as a result of the inverse quantization to the inverse orthogonal transform unit 134.

The inverse orthogonal transform unit 134 performs inverse orthogonal transform with respect to the orthogonal transform coefficient from the inverse quantization unit 133. The inverse orthogonal transform unit 134 supplies residual information acquired as a result of the inverse orthogonal transform to the adding unit 135.

The adding unit 135 functions as a decoding unit. By adding the residual information, which is supplied by the inverse orthogonal transform unit 134 as an image to be decoded, and the prediction image supplied by the switch 145, the adding unit 135 performs decoding. The adding unit 135 supplies an image acquired as a result of the decoding to the deblocking filter 136 and to the frame memory 141. Note that when no prediction image is supplied by the switch 145, the adding unit 135 supplies the image, which is the residual information supplied by the inverse orthogonal transform unit 134, to the deblocking filter 136 as an image acquired as a result of the decoding and accumulates the image in the frame memory 141.

The deblocking filter 136 performs adaptive deblocking filter processing with respect to the image supplied by the adding unit 135 and supplies an image acquired as a result of the processing to the adaptive offset filter 137.

The adaptive offset filter 137 reads control information and an offset of the base image from the offset buffer 146. By using the control information and the offset of the base image and by using the generation information or the offset and the type information, and the correspondence flag which are from the reversible decoding unit 132, the adaptive offset filter 137 performs the adaptive offset filter processing, in each LCU, with respect to the image from the deblocking filter 136. The adaptive offset filter 137 supplies the image after the adaptive offset filter processing to the adaptive loop filter 138.

By using the filter coefficient supplied by the reversible decoding unit 132, the adaptive loop filter 138 performs adaptive loop filter processing, in each LCU, with respect to the image supplied by the adaptive offset filter 137. The adaptive loop filter 138 supplies an image acquired as a result of the processing to the frame memory 141 and the screen sorting buffer 139.

The screen sorting buffer 139 stores, in a unit of a frame, the image which is supplied by the adaptive loop filter 138. The screen sorting buffer 139 sorts the stored image, which is in a unit of a frame and in an order of coding, into an original order of display and supplies the image to the D/A conversion unit 140.

The D/A conversion unit 140 performs D/A conversion of the image in a unit of a frame, which image is supplied by the screen sorting buffer 139, and outputs the image as an enhancement image. The frame memory 141 accumulates the image supplied by the adaptive loop filter 138 and the image by from the adding unit 135. The image accumulated in the frame memory 141 is read as a reference image and is supplied to the intra-prediction unit 143 or the motion compensation unit 144 through the switch 142.

By using the reference image read from the frame memory 141 through the switch 142, the intra-prediction unit 143 performs intra-prediction processing in an intra-prediction mode indicated by the intra-prediction mode information supplied by the reversible decoding unit 132. The intra-prediction unit 143 supplies a prediction image generated as a result of the processing to the switch 145.

The motion compensation unit 144 reads a reference image, which is specified by the reference image specification information supplied by the reference image setting unit 145, from the frame memory 141 through the switch 142. By using the motion vector and the reference image supplied by the reversible decoding unit 132, the motion compensation unit 144 performs motion compensation processing in an optimal inter-prediction mode indicated by the inter-prediction mode information supplied by the reversible decoding unit 132. The motion compensation unit 144 supplies a prediction image acquired as a result of the processing to the switch 145.

When the intra-prediction mode information is supplied by the reversible decoding unit 132, the switch 145 supplies, to the adding unit 135, the prediction image supplied by the intra-prediction unit 143. On the other hand, when the inter-prediction mode information is supplied by the reversible decoding unit 132, the switch 145 supplies, to the adding unit 135, the prediction image supplied by the motion compensation unit 144.

The offset buffer 146 stores the control information and the offset supplied by the base decoding unit 93 in Fig. 36.

[Configuration example of adaptive offset filter and offset buffer]

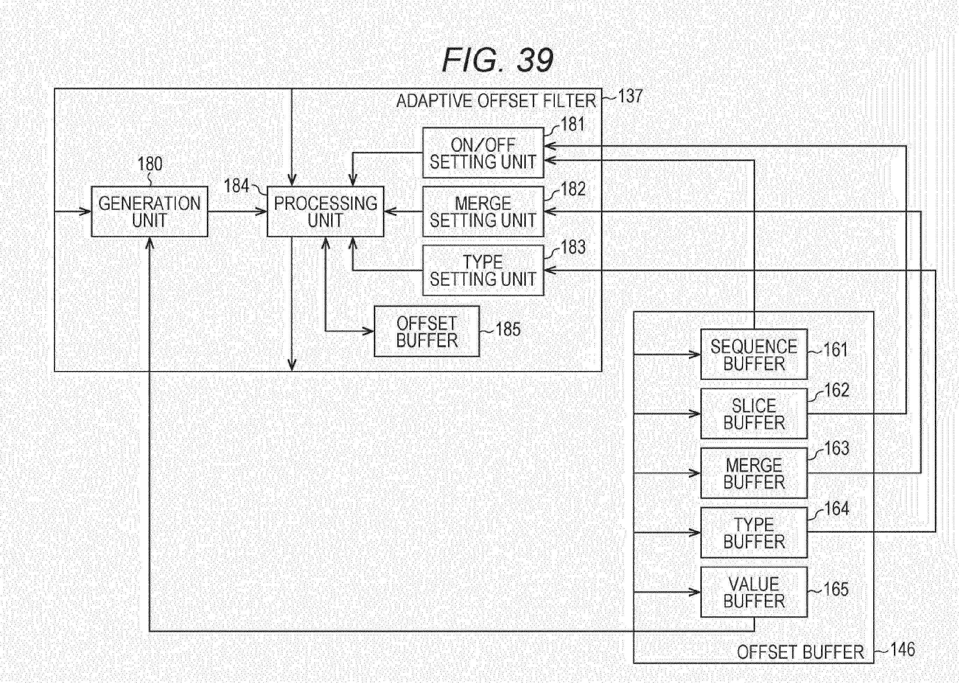

Fig. 39 is a block diagram illustrating configuration examples of the adaptive offset filter 137 and the offset buffer 146 in Fig. 38.

The offset buffer 146 in Fig. 39 includes a sequence buffer 161, a slice buffer 162, a merge buffer 163, a type buffer 164, and a value buffer 165.

The sequence buffer 161 stores a sequence flag in the control information supplied by the base decoding unit 93 in Fig. 36. The slice buffer 162 stores a slice flag in the control information. The merge buffer 163 stores a left merge flag and an up merge flag in the control information. The type buffer 164 stores type information in the control information. The value buffer 165 stores an offset of the base image supplied by the base decoding unit 93.

The adaptive offset filter 137 includes a generation unit 180, an on/off setting unit 181, a merge setting unit 182, a type setting unit 183, a processing unit 184, and an offset buffer 185.

The generation unit 180 of the adaptive offset filter 137 reads an offset of the base image from the value buffer 165 of the offset buffer 146. The generation unit 180 adds the read offset and the generation information supplied by the reversible decoding unit 132 in Fig. 38 and determines an added value acquired as a result of the adding as an offset of an enhancement image. The generation unit 180 supplies the determined offset to the processing unit 184.

Also, the generation unit 180 supplies, to the processing unit 184, an offset, type information, and a correspondence flag supplied by the reversible decoding unit 132.

The on/off setting unit 181 reads a sequence flag from the sequence buffer 161 and reads a slice flag from the slice buffer 162. Based on the sequence flag and the slice flag, the on/off setting unit 181 determines whether to perform adaptive offset filter processing. When it is determined to perform the adaptive offset filter processing, the on/off setting unit 181 instructs the processing unit 184 to perform the adaptive offset filter processing.

The merge setting unit 182 reads a left merge flag and an up merge flag from the merge buffer 163 and supplies the left merge flag and the up merge flag to the processing unit 184. The type setting unit 183 reads type information from the type buffer 164 and supplies the type information to the processing unit 184.

When the correspondence flag supplied by the generation unit 180 is 1 and the left merge flag or the up merge flag from the merge setting unit 182 is 1, the processing unit 184 reads, from the offset buffer 185, type information and an offset of a decoded image neighboring on a left side or an upper side of an LCU to be processed. Then, the processing unit 184 determines the read type information and offset as type information and an offset of the LCU to be processed.

On the other hand, when the correspondence flag is 1 and the left merge flag and the up merge flag are 0, the processing unit 184 determines the type information supplied by the type setting unit 183 as type information of the LCU to be processed and determines the offset supplied by the generation unit 180 as an offset of the LCU to be processed.

Also, when the correspondence flag is 0, the processing unit 184 determines the offset and the type information supplied by the generation unit 180 as an offset and type information of the LCU to be processed. Then, the processing unit 184 supplies and stores the type information and the offset of the LCU to be processed into the offset buffer 185.

By using the offset of the LCU to be processed, the processing unit 184 performs, with respect to the image from the deblocking filter 136 in Fig. 38, adaptive offset filter processing of a kind indicated by the type information of the LCU to be processed. Then, the processing unit 184 supplies the image after the adaptive offset filter processing to the adaptive loop filter 138 in Fig. 38.

[Description of processing in decoding apparatus]

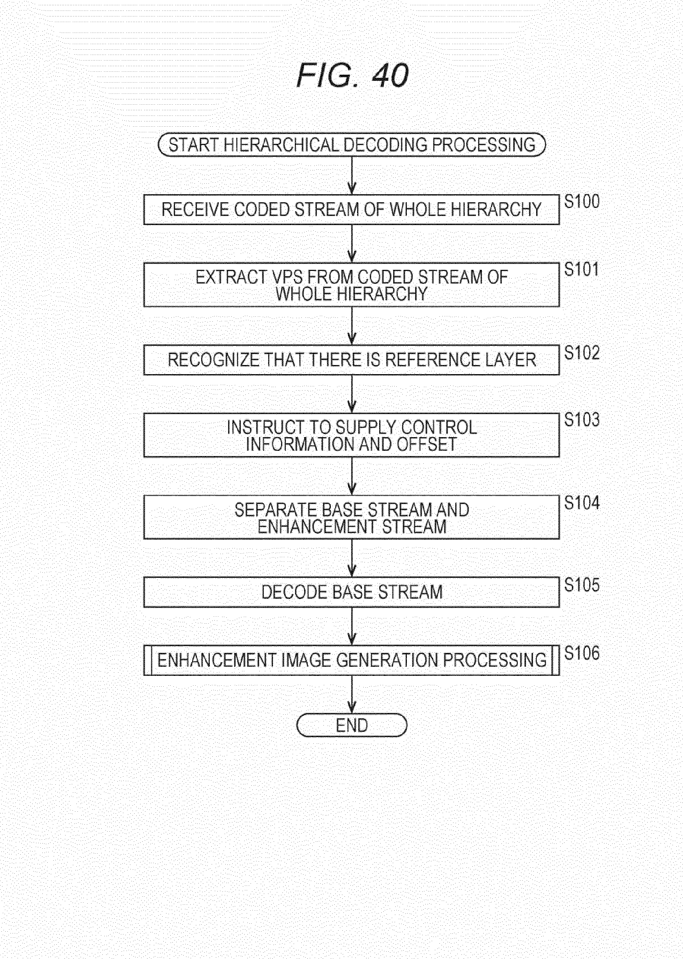

Fig. 40 is a flowchart for describing hierarchical decoding processing in the decoding apparatus 90 in Fig. 36.

In step S100 in Fig. 40, the reception unit 91 of the decoding apparatus 90 receives a coded stream of a whole hierarchy transmitted from the coding apparatus 10 in Fig. 7 and supplies the received coded stream to the separation unit 92. In step S101, the separation unit 92 extracts a VPS from the coded stream supplied by the reception unit 91.

In step S102, based on a difference (diff_ref_layer) included in the VPS, the separation unit 92 recognizes that there is a reference layer in an enhancement stream. In step S103, the separation unit 92 instructs the base decoding unit 93, which decodes a coded stream of a reference layer, to supply control information and an offset to the enhancement decoding unit 94 which decodes an enhancement stream.

In step S104, the separation unit 92 separates a base stream and an enhancement stream from a coded stream of the whole hierarchy. The separation unit 92 supplies the base stream to the base decoding unit 93 and supplies the enhancement stream to the enhancement decoding unit 94.

In step S105, the base decoding unit 93 decodes the base stream, which is supplied by the separation unit 92, by the HEVC system and generates a base image. Here, the base decoding unit 93 supplies the control information and the offset used in the decoding of the base image to the enhancement decoding unit 94. The base decoding unit 93 outputs the generated base image.

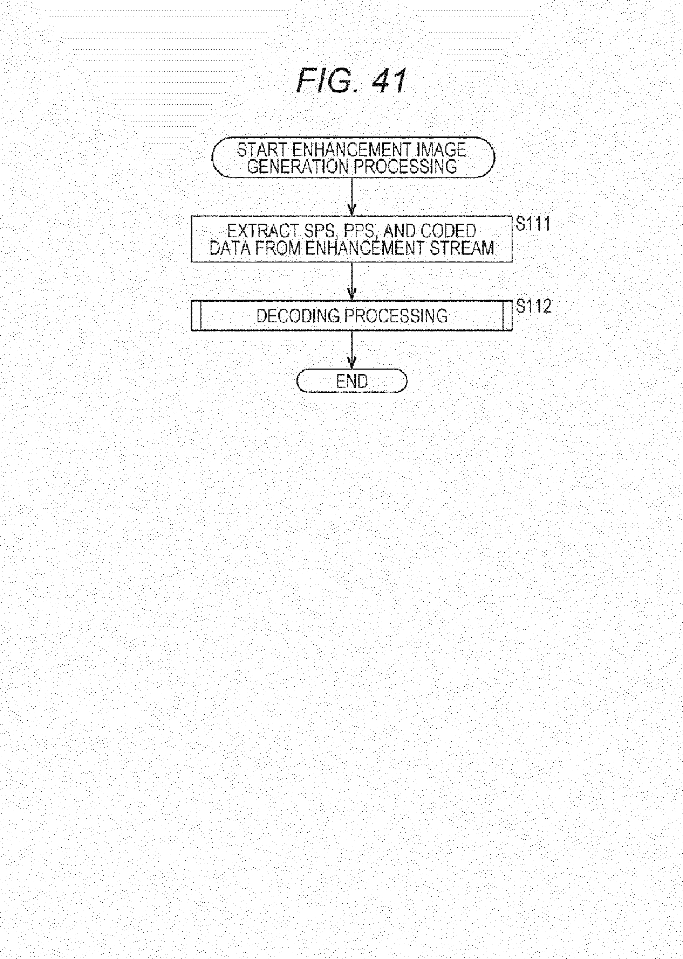

In step S106, with reference to the control information and the offset supplied by the base decoding unit 93, the enhancement decoding unit 94 performs enhancement image generation processing to generate an enhancement image from the enhancement stream supplied by the separation unit 92. A detail of the enhancement image generation processing will be described with reference to Fig. 41 described in the following.

Fig. 41 is a flowchart for describing the enhancement image generation processing by the enhancement decoding unit 94 in Fig. 37.

In step S111 in Fig. 41, the extraction unit 111 of the enhancement decoding unit 94 extracts an SPS, a PPS, coded data, or the like from the enhancement stream supplied by the separation unit 92 and supplies the extracted SPS, PPS, coded data, or the like to the decoding unit 112.

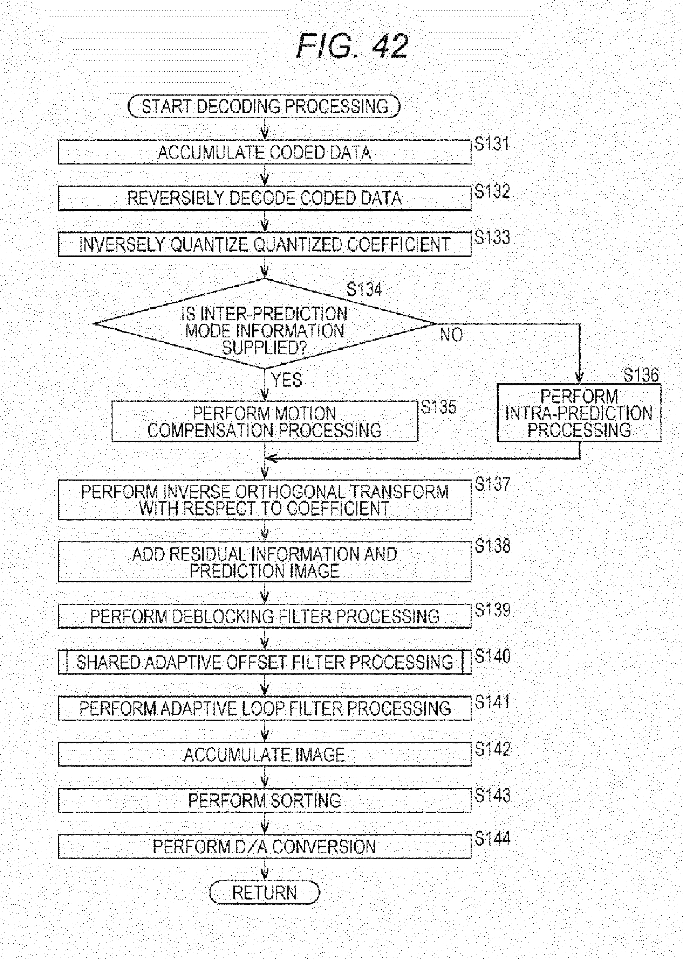

In step S112, when necessary, the decoding unit 112 refers to the SPS or PPS supplied by the extraction unit 111 or the control information, the offset, and the like supplied by the base decoding unit 93 and performs decoding processing to decode the coded data, which is supplied by the extraction unit 111, by a system compliant with the HEVC system. A detail of the decoding processing will be described with reference to Fig. 42 described in the following. Then, the processing is ended.

Fig. 42 is a flowchart for describing a detail of the decoding processing in step S112 in Fig. 41.

In step S131 in Fig. 42, the accumulation buffer 131 of the enhancement decoding unit 112 receives and accumulates coded data in a unit of a frame from the extraction unit 111 in Fig. 37. The accumulation buffer 131 supplies the accumulated coded data to the reversible decoding unit 132.

In step S132, the reversible decoding unit 132 reversibly decodes the coded data from the accumulation buffer 131 and acquires a quantized coefficient and coded information. The reversible decoding unit 132 supplies the quantized coefficient to the inverse quantization unit 133. Also, the reversible decoding unit 132 supplies intra-prediction mode information as the coded information to the intra-prediction unit 143 and supplies a motion vector, inter-prediction mode information, reference image specification information, or the like to the motion compensation unit 144.

Also, the reversible decoding unit 132 supplies the intra-prediction mode information or the inter-prediction mode information as the coded information to the switch 145. The reversible decoding unit 132 supplies, as the coded information, generation information or an offset and type information, and a correspondence flag to the adaptive offset filter 137 and supplies a filter coefficient to the adaptive loop filter 138.

In step S133, the inverse quantization unit 133 inversely quantizes the quantized coefficient from the reversible decoding unit 132 and supplies an orthogonal transform coefficient acquired as a result of the inverse quantization to the inverse orthogonal transform unit 134.

In step S134, the motion compensation unit 144 determines whether the inter-prediction mode information is supplied by the reversible decoding unit 132. When it is determined in step S134 that the inter-prediction mode information is supplied, the processing goes to step S135.

In step S135, based on the reference image specification information supplied by the reversible decoding unit 132, the motion compensation unit 144 reads a reference image and performs motion compensation processing in an optimal inter-prediction mode, which is indicated by the inter-prediction mode information, by using the motion vector and the reference image. The motion compensation unit 144 supplies a prediction image generated as a result of the processing to the adding unit 135 through the switch 145 and the processing goes to step S137.

On the other hand, when it is determined in step S134 that no inter-prediction mode information is supplied, that is, when the intra-prediction mode information is supplied to the intra-prediction unit 143, the processing goes to step S136.

In step S136, by using the reference image read from the frame memory 141 through the switch 142, the intra-prediction unit 143 performs intra-prediction processing in an intra-prediction mode indicated by the intra-prediction mode information. The intra-prediction unit 143 supplies a prediction image generated as a result of the intra-prediction processing to the adding unit 135 through the switch 145 and the processing goes to step S137.

In step S137, the inverse orthogonal transform unit 134 performs inverse orthogonal transform with respect to the orthogonal transform coefficient from the inverse quantization unit 133 and supplies residual information acquired as a result of the inverse orthogonal transform to the adding unit 135.

In step S138, the adding unit 135 adds the residual information supplied by the inverse orthogonal transform unit 134 and the prediction image supplied by the switch 145. The adding unit 135 supplies an image acquired as a result of the adding to the deblocking filter 136 and to the frame memory 141.

In step S139, the deblocking filter 136 performs deblocking filter processing with respect to the image supplied by the adding unit 135 and eliminates block distortion. The deblocking filter 136 supplies an image acquired as a result of the processing to the adaptive offset filter 137.

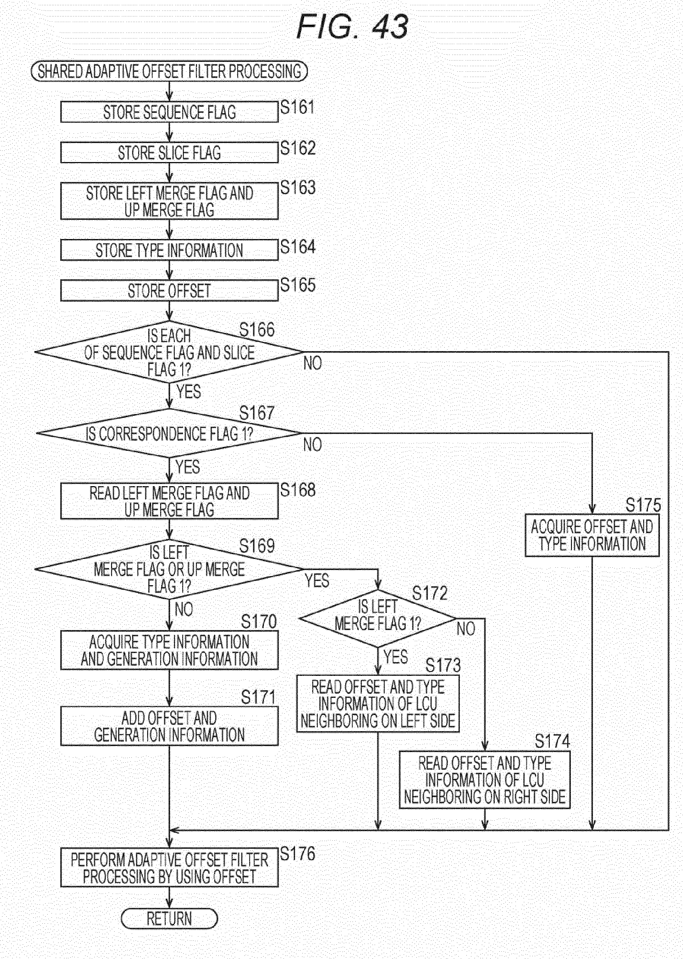

In step S140, with reference to the control information and the offset from the base decoding unit 93 and the generation information or the offset, the type information, and the correspondence flag which are from the reversible decoding unit 132, the adaptive offset filter 137 performs, with respect to the image from the deblocking filter 136, shared adaptive offset filter processing to perform the adaptive offset filter processing in each LCU. A detail of the shared adaptive offset filter processing will be described later with reference to Fig. 43.

In step S141, by using the filter coefficient supplied by the reversible decoding unit 132, the adaptive loop filter 138 performs the adaptive loop filter processing, in each LCU, with respect to the image supplied by the adaptive offset filter 137. The adaptive loop filter 138 supplies an image acquired as a result of the processing to the frame memory 141 and the screen sorting buffer 139.

In step S142, the frame memory 141 accumulates the image supplied by the adding unit 135 and the image supplied by the adaptive loop filter 138. The image accumulated in the frame memory 141 is supplied as a reference image to intra-prediction unit 143 or the motion compensation unit 144 through the switch 142.

In step S143, the screen sorting buffer 139 stores, in a unit of a frame, the image supplied by the adaptive loop filter 138, sorts the stored image, which is in a unit of a frame and in an order of coding, into an original order of display, and supplies the image to the D/A conversion unit 140.

In step S144, the D/A conversion unit 140 performs D/A conversion of an image in a unit of a frame which image is supplied by the screen sorting buffer 139 and outputs the converted image as an enhancement image. Then, the processing goes back to step S112 in Fig. 41 and is ended.

Fig. 43 is a flowchart for describing a detail of the shared adaptive offset filter processing in step S140 in Fig. 42.

In step S161 in Fig. 43, the sequence buffer 161 stores a sequence flag in the control information supplied by the base decoding unit 93 in Fig. 36. In step S162, the slice buffer 162 stores a slice flag in the control information. In step S163, the merge buffer 163 stores a left merge flag and an up merge flag in the control information.

In step S164, the type buffer 164 stores type information in the control information. In step S165, the value buffer 165 stores an offset supplied by the base decoding unit 93. In step S166, the on/off setting unit 181 reads a sequence flag from the sequence buffer 161 and reads a slice flag from the slice buffer 162. Then, the on/off setting unit 81 determines whether each of the sequence flag and the slice flag is 1.

When it is determined in step S166 that each of the sequence flag and the slice flag is 1, the on/off setting unit 181 determines to perform adaptive offset processing and instructs the processing unit 184 to perform the adaptive offset processing. Then, in step S167, the processing unit 184 determines whether the correspondence flag supplied by the reversible decoding unit 132 through the generation unit 180 is 1.

When it is determined in step S167 that the correspondence flag is 1, the merge setting unit 182 reads a left merge flag and an up merge flag and supplies the read flags to the processing unit 184 in step S168. In step S169, the processing unit 184 determines whether the left merge flag or the up merge flag is 1.

When it is determined in step S169 that the left merge flag and the up merge flag are not 1, the generation unit 180 acquires type information and generation information, which are supplied by the reversible decoding unit 132, in step S170.

In step S171, the generation unit 180 reads an offset from the value buffer 165 and adds the offset and the generation information. The generation unit 180 determines an added value acquired as a result of the adding as an offset of an LCU to be processed, determines the acquired type information as an offset of the LCU to be processed, and supplies them to the processing unit 184. Then, the processing goes to step S176.

On the other hand, when it is determined in step S169 that the left merge flag or the up merge flag is 1, the processing unit 184 determines whether the left merge flag is 1 in the step S172. When it is determined in step S172 that the left merge flag is 1, the processing unit 184 reads, from the offset buffer 185, an offset and type information of an LCU neighboring on a left side of the LCU to be processed and determines the read offset and type information as an offset and type information of the LCU to be processed in step S173. Then, the processing goes to step S176.

When the processing unit 184 determines in step S172 that the left merge flag is not 1, that is, when the up merge flag is 0, the processing goes to step S174. In step S174, the processing unit 184 reads, from the offset buffer 185, an offset and type information of an LCU neighboring on a right side of the LCU to be processed and determines the read offset and type information as an offset and type information of the LCU to be processed. Then, the processing goes to step S176.

On the other hand, when it is determined in step S167 that the correspondence flag is not 1, the generation unit 180 acquires the offset and the type information supplied by the reversible decoding unit 132 and supplies the acquired offset and type information to the processing unit 184 in step S175. Then, the processing unit 184 determines the offset and the type information supplied by the generation unit 180 as an offset and type information of the LCU to be processed. Then, the processing goes to step S176.

In step S176, by using the offset of the LCU to be processed, the processing unit 184 performs, with respect to the image from the deblocking filter 136 in Fig. 38, adaptive offset filter processing of a kind indicated by the type information of the LCU to be processed. Then, the processing unit 184 supplies the image after the adaptive offset filter processing to the adaptive loop filter 138 in Fig. 38. Also, the processing unit 184 supplies and stores the type information and the offset of the LCU to be processed into the offset buffer 185. Then, the processing goes to S140 in Fig. 42 and goes to step S141.

As described above, based on the control information of the base image, the decoding apparatus 90 performs the adaptive offset processing with respect to the enhancement image. Thus, the control information can be shared in the base layer and the enhancement layer. Accordingly, it is not necessary to include control information of the enhancement image in the enhancement stream, and thus, coding efficiency can be improved.

Also, when the correspondence flag is 1 and the left merge flag and the up merge flag are 0, the decoding apparatus 90 generates an offset of the enhancement image from the generation information and the offset of the base image and performs the adaptive offset filter processing based on the offset and the control information of the base image. Accordingly, the coding apparatus 10 can transmit the generation information instead of the offset of the enhancement image, and thus, coding efficiency can be improved.

Note that in the first embodiment, it is assumed that the number of layers is two. However, the number of layers may be equal to or more than two. Also, a reference layer may be set in a unit of a picture or may be set in a unit of a GOP.

Also, in the first embodiment, the base image is coded by the HEVC system but may be coded by an AVC system.

Moreover, in the first embodiment, the type information and the offset are set in the LCU but type information and an offset may be set in a unit of a region divided into a quad-tree. Also, a correspondence flag or a sequence flag may be included in the VPS.

<Application to multi-viewpoint image coding/multi-viewpoint image decoding>

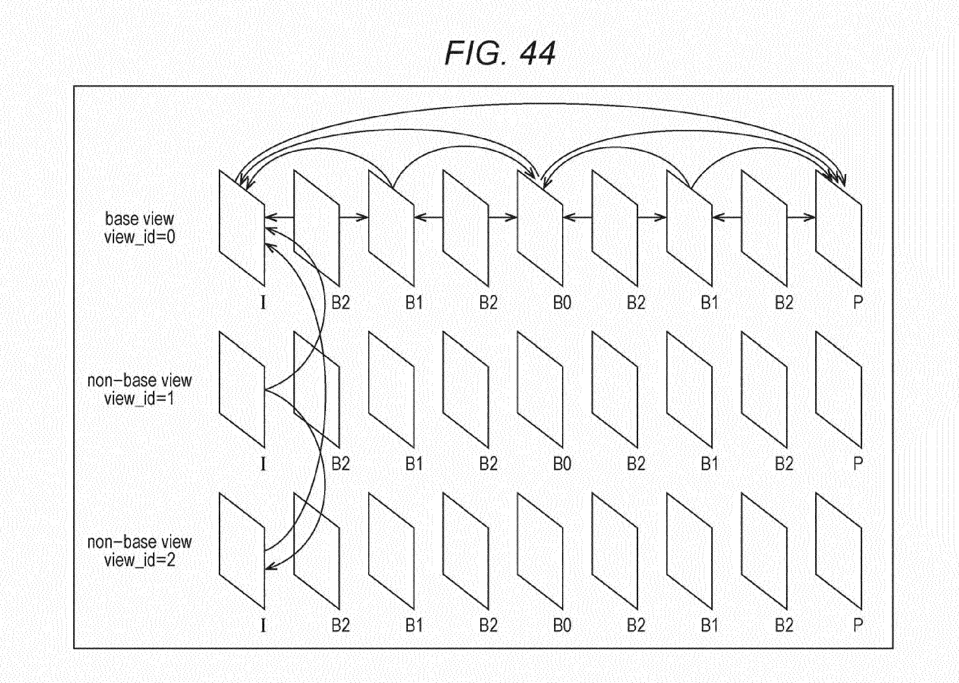

The series of processing described above can be applied to the multi-viewpoint image coding/multi-viewpoint image decoding. Fig. 44 is a view illustrating an example of a multi-viewpoint image coding system.

As illustrated in Fig. 44, a multi-viewpoint image includes images having a plurality of viewpoints and an image of one predetermined viewpoint among the plurality of viewpoints is specified as an image in base view. An image of each viewpoint other than the image in base view is treated as an image in non-base view. When the multi-viewpoint image coding is performed by a scalability function, an image in base view is coded as a base layer image and an image in non-base view is coded as an enhancement image.

In a case of performing multi-viewpoint image coding such as what is illustrated in Fig. 44, a difference in a quantization parameter can be obtained in each view (identical view):

    (1) base-view :

        (1-1) dQP(base view) = Current_CU_QP(base view) - LCU_QP(base view)
        (1-2) dQP(base view) = Current_CU_QP(base view) - Previsous_CU_QP(base view)
        (1-3) dQP(base view) = Current_CU_QP(base view) - Slice_QP(base view)

    (2)non-base-view:

        (2-1) dQP (non-base view) = Current_CU_QP(non-base view) - LCU_QP(non-base view)
        (2-2) dQP(non-base view) = CurrentQP(non-base view) - PrevisousQP(non-base view)
        (2-3) dQP (non-base view) = Current_CU_QP(non-base view) - Slice_QP(non-base view)

In a case of performing the multi-viewpoint image coding, a difference in a quantization parameter can be obtained in each view (different view):

    (3)base-view/non-base view:

        (3-1) dQP(inter-view) = Slice_QP(base view) - Slice_QP(non-base view)
        (3-2) dQP(inter-view) = LCU_QP(base view) - LCU_QP(non-base view)

    (4)non-base view/non-base view :

        (4-1) dQP(inter-view) = Slice_QP(non-base view i) - Slice_QP(non-base view j)
        (4-2) dQP(inter-view) = LCU_QP(non-base view i) - LCU_QP(non-base view j)

In this case it is also possible to combine and use (1) to (4) described above. For example, in the non-base view, a method of obtaining a difference in a quantization parameter at a slice level between the base view and the non-base view (combining 3-1 and 2-3) and a method of obtaining a difference in a quantization parameter at an LCU level between the base view and the non-base view (combining 3-2 and 2-1) can be considered. In such a manner, by repeatedly applying a difference, it is possible to improve coding efficiency even in a case of performing the multi-viewpoint coding.

Similarly to the above-described method, it is possible to set, with respect to each dQP, a flag to identify whether there is a dQP a value of which is not 0.

<Different example of coding by scalability function>

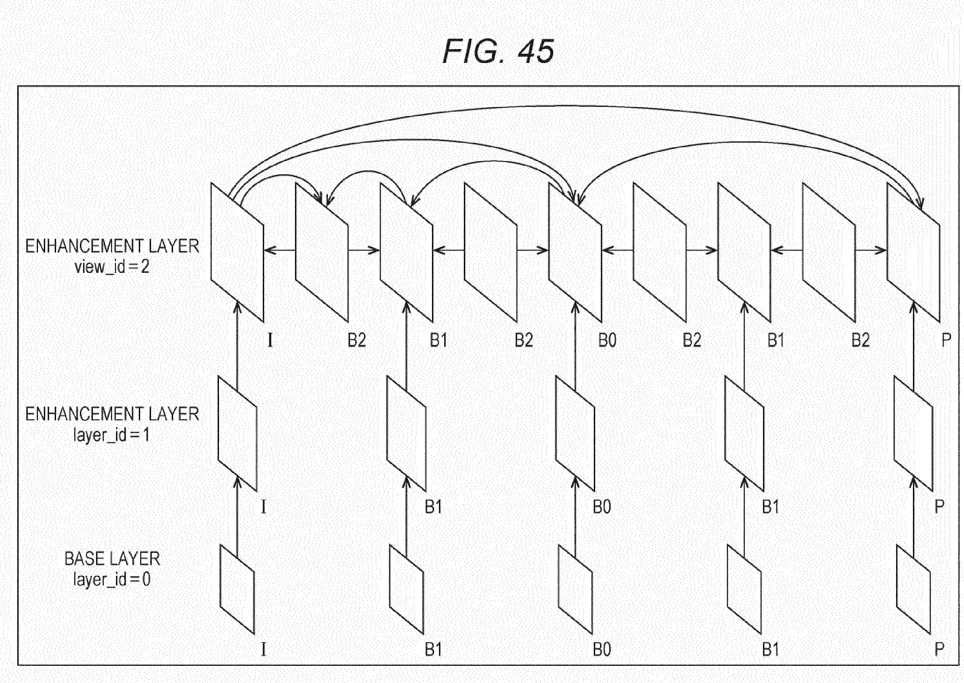

Fig. 45 is a view illustrating a different example of coding by a scalability function.

As illustrated in Fig. 45, in the coding by the scalability function, a difference in a quantization parameter can be obtained in each layer (identical layer):

(1)base-layer:

(1-1) dQP (base layer) = Current_CU_QP(base layer) - LCU_QP(base layer)
(1-2) dQP (base layer) = Current_CU_QP(base layer) - Previsous_CU_QP(base layer)
(1-3) dQP (base layer) = Current_CU_QP(base layer) - Slice_QP(base layer)

(2)non-base-layer:

(2-1)dQP(non-base layer) = Current_CU_QP(non-base layer) - LCU_QP(non-base layer)
(2-2)dQP(non-base layer) = CurrentQP(non-base layer) - PrevisousQP(non-base layer)
(2-3)dQP(non-base layer) = Current_CU_QP(non-base layer) - Slice_QP(non-base layer)

Also, in each layer (different layer), a difference in a quantization parameter can be obtained:

(3)base-layer/ non-base layer:

(3-1)dQP(inter-layer) = Slice_QP(base layer) - Slice_QP(non-base layer)
(3-2) dQP(inter-layer) = LCU_QP(base layer) - LCU_QP(non-base layer)

(4)non-base layer / non-base layer :

(4-1)dQP(inter-layer) = Slice_QP(non-base layer i) - Slice_QP(non-base layer j)
(4-2)dQP(inter-layer) = LCU_QP(non-base layer i) - LCU_QP(non-base layer j)

In this case it is also possible to combine and use (1) to (4) described above. For example, in the non-base layer, a method of obtaining a difference in a quantization parameter at a slice level between the base layer and the non-base layer (combining 3-1 and 2-3) and a method of obtaining a difference in a quantization parameter at an LCU level between the base layer and the non-base layer (combining 3-2 and 2-1) can be considered. In such a manner, by repeatedly applying a difference, it is possible to improve coding efficiency even in a case of performing hierarchical coding.

Similarly to the above-described method, it is possible to set, with respect to each dQP, a flag to identify whether there is a dQP a value of which is not 0.

<Third embodiment>

[Description of computer to which present technique is applied]

The series of above-described processing can be executed by hardware or by software. When the series of processing is executed by software, a program included in the software is installed into a computer. Here, the computer may be a computer embedded in special hardware or may be, for example, a general personal computer which can execute various functions by installation of various programs.

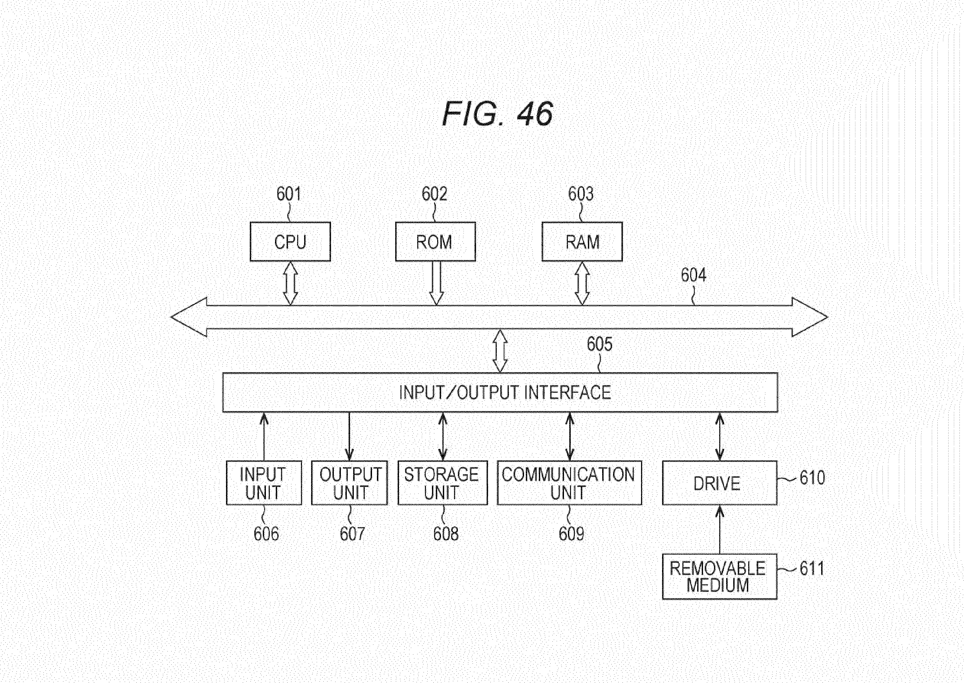

Fig. 46 is a block diagram illustrating a configuration example of hardware of a computer to execute the series of processing by a program.

In the computer, a central processing unit (CPU) 601, a read only memory (ROM) 602, and a random access memory (RAM) 603 are connected to each other by a bus 604.

To the bus 604, an input/output interface 605 is further connected. To the input/output interface 605, an input unit 606, an output unit 607, a storage unit 608, a communication unit 609, and a drive 610 are connected.

The input unit 606 includes a keyboard, a mouse, a microphone, or the like. The output unit 607 includes a display, a speaker, or the like. The storage unit 608 includes a hard disk, a nonvolatile memory, or the like. The communication unit 609 includes a network interface or the like. The drive 610 drives a removable medium 611 such as a magnetic disk, an optical disk, a magneto optical disk, or a semiconductor memory.

In the computer configured in such a manner, the CPU601 loads, for example, a program stored in the storage unit 608 into the RAM 603 through the input/output interface 605 and the bus 604 and executes the program, whereby the series of processing is performed.

For example, the program executed by the computer (CPU 601) is recorded in the removable medium 611, which functions as a package medium or the like, when being provided. Also, the program can be provided through a wired or wireless transmission medium such as a local area network, the Internet, or a digital satellite broadcast.

In the computer, by mounting the removable medium 611 to the drive 610, the program can be installed into the storage unit 608 through the input/output interface 605. Also, the program can be received in the communication unit 609 through the wired or wireless transmission medium and can be installed into the storage unit 608. In addition, the program can be previously installed into the ROM602 or the storage unit 608.

Note that the program executed by the computer may be a program in which processing is performed chronologically in an order described in the present description or may be a program in which processing is performed in parallel or at necessary timing such as when a call is performed.

<Fourth embodiment>

[Configuration example of television apparatus]

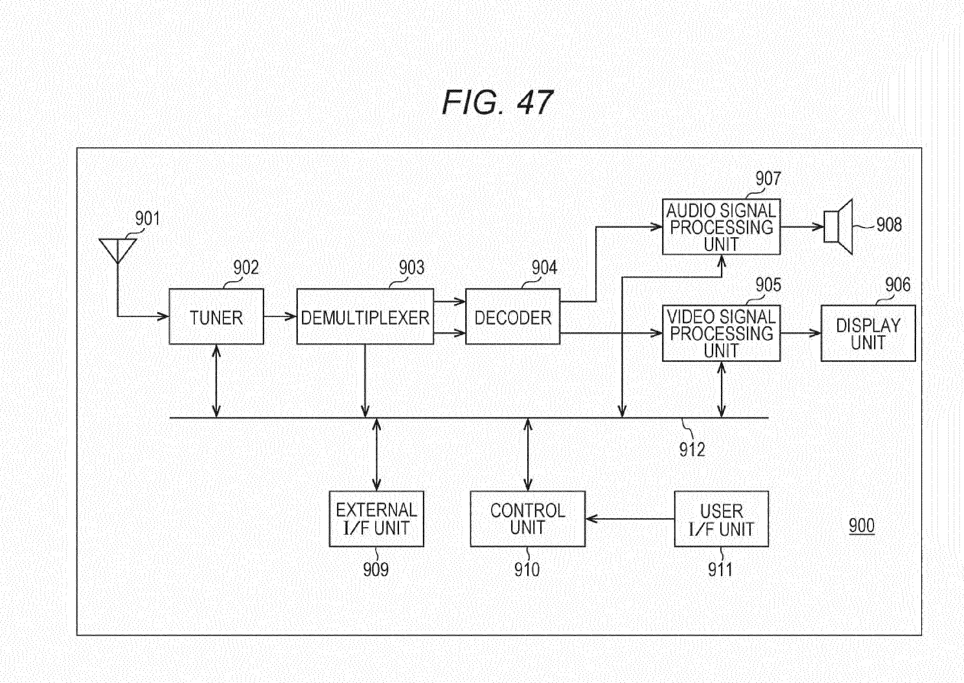

Fig. 47 is a view illustrating an example of a schematic configuration of a television apparatus to which the present technique is applied. A television apparatus 900 includes an antenna 901, a tuner 902, a demultiplexer 903, a decoder 904, a video signal processing unit 905, a display unit 906, an audio signal processing unit 907, a speaker 908, and an external interface unit 909. Moreover, the television apparatus 900 includes a control unit 910, a user interface unit 911, and the like.

The tuner 902 performs selection of an intended channel from a broadcast signal received by the antenna 901 and performs demodulation. Then, the tuner 902 outputs an acquired coded bit stream to the demultiplexer 903.

The demultiplexer 903 extracts a packet of a video or audio of a program to be viewed from the coded bit stream and outputs data of the extracted packet to the decoder 904. Also, the demultiplexer 903 supplies a packet of data such as an electronic program guide (EPG) to the control unit 910. Note that when scrambling is performed, the scrambling is released by the demultiplexer or the like.

The decoder 904 performs decoding processing of the packet and outputs video data generated by the decoding processing to the video signal processing unit 905 and outputs audio data to the audio signal processing unit 907.

The video signal processing unit 905 performs, with respect to the video data, noise elimination or video processing or the like corresponding to user setting. The video signal processing unit 905 generates video data of a program to be displayed on the display unit 906, image data according to processing based on an application supplied through a network, or the like. Also, the video signal processing unit 905 generates video data to display a menu screen or the like, for example, for selection of an item and superimposes the data on video data of a program. Based on the video data generated in such a manner, the video signal processing unit 905 generates a drive signal and drives the display unit 906.

Based on the drive signal from the video signal processing unit 905, the display unit 906 drives a display device (such as liquid crystal display element) and displays a video or the like of the program.

The audio signal processing unit 907 performs predetermined processing such as noise elimination with respect to the audio data, performs D/A conversion processing or amplification processing of the processed audio data, and supplies the audio data to the speaker 908, whereby audio output is performed.

The external interface unit 909 is an interface for connection with an external device or a network and performs transmission/reception of video data, audio data, or the like.

To the control unit 910, the user interface unit 911 is connected. The user interface unit 911 includes an operation switch, a remote control signal reception unit, or the like and supplies an operation signal corresponding to user operation to the control unit 910.

The control unit 910 includes a central processing unit (CPU), a memory, or the like. The memory stores a program executed by the CPU, various kinds of data necessary for the CPU to perform processing, EPG data, data acquired through a network, or the like. The program stored in the memory is read and executed by the CPU at predetermined timing such as activation of the television apparatus 900. By executing the program, the CPU controls each unit in such a manner that the television apparatus 900 performs an operation corresponding to user operation.

Note that in the television apparatus 900, a bus 912 is provided to connect the control unit 910 with the tuner 902, the demultiplexer 903, the video signal processing unit 905, the audio signal processing unit 907, the external interface unit 909, and the like.

In the television apparatus configured in such a manner, a function of a decoding apparatus (decoding method) of the present application is provided to the decoder 904. Thus, information to control filter processing of an image including a hierarchical structure can be shared.

<Fifth embodiment>

[Configuration example of mobile phone]

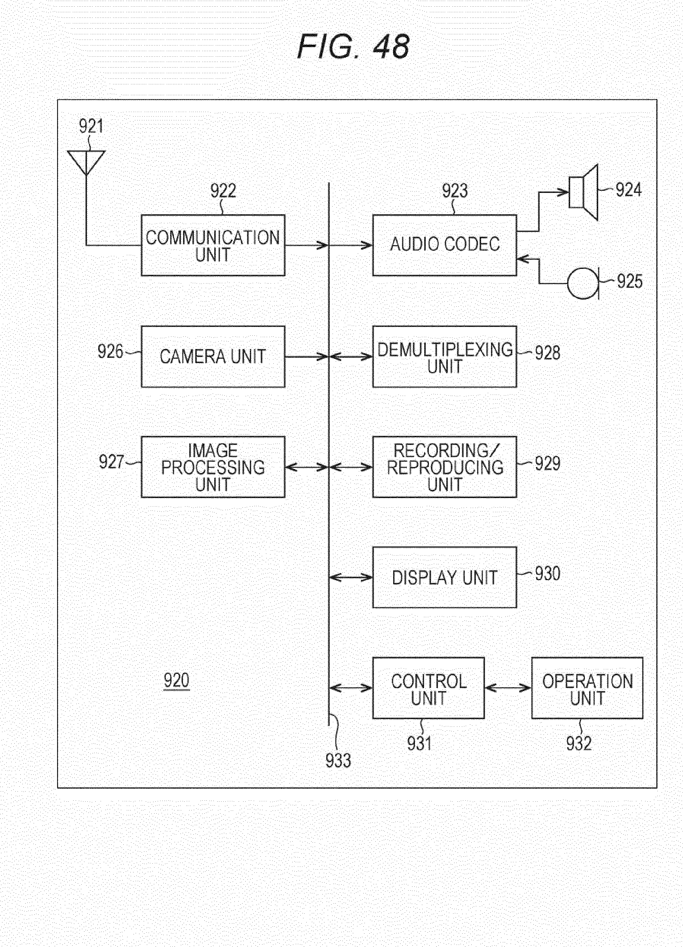

Fig. 48 is a view illustrating an example of a schematic configuration of a mobile phone to which the present technique is applied. A mobile phone 920 includes a communication unit 922, an audio codec 923, a camera unit 926, an image processing unit 927, a demultiplexing unit 928, a recording/reproducing unit 929, a display unit 930, and a control unit 931. These are connected to each other through a bus 933.

Also, to the communication unit 922, an antenna 921 is connected. To the audio codec 923, a speaker 924 and a microphone 925 are connected. In addition, to the control unit 931, an operation unit 932 is connected.

The mobile phone 920 performs various operations such as transmission/reception of an audio signal, transmission/reception of an email or image data, image shooting, or data recording in various modes such as an audio communication mode or a data communication mode.

In the audio communication mode, the audio codec 923 performs conversion into audio data or data compression with respect to an audio signal generated in the microphone 925 and supplies the audio data to the communication unit 922. The communication unit 922 performs modulation processing, frequency conversion processing, or the like of the audio data and generates a transmission signal. Also, the communication unit 922 supplies the transmission signal to the antenna 921 and transmits the transmission signal to a base station (not illustrated). Also, the communication unit 922 performs amplification, frequency conversion processing, demodulation processing, and the like of a reception signal received by the antenna 921 and supplies acquired audio data to the audio codec 923. The audio codec 923 performs expansion of the audio data or conversion of the audio data into an analog audio signal and outputs the audio signal to the speaker 924.

Also, when transmission of email is performed in the data communication mode, the control unit 931 receives character data input by operation in the operation unit 932 and displays the input character on the display unit 930. Also, the control unit 931 generates email data based on a user instruction in the operation unit 932 and supplies the email data to the communication unit 922. The communication unit 922 performs modulation processing, frequency conversion processing, or the like of the email data and transmits an acquired transmission signal from the antenna 921. Also, the communication unit 922 performs amplification, frequency conversion processing, demodulation processing, and the like of a reception signal received by the antenna 921 and restores the email data. The email data is supplied to the display unit 930 and contents of the email is displayed.

Note that the mobile phone 920 can make the recording/reproducing unit 929 store the received email data into a storage medium. The storage medium is an arbitrary rewritable storage medium. For example, the storage medium is a semiconductor memory such as a RAM or a built-in type flash memory, or a removable medium such as a hard disk, a magnetic disk, a magneto optical disk, an optical disk, a USB memory, or a memory card.

When image data is transmitted in the data communication mode, image data generated in the camera unit 926 is supplied to the image processing unit 927. The image processing unit 927 performs coding processing of the image data and generates coded data.

The demultiplexing unit 928 multiplexes, by using a predetermined system, the coded data generated in the image processing unit 927 and the audio data supplied by the audio codec 923 and supplies the multiplexed data to the communication unit 922. The communication unit 922 performs modulation processing, frequency conversion processing, or the like of the multiplexed data and transmits an acquired transmission signal from the antenna 921. Also, the communication unit 922 performs amplification, frequency conversion processing, demodulation processing, and the like of a reception signal received by the antenna 921 and restores the multiplexed data. The multiplexed data is supplied to the demultiplexing unit 928. The demultiplexing unit 928 demultiplexes the multiplexed data and supplies coded data to the image processing unit 927 and supplies audio data to the audio codec 923. The image processing unit 927 performs coding processing of the coded data and generates image data. The image data is supplied to the display unit 930 and a received image is displayed. The audio codec 923 converts the audio data into an analog audio signal, supplies the audio signal to the speaker 924, and outputs received audio.

In a mobile phone apparatus configured in such a manner, functions of the coding apparatus and the decoding apparatus (coding method and decoding method) of the present application are provided to the image processing unit 927. Thus, information to control filter processing of an image including a hierarchical structure can be shared.

<Sixth embodiment>

[Configuration example of recording/reproducing apparatus]

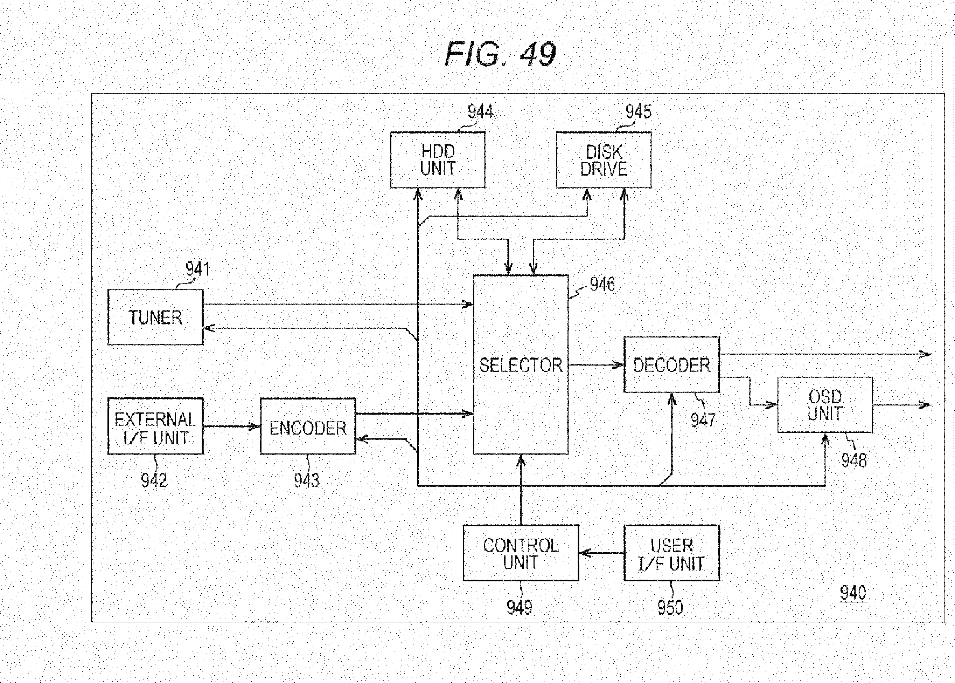

Fig. 49 is a view illustrating an example of a schematic configuration of the recording/reproducing apparatus to which the present technique is applied. For example, the recording/reproducing apparatus 940 records audio data and video data of a received broadcast program into a recording medium and provides the recorded data to a user at timing corresponding to a user instruction. Also, the recording/reproducing apparatus 940 can acquire audio data or video data, for example, from a different apparatus and can record these into the recording medium. In addition, by decoding and outputting the audio data or the video data recorded in the recording medium, the recording/reproducing apparatus 940 makes it possible to perform image display or audio output in the monitor apparatus or the like.

The recording/reproducing apparatus 940 includes a tuner 941, an external interface unit 942, an encoder 943, a hard disk drive (HDD) unit 944, a disk drive 945, a selector 946, a decoder 947, an on-screen display (OSD) unit 948, a control unit 949, and a user interface unit 950.

The tuner 941 selects an intended channel from a broadcast signal received by an antenna (not illustrated). The tuner 941 outputs, to the selector 946, a coded bit stream acquired by demodulation of a reception signal of the intended channel.

The external interface unit 942 includes at least one of an IEEE1394 interface, a network interface unit, a USB interface, a flash memory interface, and the like. The external interface unit 942 is an interface for connection with an external device, a network, a memory card, or the like and performs reception of data such as recorded video data or audio data.

The encoder 943 performs coding by a predetermined system when video data or audio data supplied by the external interface unit 942 is not coded. Then, the encoder 943 outputs a coded bit stream to the selector 946.

The HDD unit 944 records content data such as a video or audio, various programs, different data, or the like into a built-in hard disk and reads them from the hard disk, for example, in reproduction.

The disk drive 945 records and reproduces a signal in a mounted optical disk. The optical disk is, for example, a DVD disk (such as DVD-video, DVD-RAM, DVD-R, DVD-RW, DVD+R, or DVD+RW) or a Blu-ray (registered trademark) disk.

In recording of a video or audio, the selector 946 selects a coded bit stream from the tuner 941 or the encoder 943 and supplies the selected coded bit stream to the HDD unit 944 or the disk drive 945. Also, in reproduction of the video or audio, the selector 946 supplies, to the decoder 947, the coded bit stream output from the HDD unit 944 or the disk drive 945.

The decoder 947 performs decoding processing of the coded bit stream. The decoder 947 supplies video data generated by the decoding processing to the OSD unit 948. Also, the decoder 947 outputs audio data generated by the decoding processing.

The OSD unit 948 generates video data to display a menu screen or the like, for example, for selection of an item, superimposes the video data on the video data output from the decoder 947, and outputs the data.

To the control unit 949, the user interface unit 950 is connected. The user interface unit 950 includes an operation switch, a remote control signal reception unit, or the like and supplies, to the control unit 949, an operation signal corresponding to user operation.

The control unit 949 includes a CPU, a memory, or the like. The memory stores a program executed by the CPU or various kinds of data necessary for the CPU to perform processing. The program stored in the memory is read and executed by the CPU at predetermined timing such as activation of the recording/reproducing apparatus 940. By executing the program, the CPU controls each unit in such a manner that the recording/reproducing apparatus 940 performs an operation corresponding to user operation.

In the recording/reproducing apparatus configured in such a manner, a function of the decoding apparatus (decoding method) of the present application is provided to the decoder 947. Thus, information to control filter processing of an image including a hierarchical structure can be shared.

<Seventh embodiment>

[Configuration example of imaging apparatus]

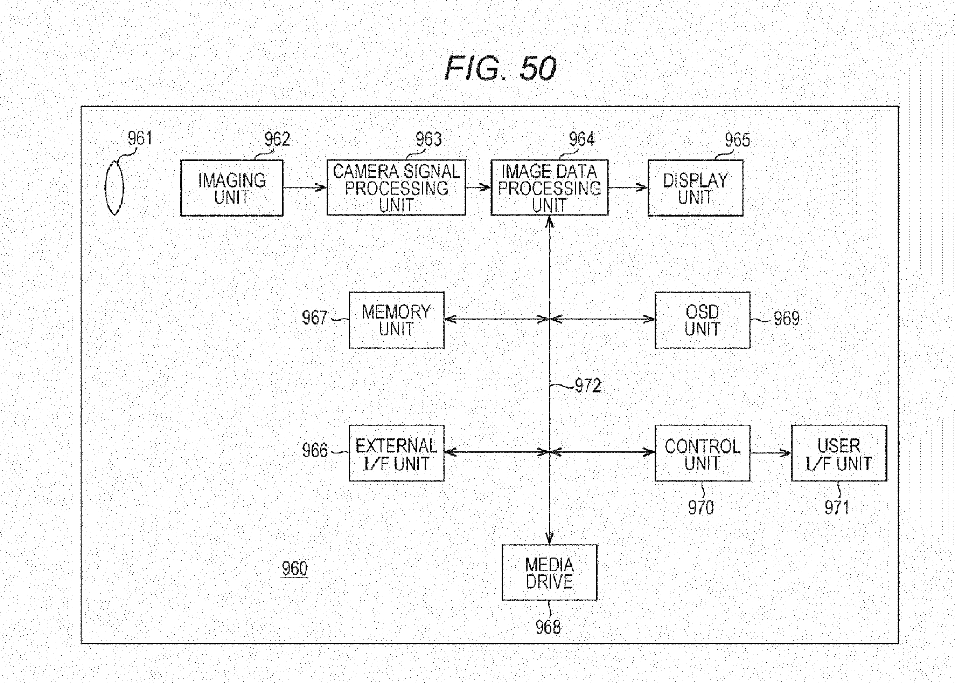

Fig. 50 is a view illustrating an example of a schematic configuration of an imaging apparatus to which the present technique is applied. An imaging apparatus 960 images an object and displays an image of the object on the display unit or records the image as image data into a recording medium.

The imaging apparatus 960 includes an optical block 961, an imaging unit 862, a camera signal processing unit 863, an image data processing unit 864, a display unit 865, an external interface unit 866, a memory unit 867, a media drive 968, an OSD unit 869, and a control unit 970. Also, to the control unit 970, a user interface unit 971 is connected. Moreover, the image data processing unit 864, the external interface unit 866, the memory unit 867, the media drive 968, the OSD unit 869, the control unit 970, and the like are connected through a bus 972.

The optical block 961 includes a focus lens, a diaphragm mechanism, or the like. The optical block 961 forms an optical image of the object on an imaging plane of the imaging unit 862. The imaging unit 862 includes a CCD or a CMOS image sensor. The imaging unit 862 generates an electric signal corresponding to the optical image by photoelectric conversion and supplies the electric signal to the camera signal processing unit 863.

The camera signal processing unit 863 performs various kinds of camera signal processing such as knee correction, gamma correction, or color correction with respect to the electric signal supplied by the imaging unit 862. The camera signal processing unit 863 supplies the image data after the camera signal processing to the image data processing unit 864.

The image data processing unit 864 performs coding processing of the image data supplied by the camera signal processing unit 863. The image data processing unit 864 supplies coded data generated by the coding processing to the external interface unit 866 or the media drive 968. Also, the image data processing unit 864 performs decoding processing of the coded data supplied by the external interface unit 866 or the media drive 968. The image data processing unit 864 supplies image data generated by the decoding processing to the display unit 865. Also, the image data processing unit 864 performs processing to supply the image data, which is supplied by the camera signal processing unit 863, to the display unit 865 or superimposes display data, which is acquired from the OSD unit 869, on the image data and supplies the data to the display unit 865.

The OSD unit 869 generates display data such as a menu screen or an icon including a symbol, a character, or a figure and outputs the generated display data to the image data processing unit 864.

The external interface unit 866 includes, for example, a USB input/output terminal and is connected to a printer when an image is printed. Also, to the external interface unit 866, a drive is connected when necessary and a removable medium such as a magnetic disk or an optical disk is arbitrarily mounted. A computer program read from them is installed when necessary. Moreover, the external interface unit 866 includes a network interface which is connected to a predetermined network such as a LAN or the Internet. For example, according to an instruction from the user interface unit 971, the control unit 970 can read coded data from the media drive 968 and can supply the coded data from the external interface unit 866 to a different apparatus connected through the network. Also, the control unit 970 can acquire, through the external interface unit 866, coded data or image data supplied by the different apparatus through the network and can supply the coded data or image data to the image data processing unit 864.

As a recording medium driven by the media drive 968, for example, an arbitrary readable/writable removable medium such as a magnetic disk, a magneto optical disk, an optical disk, or a semiconductor memory is used. A kind, as a removable medium, of the recording medium is also arbitrarily determined and may be a tape device, a disk, or a memory card. Of course, a non-contact integrated circuit (IC) card or the like may be used.

Also, the media drive 968 and the recording medium may be integrated and may be configured, for example, from a non-portable storage medium such as a built-in type hard disk drive or a solid state drive (SSD).

The control unit 970 includes a CPU. The memory unit 867 stores a program executed by the control unit 970 or various kinds of data necessary for the control unit 970 to perform processing. The program stored in the memory unit 867 is read and executed by the control unit 970 at predetermined timing such as activation of the imaging apparatus 960. By executing the program, the control unit 970 controls each unit in such a manner that the imaging apparatus 960 performs an operation corresponding to user operation.

In the imaging apparatus configured in such a manner, functions of the coding apparatus and the decoding apparatus (coding method and decoding method) of the present application are provided to the image data processing unit 864. Thus, information to control filter processing of an image including a hierarchical structure can be shared.

<Example for application of scalable coding>

[First system]

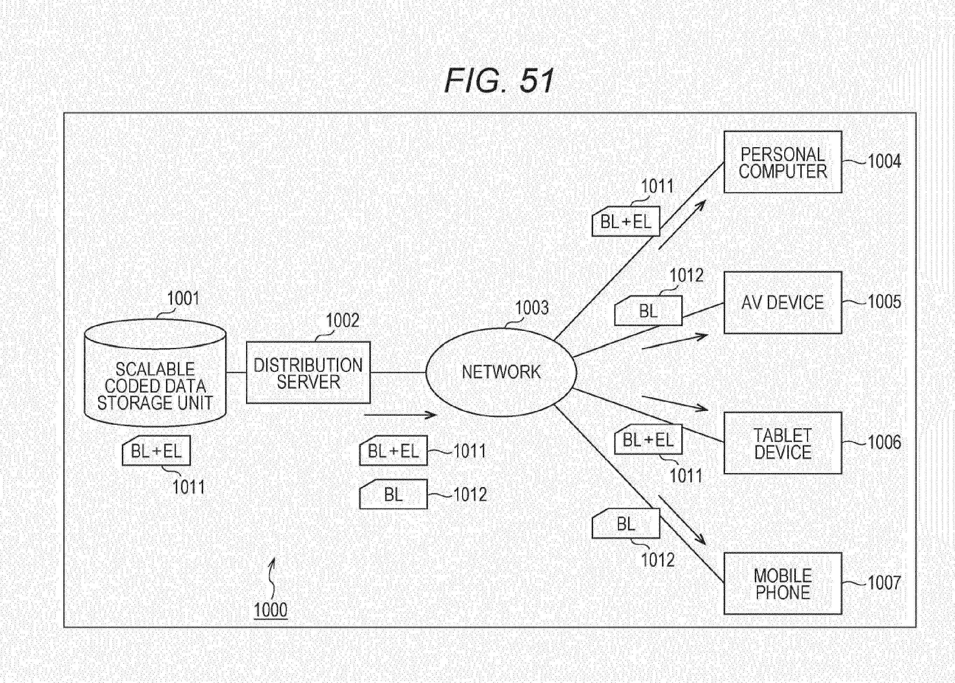

Next, an example of specific usage of scalable coded data on which scalable coding (hierarchical coding), which is coding by a scalability function, is performed will be described. For example, as illustrated in an example in Fig. 51, the scalable coding is used for selection of data to be transmitted.

In a data transmission system 1000 illustrated in Fig. 51, a distribution server 1002 reads scalable coded data stored in a scalable coded data storage unit 1001 and distributes the read data to a terminal apparatus such as a personal computer 1004, an AV device 1005, a tablet device 1006, or a mobile phone 1007 through a network 1003.

Here, according to capacity of the terminal apparatus, a communication environment, or the like, the distribution server 1002 selects and transmits coded data with adequate quality. Even when the distribution server 1002 transmits data with unnecessarily high quality, the terminal apparatus may not be able to acquire an image with high quality and a delay or overflow may be generated. Also, a communication band may be unnecessarily occupied and a load of the terminal apparatus may be unnecessarily increased. On the other hand, when the distribution server 1002 transmits data with unnecessarily low quality, the terminal apparatus may not be able to acquire an image with adequate quality. Thus, the distribution server 1002 arbitrarily reads and transmits the scalable coded data, which is stored in the scalable coded data storage unit 1001, as coded data with quality adequate to capacity of the terminal apparatus, a communication environment, or the like.

For example, it is assumed that the scalable coded data storage unit 1001 stores scalable coded data (BL + EL) 1011 which is coded in a scalable manner. The scalable coded data (BL + EL) 1011 is coded data including both of a base layer and an enhancement layer and is data from which both of an image in the base layer and an image in the enhancement layer can be acquired by decoding.

According to capacity of the terminal apparatus to which data is transmitted, a communication environment, or the like, the distribution server 1002 selects adequate layer and reads data in the layer. For example, with respect to the personal computer 1004 or the tablet device 1006 having high processing capacity, the distribution server 1002 reads the scalable coded data (BL + EL) 1011 with high quality from the scalable coded data storage unit 1001 and transmits the data as it is. On the other hand, for example, with respect to the AV device 1005 or the mobile phone 1007 having low processing capacity, the distribution server 1002 extracts data in the base layer from the scalable coded data (BL + EL) 1011 and transmits the data as scalable coded data (BL) 1012 which is data of content identical with the scalable coded data (BL + EL) 1011 but which has lower quality than the scalable coded data (BL + EL) 1011.

By using the scalable coded data in such a manner, the amount of data can be easily adjusted. Thus, it is possible to control generation of a delay or overflow or to control an unnecessary increase of a load of the terminal apparatus or the communication medium. Also, in the scalable coded data (BL + EL) 1011, redundancy between layers is reduced. Thus, it is possible to reduce the amount of data compared to a case where coded data in each layer is individual data. Accordingly, it is possible to use a storage region of the scalable coded data storage unit 1001 more effectively.

Note that various apparatuses such as the personal computer 1004 to the mobile phone 1007 can be applied as the terminal apparatus. Thus, performance of hardware of the terminal apparatus varies depending on an apparatus. Also, since there are various applications executed by the terminal apparatus, capacity of software varies. Moreover, as the network 1003 to be a communication medium, various wired and/or wireless communication line networks such as the Internet or a local area network (LAN) can be applied and data transmission capacity thereof varies. In addition variation may be caused depending on different communication or the like.

Thus, before starting data transmission, the distribution server 1002 may perform communication with a terminal apparatus to be destination of data transmission and may acquire information related to capacity of the terminal apparatus such as performance of hardware of the terminal apparatus or performance of an application (software) executed by the terminal apparatus, and information related to a communication environment such as a usable band width of the network 1003. Then, based on the acquired information, the distribution server 1002 may select an adequate layer.

Note that extraction of a layer may be performed in the terminal apparatus. For example, the personal computer 1004 may decodes the transmitted scalable coded data (BL + EL) 1011 and may display an image in the base layer or an image in the enhancement layer. Also, for example, the personal computer 1004 may extract the scalable coded data (BL) 1012 in the base layer from the transmitted scalable coded data (BL + EL) 1011. The personal computer 1004 may store the extracted data or transfer the extracted data to a different apparatus. Also, the personal computer 1004 may perform decoding and may display an image in the base layer.

Of course, the number of scalable coded data storage units 1001, the number of distribution servers 1002, the number of networks 1003, and the number of terminal apparatuses are arbitrarily determined. Also, in the above, an example in which the distribution server 1002 transmits data to the terminal apparatus has been described. However, an example of usage is not limited to the above. The data transmission system 1000 can be applied to an arbitrary system as long as an adequate layer is selected and transmitted in the system according to capacity of a terminal apparatus, a communication environment, or the like when scalable coded data is transmitted to the terminal apparatus.

[Second system]

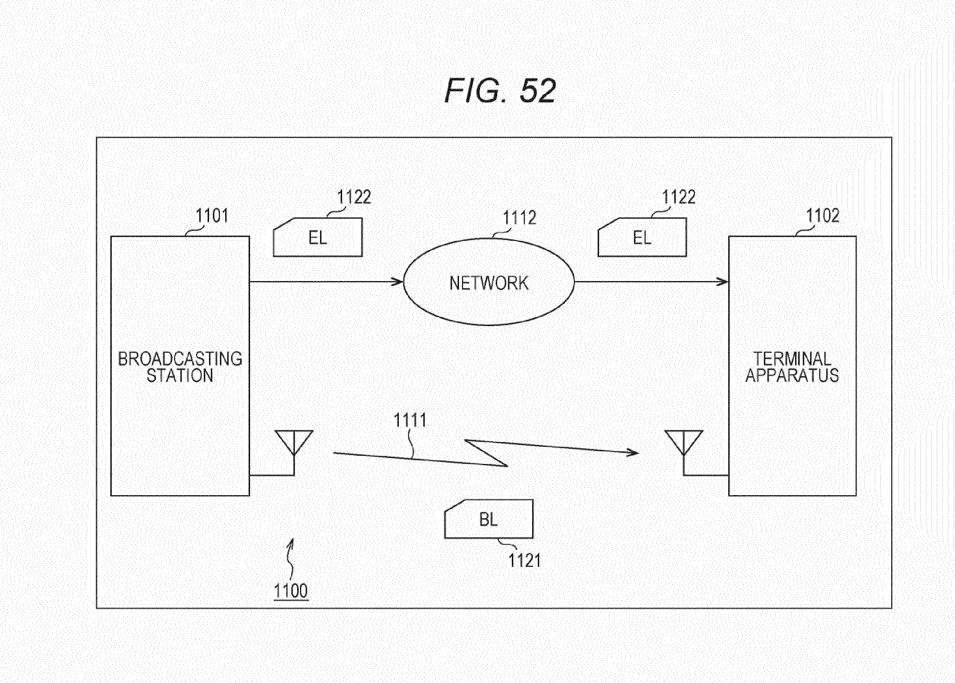

Also, for example, as illustrated in an example in Fig. 52, scalable coding is used for transmission through a plurality of communication media.

In a data transmission system 1100 illustrated in Fig. 52, a broadcasting station 1101 transmits scalable coded data (BL) 1121 in a base layer by a ground-based broadcast 1111. Also, the broadcasting station 1101 transmits scalable coded data (EL) 1122 in an enhancement layer (for example, by performing packetizing) through an arbitrary network 1112 including a wired and/or wireless communication network.

A terminal apparatus 1102 includes a function to receive the ground-based broadcast 1111 broadcast by the broadcasting station 1101 and receives the scalable coded data (BL) 1121 in the base layer transmitted through the ground-based broadcast 1111. Also, the terminal apparatus 1102 further includes a communication function to perform communication through the network 1112 and receives the scalable coded data (EL) 1122 in the enhancement layer transmitted through the network 1112.

For example, according to a user instruction or the like, the terminal apparatus 1102 acquires an image in the base layer by decoding the scalable coded data (BL) 1121 in the base layer acquired through the ground-based broadcast 1111 and stores the image or transmits the image to a different apparatus.

Also, for example, according to a user instruction or the like, the terminal apparatus 1102 acquires scalable coded data (BL + EL) by synthesizing the scalable coded data (BL) 1121 in the base layer acquired through the ground-based broadcast 1111 and the scalable coded data (EL) 1122 in the enhancement layer acquired through the network 1112, acquires an image in the enhancement layer by decoding the scalable coded data (BL + EL), stores the image, or transmits the image to a different apparatus.

As described above, the scalable coded data can be transmitted, for example, through a communication medium different for each layer. Thus, a load can be distributed and generation of a delay or overflow can be controlled.

Also, according to a situation, a communication medium used for transmission may be selected for each layer. For example, the scalable coded data (BL) 1121 in the base layer having a relatively large amount of data may be transmitted through a communication medium with a wide band width and the scalable coded data (EL) 1122 in the enhancement layer having a relatively small amount of data may be transmitted through a communication medium with a narrow band width. Also, for example, it may be switched whether to use the network 1112 or the ground-based broadcast 1111 as a communication medium to transmit the scalable coded data (EL) 1122 in the enhancement layer according to a usable band width of the network 1112. Of course, data in an arbitrary layer is in a similar manner.

By performing a control in such a manner, it is possible to control an increase of a load in the data transmission further more.

Of course, the number of layers is arbitrarily determined and the number of communication media used for transmission is also arbitrarily determined. Also, the number of terminal apparatuses 1102 to be destinations of data distribution is arbitrarily determined. Moreover, in the above, a broadcast from the broadcasting station 1101 has been described as an example. However, an example of usage is not limited to the above. The data transmission system 1100 can be applied to an arbitrary system as long as coded data, which is coded in a scalable manner, is divided into a plurality of pieces in a unit of a layer and is transmitted through a plurality of lines in the system.

[Third system]

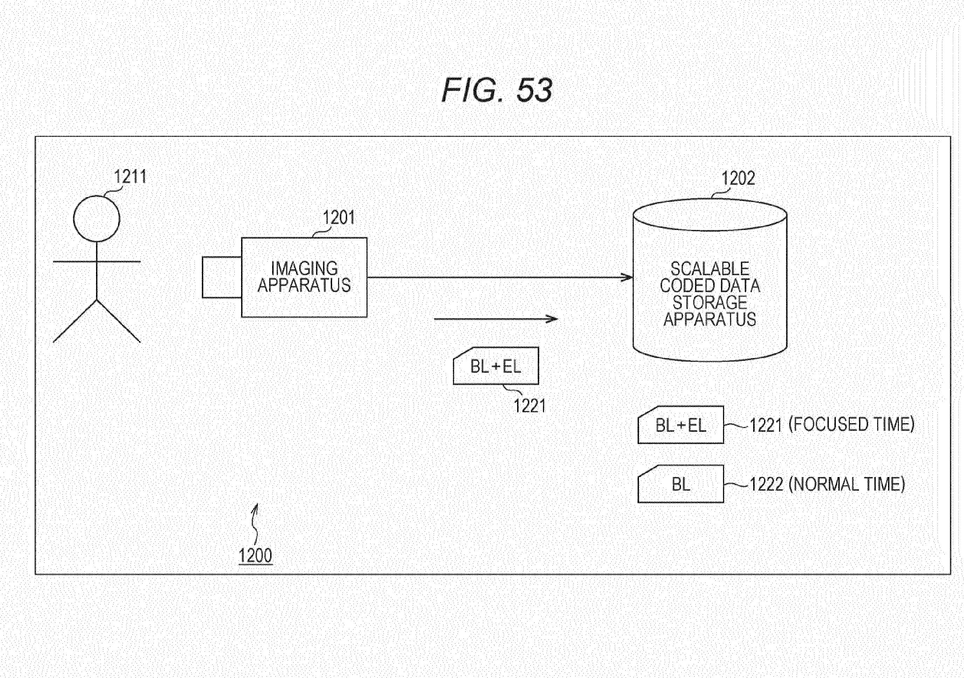

Also, for example, as illustrated in an example in Fig. 53, scalable coding is used to store coded data.

In an imaging system 1200 illustrated in Fig. 53, an imaging apparatus 1201 performs scalable coding of image data acquired by imaging an object 1211 and supplies the image data as scalable coded data (BL + EL) 1221 to a scalable coded data storage apparatus 1202.

The scalable coded data storage apparatus 1202 stores the scalable coded data (BL + EL) 1221, which is supplied by the imaging apparatus 1201, in quality corresponding to a situation. For example, in a case of a normal time, the scalable coded data storage apparatus 1202 extracts data in a base layer from the scalable coded data (BL + EL) 1221 and stores the data as scalable coded data (BL) 1222 in the base layer with low quality and a small amount of data. On the other hand, for example, in a case of a focused time, the scalable coded data storage apparatus 1202 stores the scalable coded data (BL + EL) 1221 with high quality and a large amount of data as it is.

In such a manner, the scalable coded data storage apparatus 1202 can store an image with high quality only when necessary. Thus, it is possible to control reduction of a value of an image due to deterioration of image quality and to control an increase in the amount of data. Thus, usage efficiency of a storage region can be improved.

For example, it is assumed that the imaging apparatus 1201 is a monitoring camera. In a case where no object of monitoring (such as intruder) is in an imaged image (in case of normal time), it is likely that contents of the imaged image is not important. Thus, priority is given to reduction of the amount of data and image data (scalable coded data) is stored with low quality. On the other hand, in a case where an object of monitoring is in an imaged image as an object 1211 (in case of focused time), it is likely that contents of the imaged image is important. Thus, priority is given to image quality and image data (scalable coded data) is stored with high quality.

Note that is may be determined whether it is a normal time or a focused time, for example, by analysis of an image performed by the scalable coded data storage apparatus 1202. Also, the imaging apparatus 1201 may perform determination and a result of the determination may be transmitted to the scalable coded data storage apparatus 1202.

Note that a criterion for determination whether it is a normal time or a focused time is set arbitrarily and contents of an image to be a criterion for determination is set arbitrarily. Of course, a condition other than contents of an image may be set as a criterion for determination. For example, switching may be performed according to a volume or a wave of recorded audio, may be performed in each predetermined time, or may be performed by an instruction from the outside such as a user instruction.

Also, in the above, an example of switching two states which are a normal time and a focused time has been described. However, the number of states may be set arbitrarily and, for example, switching may be performed among three or more states such as a normal time, a slightly focused time, a focused time, and a significantly focused time. However, the upper limit of number of switched states depends on the number of layers of scalable coded data.

Also, the imaging apparatus 1201 may determine the number of layers of the scalable coding according to a state. For example, in a case of a normal time, the imaging apparatus 1201 may generate the scalable coded data (BL) 1222 in the base layer with low quality and a small amount of data and may supply the generated scalable coded data (BL) 1222 to the scalable coded data storage apparatus 1202. Also, for example, in a case of a focused time, the imaging apparatus 1201 may generate the scalable coded data (BL + EL) 1221 in the base layer with high quality and a large amount of data and may supply the generated scalable coded data (BL + EL) 1221 to the scalable coded data storage apparatus 1202.

In the above, the monitoring camera has been described as an example. However, an intended-purpose of the imaging system 1200 is determined arbitrarily and is not limited to the monitoring camera.

Note that in the present description, an example in which various kinds of information such as control information is superimposed on a coded stream and is transmitted from a coding side to a decoding side has been described. However, a method to transmit the information is not limited to the example. For example, the information may not be superimposed on the coded bit stream and may be transmitted or recorded as different data associated with the coded bit stream. Here, a word "association" means to make it possible to link an image included in a bit stream (may be part of image such as slice or block) and information corresponding to the image in decoding. That is, the information may be transmitted on a transmission path different from that of the image (or bit stream). Also, the information may be recorded in a recording medium (or different recording area in identical recording medium) different from that of the image (or bit stream). Moreover, the information and the image (or bit stream) may be associated with each other in an arbitrary unit such as a plurality of frames, one frame, or a part of a frame.

The present technique can be applied to a coding apparatus or a decoding apparatus which is used when a bit stream compressed by orthogonal transform, such as discrete cosine transform, and motion compensation, for example, by MPEG or H.26x is received through a network medium such as a satellite broadcast, a cable TV, the Internet, or a mobile phone or when the bit stream is processed on a storage medium such as an optical or magnetic disk or a flash memory.

Also, in the present description, a case where coding and decoding are performed by a system compliant with an HEVC system has been described as an example. However, scope of application of the present technique is not limited to the above. Application to a coding apparatus and decoding apparatus in a different system is also possible as long as the coding apparatus hierarchizes an image to be coded in such a manner that a base image and an enhancement image correspond to each other by 1 : 1 and performs coding by using adaptive offset processing similarly to spatial scalability or SNR scalability and the decoding apparatus corresponds to the coding apparatus.

Note that an embodiment of the present technique is not limited to the above-described embodiments and various modifications can be made within the spirit and the scope of the present technique.

For example, the present technique may include a configuration of cloud computing in which one function is divided and shared by a plurality of apparatuses through a network when processed.

Also, each step described in the above flowchart can be executed not only by one apparatus but also by a plurality of apparatuses.

Moreover, when a plurality of kinds of processing is included in one step, the plurality of kinds of processing included in the one step can be executed not only by one apparatus but also by a plurality of apparatuses.

Also, the first embodiment and the second embodiment may be combined. In this case, reference image specification information and weighted information are shared between hierarchies.

Note that the present technique may include the following configuration.

(1) A coding apparatus including:

a filter processing unit configured to perform filter processing with respect to a decoded image in a second hierarchy based on control information which is information to control the filter processing and which is used in coding of an image in a first hierarchy of an image including a hierarchical structure;
a coding unit configured to code an image in the second hierarchy and to generate coded data by using, as a reference image, the decoded image in the second hierarchy on which image the filter processing is performed by the filter processing unit; and
a transmission unit configured to transmit the coded data generated by the coding unit.

(2) The coding apparatus according to (1), wherein the control information is information in a unit of a group of picture (GOP) and indicates whether to perform the filter processing.
(3) The coding apparatus according to (1), wherein the control information is information in a unit of a slice and indicates whether to perform the filter processing.
(4) The coding apparatus according to any of (1) to (3), wherein the control information is information indicating a kind of the filter processing.
(5) The coding apparatus according to any of (1) to (4), wherein
the filter processing is sample adaptive offset (SAO) processing, and

the control information is merge information indicating whether an offset and a kind of the filter processing are identical with an offset and a kind of the filter processing with respect to the decoded image in the neighboring second hierarchy.

(6) The coding apparatus according to any of (1) to (5), further including a generation unit configured to generate generation information, which is used in generation of an offset of the image in the second hierarchy from an offset of the image in the first hierarchy, by using an offset of the filter processing of the image in the first hierarchy and an offset of the filter processing of the image in the second hierarchy,

wherein the filter processing is sample adaptive offset (SAO) processing, and

the transmission unit is configured to transmit the generation information.

(7) The coding apparatus according to any of (1) to (5), wherein

the filter processing is sample adaptive offset (SAO) processing, and

the transmission unit is configured to transmit an offset of the filter processing of the image in the second hierarchy.

(8) A coding method including the steps of:

filter processing in which a coding apparatus performs filter processing with respect to a decoded image in a second hierarchy based on control information which is information to control the filter processing and which is used in coding of an image in a first hierarchy of an image including a hierarchical structure;

coding to code an image in the second hierarchy and to generate coded data by using, as a reference image, the decoded image in the second hierarchy on which image the filter processing is performed in processing in the step of filter processing; and

transmitting to transmit the coded data generated in processing in the step of coding.

(9) A decoding apparatus including:

a reception unit configured to receive coded data of a coded image in a second hierarchy by using, as a reference image, a decoded image in the second hierarchy on which image filter processing is performed based on control information which is information to control the filter processing and which is used in coding of an image in a first hierarchy of an image including a hierarchical structure;

a decoding unit configured to decode the coded data received by the reception unit and to generate the decoded image in the second hierarchy; and

a filter processing unit configured to perform the filter processing with respect to the decoded image in the second hierarchy, which image is generated by the decoding unit, based on the control information,

wherein the decoding unit is configured to decode the coded data in the second hierarchy by using, as a reference image, the decoded image in the second hierarchy on which image the filter processing is performed by the filter processing unit.

(10) The decoding apparatus according to (9), wherein the control information is information in a unit of a group of picture (GOP) and indicates whether to perform the filter processing.

(11) The decoding apparatus according to (9), wherein the control information is information in a unit of a slice and indicates whether to perform the filter processing.

(12) The decoding apparatus according to any of (9) to (11), wherein the control information is information indicating a kind of the filter processing.

(13) The decoding apparatus according to any of (9) to (12), wherein

the filter processing is sample adaptive offset (SAO) processing, and

the control information is merge information indicating whether an offset and a kind of the filter processing are identical with an offset and a kind of the filter processing with respect to the decoded image in the neighboring second hierarchy.

(14) The decoding apparatus according to any of (9) to (13), wherein

the filter processing is sample adaptive offset (SAO) processing,

the reception unit is configured to receive generation information which is generated by using an offset of the filter processing of the image in the first hierarchy and an offset of the filter processing of the image in the second hierarchy and which is used in generation of an offset of the image in the second hierarchy from an offset of the image in the first hierarchy, and

the filter processing unit is configured to generate the offset of the image in the second hierarchy from the generation information and the offset of the image in the first hierarchy and to perform the filter processing based on the offset of the image in the second hierarchy and the control information.

(15) The decoding apparatus according to any of (9) to (13), wherein

the filter processing is sample adaptive offset (SAO) processing,

the reception unit is configured to receive an offset of the filter processing of the image in the second hierarchy, and the filter processing unit is configured to perform the filter processing based on the offset of the image in the second hierarchy, which offset is received by the reception unit, and the control information.

(16) A decoding method including the steps of:

receiving in which a decoding apparatus receives coded data of a coded image in a second hierarchy by using, as a reference image, a decoded image in the second hierarchy on which image filter processing is performed based on control information which is information to control the filter processing and which is used in coding of an image in a first hierarchy of an image including a hierarchical structure;

decoding to decode the coded data received in processing in the step of receiving and to generate the decoded image in the second hierarchy; and

filter processing to perform the filter processing with respect to the decoded image in the second hierarchy, which image is generated in processing in the step of decoding, based on the control information,

wherein in the processing in the step of decoding, the coded data in the second hierarchy is decoded by using, as a reference image, the decoded image in the second hierarchy on which image the filter processing is performed in processing in the step of filter processing.

REFERENCE SIGNS LIST

| | |
|---|---|
| 10 | coding apparatus |
| 14 | transmission unit |
| 33 | operation unit |
| 42 | adaptive offset filter |
| 86 | generation unit |
| 90 | decoding apparatus |
| 91 | reception unit |
| 135 | adding unit |
| 137 | adaptive offset filter |

**Claims**

1.  A coding apparatus comprising:

a filter processing unit configured to perform filter processing with respect to a decoded image in a second hierarchy based on control information which is information to control the filter processing and which is used in coding of an image in a first hierarchy of an image including a hierarchical structure;

a coding unit configured to code an image in the second hierarchy and to generate coded data by using, as a reference image, the decoded image in the second hierarchy on which image the filter processing is performed by the filter processing unit; and

a transmission unit configured to transmit the coded data generated by the coding unit.

2.  The coding apparatus according to claim 1, wherein the control information is information in a unit of a group of picture (GOP) and indicates whether to perform the filter processing.

3.  The coding apparatus according to claim 1, wherein the control information is information in a unit of a slice and indicates whether to perform the filter processing.

4.  The coding apparatus according to claim 1, wherein the control information is information indicating a kind of the filter processing.

5.  The coding apparatus according to claim 1, wherein
the filter processing is sample adaptive offset (SAO) processing, and
the control information is merge information indicating whether an offset and a kind of the filter processing are identical with an offset and a kind of the filter processing with respect to the decoded image in the neighboring second hierarchy.

6. The coding apparatus according to claim 1, further comprising a generation unit configured to generate generation information, which is used in generation of an offset of the image in the second hierarchy from an offset of the image in the first hierarchy, by using an offset of the filter processing of the image in the first hierarchy and an offset of the filter processing of the image in the second hierarchy,
wherein the filter processing is sample adaptive offset (SAO) processing, and
the transmission unit is configured to transmit the generation information.

7. The coding apparatus according to claim 1, wherein
the filter processing is sample adaptive offset (SAO) processing, and
the transmission unit is configured to transmit an offset of the filter processing of the image in the second hierarchy.

8. A coding method comprising the steps of:

filter processing in which a coding apparatus performs filter processing with respect to a decoded image in a second hierarchy based on control information which is information to control the filter processing and which is used in coding of an image in a first hierarchy of an image including a hierarchical structure;
coding to code an image in the second hierarchy and to generate coded data by using, as a reference image, the decoded image in the second hierarchy on which image the filter processing is performed in processing in the step of filter processing; and
transmitting to transmit the coded data generated in processing in the step of coding.

9. A decoding apparatus comprising:

a reception unit configured to receive coded data of a coded image in a second hierarchy by using, as a reference image, a decoded image in the second hierarchy on which image filter processing is performed based on control information which is information to control the filter processing and which is used in coding of an image in a first hierarchy of an image including a hierarchical structure;
a decoding unit configured to decode the coded data received by the reception unit and to generate the decoded image in the second hierarchy; and
a filter processing unit configured to perform the filter processing with respect to the decoded image in the second hierarchy, which image is generated by the decoding unit, based on the control information,
wherein the decoding unit is configured to decode the coded data in the second hierarchy by using, as a reference image, the decoded image in the second hierarchy on which image the filter processing is performed by the filter processing unit.

10. The decoding apparatus according to claim 9, wherein the control information is information in a unit of a group of picture (GOP) and indicates whether to perform the filter processing.

11. The decoding apparatus according to claim 9, wherein the control information is information in a unit of a slice and indicates whether to perform the filter processing.

12. The decoding apparatus according to claim 9, wherein the control information is information indicating a kind of the filter processing.

13. The decoding apparatus according to claim 9, wherein
the filter processing is sample adaptive offset (SAO) processing, and
the control information is merge information indicating whether an offset and a kind of the filter processing are identical with an offset and a kind of the filter processing with respect to the decoded image in the neighboring second hierarchy.

14. The decoding apparatus according to claim 9, wherein
the filter processing is sample adaptive offset (SAO) processing,
the reception unit is configured to receive generation information which is generated by using an offset of the filter processing of the image in the first hierarchy and an offset of the filter processing of the image in the second hierarchy and which is used in generation of an offset of the image in the second hierarchy from an offset of the image in the first hierarchy, and
the filter processing unit is configured to generate the offset of the image in the second hierarchy from the generation information and the offset of the image in the first hierarchy and to perform the filter processing based on the offset of the image in the second hierarchy and the control information.

15. The decoding apparatus according to claim 9, wherein
the filter processing is sample adaptive offset (SAO) processing,
the reception unit is configured to receive an offset of the filter processing of the image in the second hierarchy, and
the filter processing unit is configured to perform the filter processing based on the offset of the image in the second hierarchy, which offset is received by the reception unit, and the control information.

16. A decoding method comprising the steps of:

receiving in which a decoding apparatus receives coded data of a coded image in a second hierarchy by using, as a reference image, a decoded image in the second hierarchy on which image filter processing is performed based on control information which is information to control the filter processing and which is used in coding of an image in a first hierarchy of an image including a hierarchical structure;
decoding to decode the coded data received in processing in the step of receiving and to generate the decoded image in the second hierarchy; and
filter processing to perform the filter processing with respect to the decoded image in the second hierarchy, which image is generated in processing in the step of decoding, based on the control information,
wherein in the processing in the step of decoding, the coded data in the second hierarchy is decoded by using, as a reference image, the decoded image in the second hierarchy on which image the filter processing is performed in processing in the step of filter processing.

# FIG. 1

| | | Descriptor |
|---|---|---|
| | video_parameter_set_rbsp( ) { | |
| |   video_parameter_set_id | u(4) |
| |   vps_temporal_id_nesting_flag | u(1) |
| |   vps_reserved_zero_2bits | u(2) |
| |   vps_reserved_zero_6bits | u(6) |
| |   vps_max_sub_layers_minus1 | u(3) |
| |   profile_and_level( 1, vps_max_sub_layers_minus1 ) | |
| |   vps_reserved_zero_12bits | u(12) |
| |   for( i = 0; i <= vps_max_sub_layers_minus1; i++ ) { | |
| |     vps_max_dec_pic_buffering[ i ] | ue(v) |
| |     vps_max_num_reorder_pics[ i ] | ue(v) |
| |     vps_max_latency_increase[ i ] | ue(v) |
| |   } | |
| |   vps_num_hrd_parameters | ue(v) |
| |   for( i = 0; i < vps_num_hrd_parameters; i++ ) { | |
| |     if( i > 0 ) | |
| |       op_point( i ) | |
| |     hrd_parameters( i == 0, vps_max_sub_layers_minus1 ) | |
| |   } | |
| |   vps_extension_flag | u(1) |
| |   if( vps_extension_flag ) | |
| |     while( more_rbsp_data( ) ) | |
| |       vps_extension_data_flag | u(1) |
| |   } | |
| |   rbsp_trailing_bits( ) | |
| | } | |

# FIG. 2

**Compute Level-0 Cost**

| 0 |
|---|

Level-0

**Compute Level-1 Costs**

| 1 | 2 |
|---|---|
| 3 | 4 |

Level-1

**Compute Level-2 Costs**

| 5 | 6 | 7 | 8 |
|---|---|---|---|
| 9 | 10 | 11 | 12 |
| 13 | 14 | 15 | 16 |
| 17 | 18 | 18 | 20 |

Level-2

J0 > (J1+J2+J3+J4)
Select Level-1 Partitions

| 1 | 2 |
|---|---|
| 3 | 4 |

J1 < (J5+J6+J9+J10)
J2 > (J7+J8+J11+12)
J3 > (J13+J14+J17+J18)
J4 < (J15+J16+J19+J20)

Final Quadtree Partitions

EP 2 903 281 A1

# FIG. 3

| BO(1) | EO(2) | EO(1) |
|-------|-------|-------|
| BO(2) | BO(1) | |

| EO(4) | OFF | EO(2) |
|-------|-----|-------|
| | OFF | OFF |

# FIG. 4

Enhancement Layer

Base Layer

## FIG. 5

30 fps
15 fps
7.5 fps

## FIG. 6

IMAGE WITH HIGH SNR

Enhancement Layer

Base Layer

IMAGE WITH LOW SNR

EP 2 903 281 A1

# FIG. 7

41

## FIG. 8

| | seq_parameter_set_rbsp( ) { | Descriptor |
|---|---|---|
| | video_parameter_set_id | u(4) |
| | sps_max_sub_layers_minus1 | u(3) |
| | sps_reserved_zero_bit | u(1) |
| | profile_and_level( 1, sps_max_sub_layers_minus1 ) | |
| | seq_parameter_set_id | ue(v) |
| | chroma_format_idc | ue(v) |
| | if( chroma_format_idc = = 3 ) | |
| | separate_colour_plane_flag | u(1) |
| | pic_width_in_luma_samples | ue(v) |
| | pic_height_in_luma_samples | ue(v) |
| | pic_cropping_flag | u(1) |
| | if( pic_cropping_flag ) { | |
| | pic_crop_left_offset | ue(v) |
| | pic_crop_right_offset | ue(v) |
| | pic_crop_top_offset | ue(v) |
| | pic_crop_bottom_offset | ue(v) |
| | } | |
| | bit_depth_luma_minus8 | ue(v) |
| | bit_depth_chroma_minus8 | ue(v) |
| | pcm_enabled_flag | u(1) |
| | if( pcm_enabled_flag ) { | |
| | pcm_sample_bit_depth_luma_minus1 | u(4) |
| | pcm_sample_bit_depth_chroma_minus1 | u(4) |
| | } | |
| | log2_max_pic_order_cnt_lsb_minus4 | ue(v) |
| | for( i = 0; i <= sps_max_sub_layers_minus1; i++ ) { | |
| | sps_max_dec_pic_buffering[ i ] | ue(v) |
| | sps_max_num_reorder_pics[ i ] | ue(v) |
| | sps_max_latency_increase[ i ] | ue(v) |
| | } | |
| | restricted_ref_pic_lists_flag | u(1) |
| | if( restricted_ref_pic_lists_flag ) | |
| | lists_modification_present_flag | u(1) |
| | log2_min_coding_block_size_minus3 | ue(v) |
| | log2_diff_max_min_coding_block_size | ue(v) |
| | log2_min_transform_block_size_minus2 | ue(v) |
| | log2_diff_max_min_transform_block_size | ue(v) |
| | if( pcm_enabled_flag ) { | |
| | log2_min_pcm_coding_block_size_minus3 | ue(v) |
| | log2_diff_max_min_pcm_coding_block_size | ue(v) |
| | } | |
| | max_transform_hierarchy_depth_inter | ue(v) |
| | max_transform_hierarchy_depth_intra | ue(v) |
| | scaling_list_enable_flag | u(1) |
| | if( scaling_list_enable_flag ) { | |
| | sps_scaling_list_data_present_flag | u(1) |

# FIG. 9

| | | |
|---|---|---|
| if( sps_scaling_list_data_present_flag ) | |
| scaling_list_data( ) | |
| } | |
| amp_enabled_flag | u(1) |
| sample_adaptive_offset_enabled_flag | u(1) |
| if( pcm_enabled_flag ) | |
| pcm_loop_filter_disable_flag | u(1) |
| sps_temporal_id_nesting_flag | u(1) |
| num_short_term_ref_pic_sets | ue(v) |
| for( i = 0; i < num_short_term_ref_pic_sets; i++) | |
| short_term_ref_pic_set( i ) | |
| long_term_ref_pics_present_flag | u(1) |
| if( long_term_ref_pics_present_flag ) { | |
| num_long_term_ref_pics_sps | ue(v) |
| for( i = 0; i < num_long_term_ref_pics_sps; i++ ) { | |
| lt_ref_pic_poc_lsb_sps[ i ] | u(v) |
| used_by_curr_pic_lt_sps_flag[ i ] | u(1) |
| } | |
| } | |
| sps_temporal_mvp_enable_flag | u(1) |
| vui_parameters_present_flag | u(1) |
| if( vui_parameters_present_flag ) | |
| vui_parameters( ) | |
| sps_extension_flag | u(1) |
| if( sps_extension_flag ) | |
| while( more_rbsp_data( ) ) | |
| sps_extension_data_flag | u(1) |
| rbsp_trailing_bits( ) | |
| } | |

# FIG. 10

| | slice_header( ) { | Descriptor |
|---|---|---|
| | first_slice_in_pic_flag | u(1) |
| | if( RapPicFlag ) | |
| | no_output_of_prior_pics_flag | u(1) |
| | pic_parameter_set_id | ue(v) |
| | if( !first_slice_in_pic_flag ) | |
| | slice_address | u(v) |
| | if( dependent_slice_enabled_flag && !first_slice_in_pic_flag ) | |
| | dependent_slice_flag | u(1) |
| | if( !dependent_slice_flag ) { | |
| | slice_type | ue(v) |
| | if( output_flag_present_flag ) | |
| | pic_output_flag | u(1) |
| | if( separate_colour_plane_flag == 1 ) | |
| | colour_plane_id | u(2) |
| | if( !IdrPicFlag ) { | |
| | pic_order_cnt_lsb | u(v) |
| | short_term_ref_pic_set_sps_flag | u(1) |
| | if( !short_term_ref_pic_set_sps_flag ) | |
| | short_term_ref_pic_set( num_short_term_ref_pic_sets ) | |
| | else | |
| | short_term_ref_pic_set_idx | u(v) |
| | if( long_term_ref_pics_present_flag ) { | |
| | if( num_long_term_ref_pics_sps > 0 ) | |
| | num_long_term_sps | ue(v) |
| | num_long_term_pics | ue(v) |
| | for( i = 0; i < num_long_term_sps + num_long_term_pics; i++ ) { | |
| | if( i < num_long_term_sps ) | |
| | lt_idx_sps[ i ] | u(v) |
| | else { | |
| | poc_lsb_lt[ i ] | u(v) |
| | used_by_curr_pic_lt_flag[ i ] | u(1) |
| | } | |
| | delta_poc_msb_present_flag[ i ] | u(1) |
| | if( delta_poc_msb_present_flag[ i ] ) | |
| | delta_poc_msb_cycle_lt[ i ] | ue(v) |
| | } | |
| | } | |
| | } | |
| | if( sample_adaptive_offset_enabled_flag ) { | |
| | slice_sao_luma_flag | u(1) |
| | slice_sao_chroma_flag | u(1) |
| | } | |
| | if( slice_type == P || slice_type == B ) { | |
| | if( sps_temporal_mvp_enable_flag ) | |
| | slice_temporal_mvp_enable_flag | u(1) |
| | num_ref_idx_active_override_flag | u(1) |

## FIG. 11

| | |
|---|---|
| `if( num_ref_idx_active_override_flag ) {` | |
| `num_ref_idx_l0_active_minus1` | ue(v) |
| `if( slice_type = = B )` | |
| `num_ref_idx_l1_active_minus1` | ue(v) |
| `}` | |
| `if( lists_modification_present_flag )` | |
| `ref_pic_list_modification( )` | |
| `if( slice_type = = B )` | |
| `mvd_l1_zero_flag` | u(1) |
| `if( cabac_init_present_flag )` | |
| `cabac_init_flag` | u(1) |
| `if( slice_temporal_mvp_enable_flag ) {` | |
| `if( slice_type = = B )` | |
| `collocated_from_l0_flag` | u(1) |
| `if(( collocated_from_l0_flag && num_ref_idx_l0_active_minus1 > 0 ) || ( !collocated_from_l0_flag && num_ref_idx_l1_active_minus1 > 0 ))` | |
| `collocated_ref_idx` | ue(v) |
| `}` | |
| `if(( weighted_pred_flag && slice_type = = P) || ( weighted_bipred_flag && slice_type = = B ))` | |
| `pred_weight_table( )` | |
| `five_minus_max_num_merge_cand` | ue(v) |
| `}` | |
| `slice_qp_delta` | se(v) |
| `if( pic_slice_level_chroma_qp_offsets_present_flag ) {` | |
| `slice_cb_qp_offset` | se(v) |
| `slice_cr_qp_offset` | se(v) |
| `}` | |
| `if( deblocking_filter_control_present_flag ) {` | |
| `if( deblocking_filter_override_enabled_flag )` | |
| `deblocking_filter_override_flag` | u(1) |
| `if( deblocking_filter_override_flag ) {` | |
| `slice_header_disable_deblocking_filter_flag` | u(1) |
| `if( !slice_header_disable_deblocking_filter_flag ) {` | |
| `beta_offset_div2` | se(v) |
| `tc_offset_div2` | se(v) |
| `}` | |
| `}` | |
| `}` | |
| `if( loop_filter_across_slices_enabled_flag && ( slice_sao_luma_flag || slice_sao_chroma_flag || !disable_deblocking_filter_flag ))` | |
| `slice_loop_filter_across_slices_enabled_flag` | u(1) |
| `}` | |
| `if( tiles_enabled_flag || entropy_coding_sync_enabled_flag ) {` | |
| `num_entry_point_offsets` | ue(v) |
| `if( num_entry_point_offsets > 0 ) {` | |
| `offset_len_minus1` | ue(v) |

FIG. 12

| | | |
|---|---|---|
| for ( i = 0; i < num_entry_point_offsets; i++ ) | |
| entry_point_offset[ i ] | u(v) |
| } | |
| } | |
| if( slice_header_extension_present_flag ) { | |
| slice_header_extension_length | ue(v) |
| for( i = 0; i < slice_header_extension_length; i++) | |
| slice_header_extension_data_byte[ i ] | u(8) |
| } | |
| byte_alignment( ) | |
| } | |

## FIG. 13

```
1 coding_tree_unit( xCtb, yCtb ) {                                                                    Descriptor
2    NumPCMBlock = 0
3    xCtb = InverseRasterScan( CtbAddrRS, CtbSize, CtbSize, pic_width_in_luma_samples, 0 )
4    yCtb = InverseRasterScan( CtbAddrRS, CtbSize, CtbSize, pic_width_in_luma_samples, 1 )
5    CtbAddrInSlice = CtbAddrRS - slice_address
6    if( slice_sao_luma_flag || slice_sao_chroma_flag )
7       sao( xCtb >> Log2CtbSizeY, yCtb >> Log2CtbSizeY )
8    coding_quadtree( xCtb, yCtb, Log2CtbSizeY, 0 )
9 }
```

## FIG. 14

```
 1  sao( rx, ry ) {                                                                  Descriptor
 2    if( rx > 0 ) {
 3        leftCtbInSlice = CtbAddrInSlice > 0
 4        leftCtbInTile = TileId[ CtbAddrTS ]  = =  TileId[ CtbAddrRStoTS[ CtbAddrRS - 1 ] ]
 5        if( leftCtbInSlice  &&  leftCtbInTile )
 6            sao_merge_left_flag                                                     ae(v)
 7    }
 8    if( ry > 0  &&  !sao_merge_left_flag ) {
 9        upCtbInSlice = ( CtbAddrTS - CtbAddrRStoTS[CtbAddrRS - PicWidthInCtbsY] ) <=
                            CtbAddrInSlice
10        upCtbInTile = TileId[ CtbAddrTS ]  = =
                            TileId[ CtbAddrRStoTS[ CtbAddrRS - PicWidthInCtbsY ] ]
11        if( upCtbInSlice  &&  upCtbInTile )
12            sao_merge_up_flag                                                       ae(v)
13    }
14    if( !sao_merge_up_flag  &&  !sao_merge_left_flag ) {
15      for( cIdx = 0; cIdx < 3; cIdx++ ) {
16        if(( slice_sao_luma_flag  &&  cIdx  = =  0 ) ||
            ( slice_sao_chroma_flag  &&  cIdx > 0 ) ) {
17          if( cIdx = = 0 )
18            sao_type_idx_luma                                                       ae(v)
19          if( cIdx = = 1 )
20            sao_type_idx_chroma                                                     ae(v)
21          if( SaoTypeIdx[ cIdx ][ rx ][ ry ]  != 0 ) {
22            for( i = 0; i < 4; i++ )
23              sao_offset_abs[ cIdx ][ rx ][ ry ][ i ]                               ae(v)
24            if( SaoTypeIdx[ cIdx ][ rx ][ ry ]  = =  1 ) {
25              for( i = 0; i < 4; i++ ) {
26                if( sao_offset_abs[ cIdx ][ rx ][ ry ][ i ] != 0 )
27                  sao_offset_sign[ cIdx ][ rx ][ ry ][ i ]                          ae(v)
28              sao_band_position[ cIdx ][ rx ][ ry ]                                 ae(v)
29            } else {
30              if( cIdx  = =  0 )
31                sao_eo_class_luma                                                   ae(v)
32              if( cIdx  = =  1 )
33                sao_eo_class_chroma                                                 ae(v)
34            }
35          }
36        }
37      }
38    }
39  }
```

# FIG. 15

```
            21                      22
      ┌──────────────┐       ┌──────────────┐
─────▶│   CODING     │──────▶│   SETTING    │─────▶
      │    UNIT      │       │    UNIT      │
      └──────────────┘       └──────────────┘
              ▲
              │

             12
```

# FIG. 16

EP 2 903 281 A1

# FIG. 17

Depth = 0, N = 64

split flag = 0

2N | CU$_0$ |

2N

split flag = 1

| 0 | 1 |
| 2 | 3 |

Depth = 1, N = 32

split flag = 0

2N | CU$_1$ |

2N

split flag = 1

| 0 | 1 |
| 2 | 3 |

Depth = 4, N = 4

Last depth: No split flag

2N | CU$_4$ |

2N

## FIG. 18

ADAPTIVE OFFSET FILTER ～42

ON/OFF SETTING UNIT ～81

MERGE SETTING UNIT ～82

TYPE SETTING UNIT ～83

PROCESSING UNIT ～84

OFFSET BUFFER ～85

GENERATION UNIT 86

SEQUENCE BUFFER ～71

SLICE BUFFER ～72

MERGE BUFFER ～73

TYPE BUFFER ～74

VALUE BUFFER ～75

OFFSET BUFFER ～50

EP 2 903 281 A1

52

## FIG. 19

## FIG. 20

| Category | Condition |
|----------|-----------|
| 1 | c<2 neighboring pixels |
| 2 | c<1 neighbor && c == 1 neighbor |
| 3 | c>1 neighbor && c == 1 neighbor |
| 4 | c>2 neighbors |
| 0 | Nono of the above |

## FIG. 21

# FIG. 22

| seq_parameter_set_rbsp( ) { | Descriptor |
|---|---|
|    video_parameter_set_id | u(4) |
|    sps_max_sub_layers_minus1 | u(3) |
|    sps_reserved_zero_bit | u(1) |
|    profile_and_level( 1, sps_max_sub_layers_minus1 ) | |
|    seq_parameter_set_id | ue(v) |
|    chroma_format_idc | ue(v) |
|    if( chroma_format_idc == 3 ) | |
|      separate_colour_plane_flag | u(1) |
|    pic_width_in_luma_samples | ue(v) |
|    pic_height_in_luma_samples | ue(v) |
|    pic_cropping_flag | u(1) |
|    if( pic_cropping_flag ) { | |
|      pic_crop_left_offset | ue(v) |
|      pic_crop_right_offset | ue(v) |
|      pic_crop_top_offset | ue(v) |
|      pic_crop_bottom_offset | ue(v) |
|    } | |
|    bit_depth_luma_minus8 | ue(v) |
|    bit_depth_chroma_minus8 | ue(v) |
|    pcm_enabled_flag | u(1) |
|    if( pcm_enabled_flag ) { | |
|      pcm_sample_bit_depth_luma_minus1 | u(4) |
|      pcm_sample_bit_depth_chroma_minus1 | u(4) |
|    } | |
|    log2_max_pic_order_cnt_lsb_minus4 | ue(v) |
|    for( i = 0; i <= sps_max_sub_layers_minus1; i++ ) { | |
|      sps_max_dec_pic_buffering[ i ] | ue(v) |
|      sps_max_num_reorder_pics[ i ] | ue(v) |
|      sps_max_latency_increase[ i ] | ue(v) |
|    } | |
|    restricted_ref_pic_lists_flag | u(1) |
|    if( restricted_ref_pic_lists_flag ) | |
|      lists_modification_present_flag | u(1) |
|    log2_min_coding_block_size_minus3 | ue(v) |
|    log2_diff_max_min_coding_block_size | ue(v) |
|    log2_min_transform_block_size_minus2 | ue(v) |
|    log2_diff_max_min_transform_block_size | ue(v) |
|    if( pcm_enabled_flag ) { | |
|      log2_min_pcm_coding_block_size_minus3 | ue(v) |
|      log2_diff_max_min_pcm_coding_block_size | ue(v) |
|    } | |
|    max_transform_hierarchy_depth_inter | ue(v) |
|    max_transform_hierarchy_depth_intra | ue(v) |
|    scaling_list_enable_flag | u(1) |
|    if( scaling_list_enable_flag ) { | |
|      sps_scaling_list_data_present_flag | u(1) |

## FIG. 23

| | | |
|---|---|---|
| if( sps_scaling_list_data_present_flag ) | |
| scaling_list_data( ) | |
| } | |
| amp_enabled_flag | u(1) |
| if( diff_ref_layer[i] == 0) | |
| sample_adaptive_offset_enabled_flag | u(1) |
| else | |
| sample_adaptive_offset_enabled_flag = sample_adaptive_offset_enabled_flag[ref_layer] | |
| if( pcm_enabled_flag ) | |
| pcm_loop_filter_disable_flag | u(1) |
| sps_temporal_id_nesting_flag | u(1) |
| num_short_term_ref_pic_sets | ue(v) |
| for( i = 0; i < num_short_term_ref_pic_sets; i++) | |
| short_term_ref_pic_set( i ) | |
| long_term_ref_pics_present_flag | u(1) |
| if( long_term_ref_pics_present_flag ) { | |
| num_long_term_ref_pics_sps | ue(v) |
| for( i = 0; i < num_long_term_ref_pics_sps; i++ ) { | |
| lt_ref_pic_poc_lsb_sps[ i ] | u(v) |
| used_by_curr_pic_lt_sps_flag[ i ] | u(1) |
| } | |
| } | |
| sps_temporal_mvp_enable_flag | u(1) |
| vui_parameters_present_flag | u(1) |
| if( vui_parameters_present_flag ) | |
| vui_parameters( ) | |
| sps_extension_flag | u(1) |
| if( sps_extension_flag ) | |
| while( more_rbsp_data( )) | |
| sps_extension_data_flag | u(1) |
| rbsp_trailing_bits( ) | |
| } | |

## FIG. 24

| slice_header ( ) { | Descriptor |
|---|---|
| first_slice_in_pic_flag | u(1) |
| if( RapPicFlag ) | |
| no_output_of_prior_pics_flag | u(1) |
| pic_parameter_set_id | ue(v) |
| if( !first_slice_in_pic_flag ) | |
| slice_address | u(v) |
| if( dependent_slice_enabled_flag && !first_slice_in_pic_flag ) | |
| dependent_slice_flag | u(1) |
| if( !dependent_slice_flag ) { | |
| slice_type | ue(v) |
| if( output_flag_present_flag ) | |
| pic_output_flag | u(1) |
| if( separate_colour_plane_flag == 1 ) | |
| colour_plane_id | u(2) |
| if( !IdrPicFlag ) { | |
| pic_order_cnt_lsb | u(v) |
| short_term_ref_pic_set_sps_flag | u(1) |
| if( !short_term_ref_pic_set_sps_flag ) | |
| short_term_ref_pic_set( num_short_term_ref_pic_sets ) | |
| else | |
| short_term_ref_pic_set_idx | u(v) |
| if( long_term_ref_pics_present_flag ) { | |
| if( num_long_term_ref_pics_sps > 0 ) | |
| num_long_term_sps | ue(v) |
| num_long_term_pics | ue(v) |
| for( i = 0; i < num_long_term_sps + num_long_term_pics; i++ ) { | |
| if( i < num_long_term_sps ) | |
| lt_idx_sps[ i ] | u(v) |
| else { | |
| poc_lsb_lt[ i ] | u(v) |
| used_by_curr_pic_lt_flag[ i ] | u(1) |
| } | |
| delta_poc_msb_present_flag[ i ] | u(1) |
| if( delta_poc_msb_present_flag[ i ] ) | |
| delta_poc_msb_cycle_lt[ i ] | ue(v) |
| } | |
| } | |
| } | |
| if( sample_adaptive_offset_enabled_flag ) { | |
| **sao_lcu_aligned_flag = 0** | |
| **if( diff_ref_layer[i] == 0 ) {** | |
| slice_sao_luma_flag | u(1) |
| slice_sao_chroma_flag | u(1) |
| **}else{** | |
| **slice_sao_luma_flag = slice_sao_luma_flag[ref_layer]** | |
| **slice_sao_chroma_flag = slice_sao_chroma_flag[ref_layer]** | |

EP 2 903 281 A1

# FIG. 25

| | | |
|---|---|---|
| sao_lcu_aligned_flag | | u(1) |
| } | | |
| } | | |
| if( slice_type = = P || slice_type = = B ) { | | |
| if( sps_temporal_mvp_enable_flag ) | | |
| slice_temporal_mvp_enable_flag | | u(1) |
| num_ref_idx_active_override_flag | | u(1) |
| if( num_ref_idx_active_override_flag ) { | | |
| num_ref_idx_l0_active_minus1 | | ue(v) |
| if( slice_type = = B ) | | |
| num_ref_idx_l1_active_minus1 | | ue(v) |
| } | | |
| if( lists_modification_present_flag ) | | |
| ref_pic_list_modification( ) | | |
| if( slice_type = = B ) | | |
| mvd_l1_zero_flag | | u(1) |
| if( cabac_init_present_flag ) | | |
| cabac_init_flag | | u(1) |
| if( slice_temporal_mvp_enable_flag ) { | | |
| if( slice_type = = B ) | | |
| collocated_from_l0_flag | | u(1) |
| if(( collocated_from_l0_flag && num_ref_idx_l0_active_minus1 > 0 ) || ( !collocated_from_l0_flag && num_ref_idx_l1_active_minus1 > 0 )) | | |
| collocated_ref_idx | | ue(v) |
| } | | |
| if(( weighted_pred_flag && slice_type = = P) || ( weighted_bipred_flag && slice_type = = B )) | | |
| pred_weight_table( ) | | |
| five_minus_max_num_merge_cand | | ue(v) |
| } | | |
| slice_qp_delta | | se(v) |
| if( pic_slice_level_chroma_qp_offsets_present_flag ) { | | |
| slice_cb_qp_offset | | se(v) |
| slice_cr_qp_offset | | se(v) |
| } | | |
| if( deblocking_filter_control_present_flag ) { | | |
| if( deblocking_filter_override_enabled_flag ) | | |
| deblocking_filter_override_flag | | u(1) |
| if( deblocking_filter_override_flag ) { | | |
| slice_header_disable_deblocking_filter_flag | | u(1) |
| if( !slice_header_disable_deblocking_filter_flag ) { | | |
| beta_offset_div2 | | se(v) |
| tc_offset_div2 | | se(v) |
| } | | |
| } | | |
| } | | |

57

# FIG. 26

| | | |
|---|---|---|
| if( loop_filter_across_slices_enabled_flag  &&<br>      ( slice_sao_luma_flag \|\| slice_sao_chroma_flag \|\|<br>        !disable_deblocking_filter_flag )) | |
| slice_loop_filter_across_slices_enabled_flag | u(1) |
| } | |
| if( tiles_enabled_flag \|\| entropy_coding_sync_enabled_flag ) { | |
| num_entry_point_offsets | ue(v) |
| if( num_entry_point_offsets > 0 ) { | |
| offset_len_minus1 | ue(v) |
| for( i = 0; i < num_entry_point_offsets; i++ ) | |
| entry_point_offset[ i ] | u(v) |
| } | |
| } | |
| if( slice_header_extension_present_flag ) { | |
| slice_header_extension_length | ue(v) |
| for( i = 0; i < slice_header_extension_length; i++) | |
| slice_header_extension_data_byte[ i ] | u(8) |
| } | |
| byte_alignment( ) | |
| } | |

## FIG. 27

```
1  sao( rx, ry ) {                                                                                      Descriptor
2    if( rx > 0 ) {
3      leftCtbInSlice = CtbAddrInSlice > 0
4      leftCtbInTile = TileId[ CtbAddrTS ]  = = TileId[ CtbAddrRStoTS[ CtbAddrRS - 1 ] ]
5      if( leftCtbInSlice && leftCtbInTile )
6        if( !sao_lcu_aligned_flag )
7          sao_merge_left_flag                                                                          ae(v)
8        else
9          sao_merge_left_flag = sao_merge_left_flag [ref_layer]
10   }
11   if( ry > 0 && !sao_merge_left_flag ) {
12     upCtbInSlice = ( CtbAddrTS - CtbAddrRStoTS[CtbAddrRS - PicWidthInCtbsY] ) <=
                          CtbAddrInSlice
13     upCtbInTile = TileId[ CtbAddrTS ]  = =
                          TileId[ CtbAddrRStoTS[ CtbAddrRS - PicWidthInCtbsY ] ]
14     if( upCtbInSlice && upCtbInTile )
15       if( !sao_lcu_aligned_flag )
16         sao_merge_up_flag                                                                            ae(v)
17       else
18         sao_merge_up_flag = sao_merge_up_flag[ref_layer]
19   }
20   if( !sao_merge_up_flag && !sao_merge_left_flag ) {
21     for( cIdx = 0; cIdx < 3; cIdx++ ) {
22       if(( slice_sao_luma_flag && cIdx = = 0 ) ||
              ( slice_sao_chroma_flag && cIdx > 0 )) {
23         if( cIdx = = 0 )
24           if( !sao_lcu_aligned_flag )
25             sao_type_idx_luma                                                                        ae(v)
26           else
27             sao_type_idx_luma = sao_type_idx_luma[ref_layer]
28         if( cIdx = = 1 )
29           if( !sao_lcu_aligned_flag )
30             sao_type_idx_chroma                                                                      ae(v)
31           else
32             sao_type_idx_chroma = sao_type_idx_chroma[ref_layer]
33         if( SaoTypeIdx[ cIdx ][ rx ][ ry ] != 0 ) {
34           for( i = 0; i < 4; i++ )
35             if( !sao_lcu_aligned_flag )
36               sao_offset_abs[ cIdx ][ rx][ ry ][ i ]                                                 ae(v)
37             else
38               diff_sao_offset_abs[ cIdx ][ rx][ ry ][ i ]                                            ae(v)
39           if( SaoTypeIdx[ cIdx ][ rx ][ ry ]  = = 1 ) {
40             for( i = 0; i < 4; i++ ) {
41               if( !sao_lcu_aligned_flag ) {
42                 if( sao_offset_abs[ cIdx ][ rx ][ ry ][ i ] != 0 )
43                   sao_offset_sign[ cIdx ][ rx ][ ry ][ i ]                                           ae(v)
45               } else {
46                 if( diff_sao_offset_abs[ cIdx ][ rx ][ ry ][ i ] != 0 )
```

59

# FIG. 28

| | | |
|---|---|---|
| **diff**_sao_offset_sign[ cIdx ][ rx ][ ry ][ i ] | ae(v) |
| } | |
| sao_band_position[ cIdx ][ rx ][ ry ] | ae(v) |
| } else { | |
| if( cIdx  = =  0 ) | |
| sao_eo_class_luma | ae(v) |
| if( cIdx  = =  1 ) | |
| sao_eo_class_chroma | ae(v) |
| } | |
| } | |
| } | |
| } | |
| } | |
| } | |

## FIG. 29

| | Descriptor |
|---|---|
| video_parameter_set_rbsp( ) { | |
|   video_parameter_set_id | u(4) |
|   vps_temporal_id_nesting_flag | u(1) |
|   vps_reserved_zero_2bits | u(2) |
|   vps_reserved_zero_6bits | u(6) |
|   **vps_max_layers_minus1** | **u(3)** |
|   vps_max_sub_layers_minus1 | u(3) |
|   profile_and_level( 1, vps_max_sub_layers_minus1 ) | |
|   vps_reserved_zero_12bits | u(12) |
|   for( i = 0; i <= vps_max_sub_layers_minus1; i++ ) { | |
|     vps_max_dec_pic_buffering[ i ] | ue(v) |
|     vps_max_num_reorder_pics[ i ] | ue(v) |
|     vps_max_latency_increase[ i ] | ue(v) |
|   } | |
|   **diff_ref_layer[0] = 0** | |
|   **for( i = 1; i <= vps_max_layers_minus1; i++ )** | |
|     **diff_ref_layer[i]** | **ue(v)** |
|   vps_num_hrd_parameters | ue(v) |
|   for( i = 0; i < vps_num_hrd_parameters; i++ ) { | |
|     if( i > 0 ) | |
|       op_point( i ) | |
|     hrd_parameters( i == 0, vps_max_sub_layers_minus1 ) | |
|   } | |
|   vps_extension_flag | u(1) |
|   if( vps_extension_flag ) | |
|     while( more_rbsp_data( ) ) | |
|       vps_extension_data_flag | u(1) |
|   } | |
|   rbsp_trailing_bits( ) | |
| } | |

## FIG. 30

ENHANCEMENT IMAGE

BASE IMAGE

A

ENHANCEMENT IMAGE

BASE IMAGE

B

EP 2 903 281 A1

# FIG. 31

START HIERARCHICAL
CODING PROCESSING

CODE BASE IMAGE — S1

ENHANCEMENT STREAM
GENERATION PROCESSING — S2

SYNTHESIZE BASE STREAM AND
ENHANCEMENT STREAM — S3

TRANSMIT CODED STREAM
OF WHOLE HIERARCHY — S4

END

# FIG. 32

```
START ENHANCEMENT STREAM
  GENERATION PROCESSING
            │
            ▼
   CODING PROCESSING          S11
            │
            ▼
        SET SPS               S12
            │
            ▼
        SET PPS               S13
            │
            ▼
 GENERATE ENHANCEMENT STREAM  S14
            │
            ▼
 SUPPLY ENHANCEMENT STREAM    S15
            │
            ▼
         RETURN
```

# FIG. 33

```
                    ( START CODING PROCESSING )
                                │
                                ▼
              ┌─────────────────────────────────┐  S31
              │     PERFORM A/D CONVERSION       │
              └─────────────────────────────────┘
                                │
                                ▼
              ┌─────────────────────────────────┐  S32
              │         PERFORM SORTING          │
              └─────────────────────────────────┘
                                │
                                ▼
              ┌─────────────────────────────────┐  S33
              │    PERFORM INTRA-PREDICTION      │
              │          PROCESSING              │
              │  PERFORM MOTION PREDICTION/       │
              │   COMPENSATION PROCESSING        │
              └─────────────────────────────────┘
                                │
                                ▼
              ┌─────────────────────────────────┐  S34
              │ DETERMINE OPTIMAL PREDICTION MODE│
              │  BASED ON COST FUNCTION VALUE    │
              └─────────────────────────────────┘
                                │
                                ▼
                            S35
                      ╱────────────╲
                     ╱  IS OPTIMAL  ╲
              ╱ PREDICTION MODE OPTIMAL ╲──── NO ───┐
              ╲    INTER-PREDICTION     ╱           │
                     ╲    MODE?    ╱                │
                      ╲──────────╱                  │
                          │ YES                     │
                          ▼                         │
              ┌─────────────────────────────────┐  S36  │
              │   SUPPLY INTER-PREDICTION MODE   │       │
              │ INFORMATION, MOTION VECTOR, AND  │       │
              │  REFERENCE IMAGE SPECIFICATION   │       │
              │    INFORMATION TO REVERSIBLE     │       │
              │           CODING UNIT            │       │
              └─────────────────────────────────┘       │
                          │                             ▼
                          │         ┌──────────────────────────┐ S37
                          │         │  SUPPLY INTRA-PREDICTION  │
                          │         │    MODE INFORMATION TO    │
                          │         │  REVERSIBLE CODING UNIT   │
                          │         └──────────────────────────┘
                          │                   │
                          ▼◄──────────────────┘
              ┌─────────────────────────────────┐ S38
              │ SUBTRACT PREDICTION IMAGE FROM IMAGE │
              └─────────────────────────────────┘
                                │
                                ▼
              ┌─────────────────────────────────┐ S36
              │     ORTHOGONALLY TRANSFORM       │
              │       RESIDUAL INFORMATION       │
              └─────────────────────────────────┘
                                │
                                ▼
              ┌─────────────────────────────────┐ S40
              │       QUANTIZE COEFFICIENT       │
              └─────────────────────────────────┘
                                │
                                ▼
                              ( 1 )
```

# FIG. 34

① 

INVERSELY QUANTIZE QUANTIZED COEFFICIENT — S41

PERFORM INVERSE ORTHOGONAL TRANSFORM WITH RESPECT TO COEFFICIENT — S42

ADD RESIDUAL INFORMATION AND PREDICTION IMAGE — S43

PERFORM DEBLOCKING FILTER PROCESSING — S44

SHARED ADAPTIVE OFFSET FILTER PROCESSING — S45

PERFORM ADAPTIVE LOOP FILTER PROCESSING — S46

ACCUMULATE IMAGE — S47

PERFORM REVERSIBLE CODING OF CODED INFORMATION — S48

PERFORM REVERSIBLE CODING OF QUANTIZED COEFFICIENT — S49

ACCUMULATE CODED DATA — S50

CONTROL RATE OF QUANTIZATION OPERATION — S51

OUTPUT CODED DATA — S52

RETURN

*FIG. 35*

```
            ( SHARED ADAPTIVE OFFSET FILTER PROCESSING )
                              │
                    ┌─────────────────────┐
                    │ STORE SEQUENCE FLAG │ S71
                    └─────────────────────┘
                              │
                    ┌─────────────────────┐
                    │   STORE SLICE FLAG  │ S72
                    └─────────────────────┘
                              │
                    ┌─────────────────────┐
                    │ STORE LEFT MERGE FLAG AND │ S73
                    │      UP MERGE FLAG   │
                    └─────────────────────┘
                              │
                    ┌─────────────────────┐
                    │ STORE TYPE INFORMATION │ S74
                    └─────────────────────┘
                              │
                    ┌─────────────────────┐
                    │     STORE OFFSET    │ S75
                    └─────────────────────┘
                              │
                         ╱IS EACH╲  S76
                    ╱ OF SEQUENCE FLAG AND SLICE ╲ ── NO ──┐
                    ╲        FLAG 1?        ╱              │
                         ╲       ╱                         │
                          │ YES                            │
                    ┌─────────────────────────┐            │
                    │ GENERATE CORRESPONDENCE FLAG │ S77   │
                    └─────────────────────────┘            │
                              │                            │
                          ╱ S78 ╲                          │
                    ╱ IS CORRESPONDENCE FLAG 1? ╲ ── NO ──┐│
                          ╲       ╱                       ││
                          │ YES                           ││
                    ┌─────────────────────┐               ││
                    │ READ LEFT MERGE FLAG AND │ S79       ││
                    │     UP MERGE FLAG   │               ││
                    └─────────────────────┘               ││
                              │                           ││
                         ╱IS LEFT╲ S80                     ││
                    ╱ MERGE FLAG OR UP MERGE ╲ ── YES ──┐  ││
                    ╲       FLAG 1?      ╱              │  ││
                          ╲     ╱                       │  ││
                           │ NO                    ╱IS LEFT╲ S86
                           │              ╱ MERGE FLAG 1? ╲ ── NO ──┐
                    ┌──────────────┐ S81          ╲     ╱           │
                    │ READ TYPE INFORMATION │      │ YES   S87      │
                    └──────────────┘        ┌────────────────┐      │
                           │                │ READ OFFSET AND TYPE │ │
                    ┌──────────────┐ S82     │ INFORMATION OF LCU  │ │
                    │ CALCULATE OFFSET │     │ NEIGHBORING ON LEFT SIDE │
                    └──────────────┘        └────────────────┘      │
                           │                                        │
                    ┌──────────────┐ S83               ┌────────────────┐ S88
                    │ PERFORM ADAPTIVE OFFSET FILTER │  │ READ OFFSET AND TYPE │
                    │ PROCESSING BY USING OFFSET │     │ INFORMATION OF LCU  │
                    └──────────────┘                   │ NEIGHBORING ON RIGHT SIDE │
                           │                           └────────────────┘
                    ┌──────────────┐ S84                        │
                    │ READ OFFSET OF BASE IMAGE │    ┌──────────┐ S89    ┌────────────┐ S90
                    └──────────────┘             │ PERFORM ADAPTIVE │   │ DETERMINE TYPE │
                           │                     │ OFFSET FILTER │     │ INFORMATION AND OFFSET │
                    ┌──────────────┐ S85          │ PROCESSING BY │    └────────────┘
                    │ CALCULATE DIFFERENCE OF OFFSET │ │ USING OFFSET │        │
                    └──────────────┘             └──────────┘      ┌────────────┐ S91
                           │                          │            │ PERFORM ADAPTIVE OFFSET │
                           │                          │            │ FILTER PROCESSING BY │
                           │                          │            │ USING OFFSET │
                           │                          │            └────────────┘
                           │                          │                    │
                           │                          │            ┌────────────┐ S92
                           │                          │            │ SUPPLY TYPE │
                           │                          │            │ INFORMATION AND OFFSET │
                           │                          │            └────────────┘
                           │                          │                    │
                      ( RETURN )
```

*FIG. 36*

91

RECEPTION UNIT

92

SEPARATION UNIT

93

BASE DECODING UNIT

ENHANCEMENT DECODING UNIT

94

90

*FIG. 37*

111

EXTRACTION UNIT

112

DECODING UNIT

94

FIG. 38

EP 2 903 281 A1

## FIG. 39

EP 2 903 281 A1

# FIG. 40

```
( START HIERARCHICAL DECODING PROCESSING )
                    │
                    ▼
┌──────────────────────────────────────────┐ S100
│ RECEIVE CODED STREAM OF WHOLE HIERARCHY   │
└──────────────────────────────────────────┘
                    │
                    ▼
┌──────────────────────────────────────────┐ S101
│ EXTRACT VPS FROM CODED STREAM OF          │
│ WHOLE HIERARCHY                           │
└──────────────────────────────────────────┘
                    │
                    ▼
┌──────────────────────────────────────────┐ S102
│ RECOGNIZE THAT THERE IS REFERENCE LAYER   │
└──────────────────────────────────────────┘
                    │
                    ▼
┌──────────────────────────────────────────┐ S103
│ INSTRUCT TO SUPPLY CONTROL                │
│ INFORMATION AND OFFSET                    │
└──────────────────────────────────────────┘
                    │
                    ▼
┌──────────────────────────────────────────┐ S104
│ SEPARATE BASE STREAM AND                  │
│ ENHANCEMENT STREAM                        │
└──────────────────────────────────────────┘
                    │
                    ▼
┌──────────────────────────────────────────┐ S105
│ DECODE BASE STREAM                        │
└──────────────────────────────────────────┘
                    │
                    ▼
┌──────────────────────────────────────────┐ S106
│ ENHANCEMENT IMAGE GENERATION PROCESSING   │
└──────────────────────────────────────────┘
                    │
                    ▼
               (  END  )
```

# FIG. 41

```
┌──────────────────────────────┐
│   START ENHANCEMENT IMAGE    │
│    GENERATION PROCESSING     │
└──────────────────────────────┘
                │
                ▼
┌──────────────────────────────┐  S111
│   EXTRACT SPS, PPS, AND CODED │
│  DATA FROM ENHANCEMENT STREAM │
└──────────────────────────────┘
                │
                ▼
┌──────────────────────────────┐  S112
│     DECODING PROCESSING       │
└──────────────────────────────┘
                │
                ▼
          ┌──────────┐
          │   END    │
          └──────────┘
```

## FIG. 42

```
( START DECODING PROCESSING )
            │
            ▼
   ACCUMULATE CODED DATA                              S131
            │
            ▼
   REVERSIBLY DECODE CODED DATA                       S132
            │
            ▼
   INVERSELY QUANTIZE QUANTIZED COEFFICIENT           S133
            │
            ▼
        ╱ IS INTER-PREDICTION ╲    S134
       ╱  MODE INFORMATION     ╲──── NO ────┐
       ╲     SUPPLIED?         ╱            │
        ╲                     ╱             ▼
            │ YES                    PERFORM              S136
            ▼                        INTRA-PREDICTION
   PERFORM MOTION          S135      PROCESSING
   COMPENSATION PROCESSING            │
            │◄─────────────────────────┘
            ▼
   PERFORM INVERSE ORTHOGONAL TRANSFORM               S137
   WITH RESPECT TO COEFFICIENT
            │
            ▼
   ADD RESIDUAL INFORMATION AND                       S138
   PREDICTION IMAGE
            │
            ▼
   PERFORM DEBLOCKING FILTER PROCESSING               S139
            │
            ▼
   SHARED ADAPTIVE OFFSET FILTER PROCESSING           S140
            │
            ▼
   PERFORM ADAPTIVE LOOP FILTER PROCESSING            S141
            │
            ▼
   ACCUMULATE IMAGE                                   S142
            │
            ▼
   PERFORM SORTING                                    S143
            │
            ▼
   PERFORM D/A CONVERSION                             S144
            │
            ▼
        ( RETURN )
```

# FIG. 43

```
        ( SHARED ADAPTIVE OFFSET FILTER PROCESSING )
                          │
              ┌───────────────────────┐  S161
              │   STORE SEQUENCE FLAG  │
              └───────────────────────┘
                          │
              ┌───────────────────────┐  S162
              │    STORE SLICE FLAG    │
              └───────────────────────┘
                          │
              ┌───────────────────────┐  S163
              │ STORE LEFT MERGE FLAG AND │
              │      UP MERGE FLAG     │
              └───────────────────────┘
                          │
              ┌───────────────────────┐  S164
              │  STORE TYPE INFORMATION │
              └───────────────────────┘
                          │
              ┌───────────────────────┐  S165
              │      STORE OFFSET      │
              └───────────────────────┘
                          │
                     S166 ◇ IS EACH
             ◇ OF SEQUENCE FLAG AND SLICE ◇──── NO ──────────────┐
                      FLAG 1?                                     │
                          │ YES                                   │
                     S167 ◇ IS CORRESPONDENCE FLAG 1? ─── NO ─────┤
                          │ YES                                   │
              ┌───────────────────────┐  S168                     │
              │ READ LEFT MERGE FLAG AND │                        │
              │      UP MERGE FLAG     │                          │
              └───────────────────────┘                          │
                          │                                       │
                     S169 ◇ IS LEFT                               │
             ◇ MERGE FLAG OR UP MERGE ◇──── YES ──┐    ┌──────────────────────┐ S175
                      FLAG 1?                      │    │ ACQUIRE OFFSET AND   │
                          │ NO              S172 ◇ │    │  TYPE INFORMATION    │
           ┌───────────────────────┐ S170   IS LEFT    └──────────────────────┘
           │ ACQUIRE TYPE INFORMATION│  ◇ MERGE FLAG 1? ◇── NO ──┐
           │ AND GENERATION INFORMATION│       │ YES             │
           └───────────────────────┘       S173│                 │
                          │          ┌──────────────────────┐    │
           ┌───────────────────────┐ │ READ OFFSET AND TYPE │    │
           │    ADD OFFSET AND     │ S171│ INFORMATION OF LCU │   │
           │ GENERATION INFORMATION│ │NEIGHBORING ON LEFT SIDE│  │
           └───────────────────────┘ └──────────────────────┘    │
                          │                           ┌──────────────────────┐ S174
                          │                           │ READ OFFSET AND TYPE │
                          │                           │  INFORMATION OF LCU  │
                          │                           │NEIGHBORING ON RIGHT SIDE│
                          │                           └──────────────────────┘
                          │
              ┌───────────────────────┐  S176
              │ PERFORM ADAPTIVE OFFSET FILTER │
              │ PROCESSING BY USING OFFSET │
              └───────────────────────┘
                          │
                     ( RETURN )
```

# FIG. 44

base view
view_id=0

non-base view
view_id=1

non-base view
view_id=2

I  B2  B1  B2  B0  B2  B1  B2  P

FIG. 45

# FIG. 46

## FIG. 47

# FIG. 48

FIG. 49

EP 2 903 281 A1

FIG. 50

EP 2 903 281 A1

# FIG. 51

EP 2 903 281 A1

EP 2 903 281 A1

# FIG. 52

# FIG. 53

1211

1201 IMAGING APPARATUS

1202 SCALABLE CODED DATA STORAGE APPARATUS

BL+EL 1221

BL+EL — 1221 (FOCUSED TIME)

BL — 1222 (NORMAL TIME)

1200

## INTERNATIONAL SEARCH REPORT

International application No.

PCT/JP2013/075445

### A. CLASSIFICATION OF SUBJECT MATTER
*H04N19/50(2014.01)i*

According to International Patent Classification (IPC) or to both national classification and IPC

### B. FIELDS SEARCHED

Minimum documentation searched (classification system followed by classification symbols)
H04N7/26-7/68

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Elena Alshina(et al.), "Non-CE1: On SAO Type sharing between color component", Joint Collaborative Team on Video Coding (JCT-VC) of ITU-T SG16 WP3 and ISO/IEC JTC1/SC29/WG11 JCTVC-0590, ITU-T, 2012.05.02, p.1-10 | 1-16 |
| A | JP 2009-512347 A (Thomson Licensing), 19 March 2009 (19.03.2009), paragraphs [0002] to [0140]; fig. 3 to 12 & WO 2007/047271 A2       & EP 1949702 A2 & US 2010/0158110 A1    & KR 10-2008-0058391 A & CN 101288311 A | 1-16 |
| P,A | WO 2013/154026 A1 (Sony Corp.), 17 October 2013 (17.10.2013), paragraphs [0312] to [0337]; fig. 23 to 28 (Family: none) | 1-16 |

☐ Further documents are listed in the continuation of Box C.          ☐ See patent family annex.

| | |
|---|---|
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    03 December, 2013 (03.12.13) | Date of mailing of the international search report<br>    17 December, 2013 (17.12.13) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS ; WOO-JIN HAN ; JENS-RAINER OHM ; GARY J. SULLIVAN ; THOMAS WIEGAND.** High efficiency video coding (HEVC) text specification draft 8. *JCTVC-I1003_d7,* 2012, 7.11-7.20

- **CHIH-MING FU ; CHING-YEH CHEN ; YU-WEN HUANG ; SHAWMIN LEI.** CE8 Subtest 3: Picture Quality Adaptive Offset. *JCTVC-D122,* 2011, 1.20-1.28